# EUROPEAN PATENT APPLICATION

(11) **EP 4 629 185 A1**
(43) Date of publication of application: **08.10.2025**
(21) Application number: 23913869.6
(22) Date of filing: 27.11.2023
(51) Int. Cl.: G06V 10/24, G06V 10/25, G06V 20/64, G06V 10/44, G06T 15/20, G06N 3/045, G06V 30/10

(54) **ELECTRONIC DEVICE FOR PROCESSING IMAGE AND METHOD FOR OPERATING SAME**

(30) Priority: 03.01.2023 KR 20230000905; 04.04.2023 KR 20230044355
(71) Applicant: Samsung Electronics Co., Ltd., Suwon-si, Gyeonggi-do 16677 (KR)
(72) Inventor: CHOI, Isak, Suwon-si, Gyeonggi-do 16677 (KR); HWANG, Jinyoung, Suwon-si, Gyeonggi-do 16677 (KR)
(74) Representative: Gulde & Partner
(86) International application number: PCT/KR2023/019257
(87) International publication number: WO 2024/147487

(57) **Abstract**

A method, performed by an electronic device, of processing an image is provided. The method includes obtaining an image of an object by using a camera, detecting a region of interest (ROI) on a surface of the object, detecting object key points representing an outline of the object, inferring, based on the object key points, values of three-dimensional (3D) parameters representing a 3D shape of the object, wherein the 3D parameters include features representing 3D geometric information of the object, obtaining a distortion-removed image in which the ROI is rectified to a plane by performing a perspective transform on the image based on the 3D parameters, and extracting information in the ROI from the distortion-removed image.

## Description

### Technical Field

An electronic device and operation method thereof for applying an algorithm for removing distortion of a region of interest (ROI) in an image are provided.

### Background Art

In captured digital images of a three-dimensional (3D) space, there are physical distortions due to curved surfaces of 3D objects, distortions due to an image capturing perspective, etc. To remove the distortions due to these 3D characteristics, various technologies/techniques using 3D information are being developed. In a method of removing image distortion by using 3D information, algorithms for inferring 3D information of an object by using an algorithm and removing distortion in an image, without using hardware such as sensors for obtaining 3D information, have been recently used.

### Disclosure of Invention

### Solution to Problem

According to an aspect of the present disclosure, a method, performed by an electronic device, of processing an image may be provided. The method may include obtaining an image of an object by using a camera. The method may include detecting a region of interest (ROI) on a surface of the object. The method may include detecting object key points representing an outline of the object. The method may include inferring, based on the object key points, values of three-dimensional (3D) parameters representing a 3D shape of the object, wherein the 3D parameters include features representing 3D geometric information of the object. The method may include obtaining a distortion-removed image in which the ROI is rectified to a plane by performing a perspective transform on the image based on the 3D parameters. The method may include extracting information in the ROI from the distortion-removed image.

According to an aspect of the present disclosure, an electronic device for processing an image may be provided. The electronic device may include one or more cameras, a memory storing one or more instructions, and at least one processor configured to execute the one or more instructions stored in the memory. The at least one processor may be configured to execute the one or more instructions to obtain an image of an object by using the one or more cameras. The at least one processor may be configured to execute the one or more instructions to detect an ROI on a surface of the object. The at least one processor may be configured to execute the one or more instructions to detect object key points representing an outline of the object. The at least one processor may be configured to execute the one or more instructions to infer, based on the object key points, values of 3D parameters representing a 3D shape of the object, wherein the 3D parameters include features representing 3D geometric information of the object. The at least one processor may be configured to execute the one or more instructions to obtain a distortion-removed image in which the ROI is rectified to a plane by performing a perspective transform on the image based on the 3D parameters. The at least one processor may be configured to execute the one or more instructions to extract information in the ROI from the distortion-removed image.

According to an aspect of the present disclosure, there may be provided a computer-readable recording medium having recorded thereon a program for executing any one of the methods, performed by an electronic device, of removing distortion from an image by processing the image, as described above and below.

### Brief Description of Drawings

FIG. 1 is a diagram illustrating an example of an electronic device removing distortion from an image, according to an embodiment of the present disclosure.
FIG. 2 is a schematic diagram illustrating a region of interest (ROI) of an object in an image processed by an electronic device and a distortion removal method, according to an embodiment of the present disclosure.
FIG. 3 is a flowchart illustrating a method, performed by an electronic device, of processing an image, according to an embodiment of the present disclosure.
FIG. 4A is a diagram generally illustrating operations performed by an electronic device for processing an image, according to an embodiment of the present disclosure.
FIG. 4B is a diagram schematically illustrating operations performed by an electronic device for processing an image, according to an embodiment of the present disclosure.
FIG. 5A is a diagram illustrating an operation in which an electronic device detects object key points, according to an embodiment of the present disclosure.
FIG. 5B is a diagram illustrating training data for an object detection model, according to an embodiment of the present disclosure.
FIG. 5C is a diagram further illustrating training data for an object detection model, according to an embodiment of the present disclosure.
FIG. 6A is a diagram illustrating an operation in which an electronic device identifies an ROI on a surface of an object, according to an embodiment of the present disclosure.
FIG. 6B is a diagram illustrating training data for an ROI detection model, according to an embodiment of the present disclosure.
FIG. 6C is a diagram illustrating a result of detection of an ROI by an electronic device, according to an embodiment of the present disclosure.
FIG. 6D is a diagram illustrating an operation in which an electronic device processes an image of an ROI, according to an embodiment of the present disclosure.
FIG. 7A is a diagram illustrating three-dimensional (3D) parameters used by an electronic device to infer a 3D shape of an object, according to an embodiment of the present disclosure.
FIG. 7B is a diagram illustrating an operation in which an electronic device infers 3D information of an object based on a shape of the object, according to an embodiment of the present disclosure.
FIG. 8A is a diagram illustrating an object shape-based 3D fitting algorithm according to an embodiment of the present disclosure.
FIG. 8B is a diagram illustrating an object shape-based 3D fitting algorithm according to an embodiment of the present disclosure.
FIG. 9A is a diagram illustrating an object shape-based 3D fitting model according to an embodiment of the present disclosure.
FIG. 9B is a diagram illustrating a method of generating training data for an object shape-based 3D fitting model, according to an embodiment of the present disclosure.
FIG. 9C is a diagram illustrating an operation in which an electronic device trains an object shape-based 3D fitting model, according to an embodiment of the present disclosure.
FIG. 10A is a diagram illustrating a process by which an electronic device processes an image, according to an embodiment of the present disclosure.
FIG. 10B is a diagram illustrating an example in which an electronic device extracts information from an image from which distortion has been removed ( hereinafter referred to as a distortion-removed image), according to an embodiment of the present disclosure.
FIG. 11A is a diagram illustrating 3D parameters used by an electronic device to infer a 3D shape of an ROI, according to an embodiment of the present disclosure.
FIG. 11B is a diagram illustrating an operation in which an electronic device infers 3D information of an object based on a shape of an ROI, according to an embodiment of the present disclosure.
FIG. 11C is a diagram illustrating an ROI shape-based 3D fitting algorithm according to an embodiment of the present disclosure.
FIG. 11D is a diagram illustrating an operation in which an electronic device trains an ROI shape-based 3D fitting model, according to an embodiment of the present disclosure.
FIG. 12 is a diagram illustrating an object feature extraction model according to an embodiment of the present disclosure.
FIG. 13A is a flowchart illustrating an operation in which an electronic device determines data to be used to infer 3D parameters, according to an embodiment of the present disclosure.
FIG. 13B is a diagram illustrating an operation in which an electronic device processes an image based on a shape of an ROI, according to an embodiment of the present disclosure.
FIG. 13C is a diagram schematically illustrating an operation of a confidence checker, according to an embodiment of the present disclosure.
FIG. 14A is a diagram illustrating a specific operation of a confidence checker, according to an embodiment of the present disclosure.
FIG. 14B is a diagram illustrating a specific operation of a confidence checker, according to an embodiment of the present disclosure.
FIG. 14C is a diagram illustrating a specific operation of a confidence checker, according to an embodiment of the present disclosure.
FIG. 14D is a diagram illustrating a specific operation of a confidence checker, according to an embodiment of the present disclosure.
FIG. 14E is a diagram illustrating a specific operation of a confidence checker, according to an embodiment of the present disclosure.
FIG. 15A is a diagram illustrating an operation in which an electronic device selects a final distortion-removed image by using a confidence checker, according to an embodiment of the present disclosure.
FIG. 15B is a diagram illustrating an operation in which an electronic device selects a final distortion-removed image by using a confidence checker, according to an embodiment of the present disclosure.
FIG. 16 is a diagram illustrating an operation in which an electronic device identifies a 3D shape of an object, according to an embodiment of the present disclosure.
FIG. 17A is a diagram illustrating an operation in which an electronic device classifies a 3D shape of an object, according to an embodiment of the present disclosure.
FIG. 17B is a diagram illustrating object key points determined according to a 3D shape type of an object and 3D parameters corresponding to the 3D shape type of the object.
FIG. 18A is a diagram illustrating an operation in which an electronic device trains an object 3D shape classification model, according to an embodiment of the present disclosure.
FIG. 18B is a diagram illustrating an operation in which an electronic device trains an object 3D shape classification model, according to an embodiment of the present disclosure.
FIG. 18C is a diagram illustrating an embodiment in which an electronic device identifies a 3D shape of an object, according to an embodiment of the present disclosure.
FIG. 18D is a diagram illustrating an embodiment in which an electronic device identifies a 3D shape of an object, according to an embodiment of the present disclosure.
FIG. 19 is a diagram illustrating multiple cameras that may be included in an electronic device, according to an embodiment of the present disclosure.
FIG. 20A is a flowchart illustrating an operation in which an electronic device uses multiple cameras, according to an embodiment of the present disclosure.
FIG. 20B is a diagram for supplementary illustration of FIG. 20A .
FIG. 21A is a flowchart illustrating an operation in which an electronic device uses multiple cameras, according to an embodiment of the present disclosure.
FIG. 21B is a diagram for supplementary illustration of FIG. 21A.
FIG. 22A is a flowchart illustrating an operation in which an electronic device uses multiple cameras, according to an embodiment of the present disclosure.
FIG. 22B is a diagram for supplementary illustration of FIG. 22A.
FIG. 22C is a diagram for supplementary illustration of FIG. 22A.
FIG. 23A is a diagram illustrating an operation in which an electronic device processes an image and provides extracted information, according to an embodiment of the present disclosure.
FIG. 23B is a diagram illustrating an operation of another form of electronic device, according to an embodiment of the present disclosure.
FIG. 24 is a diagram illustrating an operation in which an electronic device utilizes a distortion-removed image, according to an embodiment of the present disclosure.
FIG. 25 is a diagram illustrating an example of a system related to operations performed by an electronic device for processing an image, according to an embodiment of the present disclosure.
FIG. 26 is a diagram illustrating an example of a system related to operations performed by an electronic device for processing an image by using a server according to an embodiment of the present disclosure.
FIG. 27 is a block diagram of a configuration of an electronic device, according to an embodiment of the present disclosure.
FIG. 28 is a block diagram of a configuration of a server, according to an embodiment of the present disclosure.

### Mode for the Invention

Throughout the present disclosure, the expression "at least one of a, b or c" indicates only a, only b, only c, both a and b, both a and c, both b and c, all of a, b, and c, or variations thereof.

The terms used in the present disclosure are selected from general terms currently widely used in the art by taking into account functions described herein, but may vary according to an intention of a skilled person in the art, precedent cases, advent of new technologies, etc. Furthermore, specific terms may be arbitrarily selected by the applicant, and in this case, the meaning of the selected terms will be described in detail in the relevant description. Thus, the terms used herein should be defined not by simple appellations thereof but based on the meaning of the terms together with the overall description of the present disclosure.

Singular expressions used herein are intended to include plural expressions as well unless the context clearly indicates otherwise. All the terms used herein, which include technical or scientific terms, may have the same meaning that is generally understood by one of ordinary skill in the art described herein. Furthermore, although the terms including an ordinal number such as "first", "second", etc. may be used herein to describe various elements or components, these elements or components should not be limited by the terms. The terms are only used to distinguish one element or component from another element or component.

Throughout the specification, when a part "includes" or "comprises" an element, unless there is a particular description contrary thereto, it is understood that the part may further include other elements, not excluding the other elements. In addition, terms such as "unit", "module", etc., described herein refer to a unit for processing at least one function or operation and may be implemented as hardware or software, or a combination of hardware and software.

In the present disclosure, three-dimensional (3D) parameters consist of features that represent geometric properties related to a 3D shape of an object. The 3D parameters may include, for example, height and radius information (or width and length information) of the object, translation and rotation information for 3D geometric transformations of the object in a 3D space, focal length information of a camera capturing an image of the object, etc., but are not limited thereto. The 3D parameters are variables, and the 3D shape may also change as a value of any one of the 3D parameters changes. Information that is capable of representing the 3D shape of the object, which is determined according to these 3D parameters, is referred to herein as "3D information".

As used herein, 3D information of an object refers to information (e.g., a width value, a length value, a height value, a radius value, etc.) that can represent a 3D shape of the object included in an image. The 3D information of the object does not necessarily consist of 3D parameters representing absolute values of width, length, height, radius, etc. of the object, and may consist of 3D parameters expressed as relative values representing a 3D aspect ratio of the object. When the 3D information of the object is available, the electronic device of the present disclosure may render an object having a 3D shape with the same aspect ratio as the object.

Embodiments of the present disclosure will be described more fully hereinafter with reference to the accompanying drawings so that they may be easily implemented by one of ordinary skill in the art. However, the present disclosure may be implemented in many different forms and should not be construed as being limited to an embodiment set forth herein. Furthermore, parts not related to the descriptions are omitted to clearly explain the present disclosure in the drawings, and like reference numerals denote like elements throughout. In addition, reference numerals used in each drawing are only intended to describe each drawing, and different reference numerals used in different drawings are not intended to indicate different elements. Hereinafter, the present disclosure is described in detail with reference to the accompanying drawings.

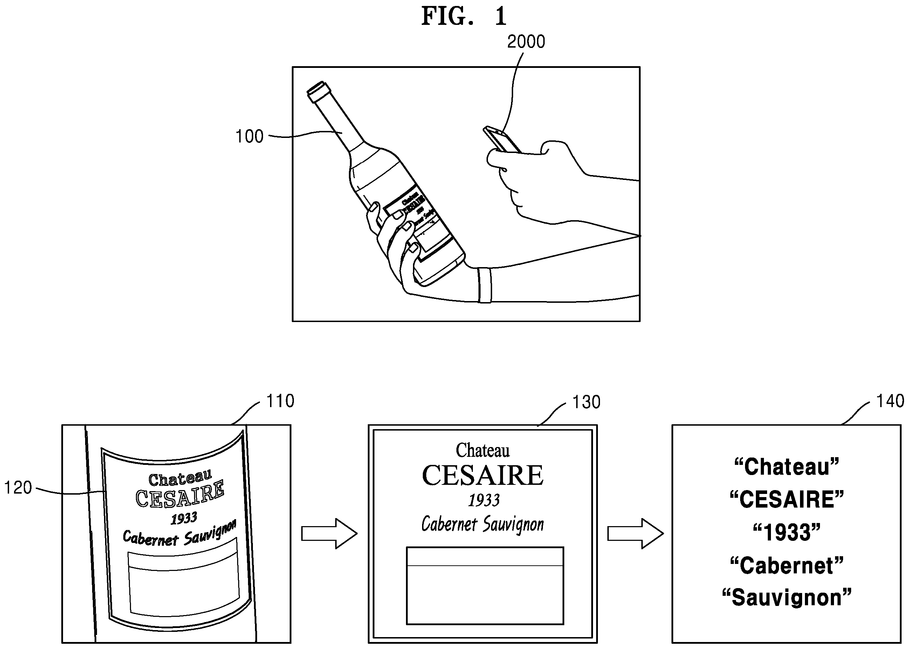

FIG. 1 is a diagram illustrating an example of an electronic device removing distortion from an image, according to an embodiment of the present disclosure.

Referring to FIG. 1, an electronic device 3000 according to an embodiment may be a device including a camera and/or a display. The electronic device 3000 may be a device that captures images (still images and/or video) through the camera and outputs the images on the display. Examples of the electronic device 3000 may include, but are not limited to, a smart TV, a smartphone, a tablet personal computer (PC), a laptop PC, a smart refrigerator, a smart wine refrigerator, etc. The electronic device 3000 may be implemented as any one of various types and forms of electronic devices including cameras and/or displays. Also, the electronic device 3000 may include a speaker for outputting audio.

In an embodiment, a user of the electronic device 3000 may capture an image of an object 100 by using a camera of the electronic device 3000. The electronic device 3000 may obtain an image 110 including at least a portion of the object 100.

In the present disclosure, when there is information to be recognized on a surface of the object 100 in an image, this is referred to as an "ROI 120." For example, a region of a label attached to the surface of the object 100 may be an ROI. In an embodiment, the electronic device 3000 may extract information 140 related to the object 100 from the ROI 120 of the object 100.

In the present disclosure, removing distortion from a 'label' of a product as an example of the ROI 120 is described. Here, the label is made of paper, sticker, cloth, etc. and attached to a product, and a trademark or product name of the product may be printed on the label. However, the ROI 120 is not necessarily limited to the label. For example, an ROI in an image may not be the label of the product, but rather a region indicating information related to a product (an object), such as ingredients, instructions for use, and amount of use, etc. of the product.

In the example described in the present disclosure, the electronic device 3000 identifies a region corresponding to at least one label included in the object 100 as being the ROI 120, and obtains information related to the object 100 from the region corresponding to the at least one label. When the object 100 has a 3D shape, a shape of the label of the object 100 may be distorted in the two-dimensional (2D) image 110. Accordingly, the accuracy of information (e.g., logo, icon, text, etc.) obtained by the electronic device 200 from the label of the object 100 may be degraded. According to an embodiment, to extract accurate information from the ROI 120, the electronic device 3000 may obtain a distortion-removed image 130 by using the image 110 of the object 100. In this case, the distortion-removed image 130 refers to an image in which distortion of the ROI 120 of the object 100 is reduced and/or removed. For example, the distortion-removed image 130 may be an image that is rectified to be flat by reducing or removing curvature distortion of a label.

According to an embodiment, to perform an image processing operation for removing distortion of the ROI 120, the electronic device 3000 may identify the ROI 120 and object key points from the image 110 including at least the portion of the object 100, and estimate 3D information of the object 100. In addition, the electronic device 3000 may generate the distortion-removed image 130 based on the 3D information of the object 100.

According to an embodiment, the electronic device 3000 may extract object information 140 from the distortion-removed image 130, and provide the user with the distortion-removed image 130 and/or the object information 140 extracted from the distortion-removed image 130.

For the purpose of understanding the present disclosure, in some drawings, the operation of the electronic device 3000 will be described schematically, and in other drawings, the operation of the electronic device 3000 will be described in more detail.

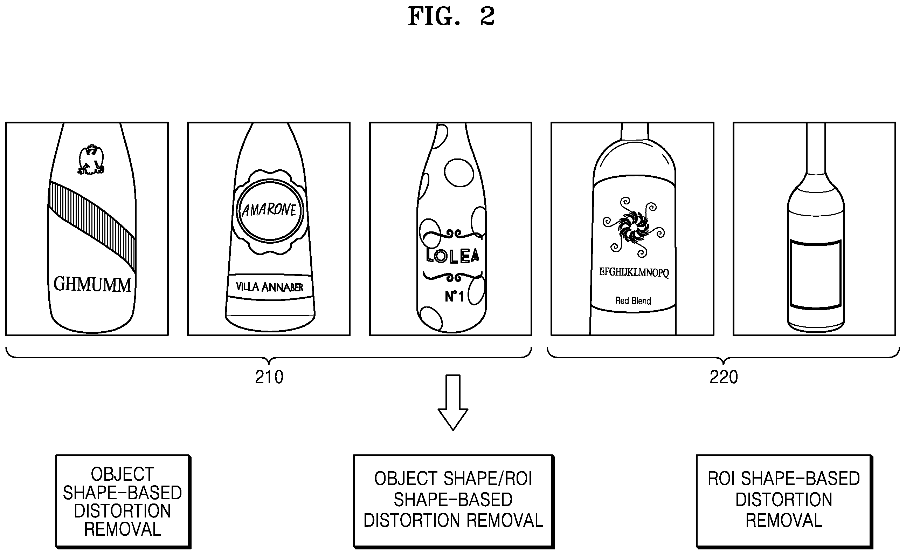

FIG. 2 is a schematic diagram illustrating an ROI of an object in an image processed by an electronic device and a distortion removal method, according to an embodiment of the present disclosure.

Referring to FIG. 2, ROIs may be classified according to a shape of the ROIs. For example, the ROIs may be distinguished as an ROI 210 having an unstructured design and a ROI 220 having a structured design.

An unstructured design refers to a design where the shape of an ROI cannot be specified. In an example in which the ROI is a wine label, an irregularly shaped sticker label, a multi-sticker label, a transparent sticker label, a label printed on a surface of a wine bottle, a label covering the entire wine bottle, etc. may be classified as the ROI 210 having an unstructured design, but the present disclosure is not limited thereto.

A structured design refers to a design in which a shape of an ROI can be specified, such as a design of a shape that is prestored in the electronic device 3000, or a design of a shape that may be identified using an algorithm and/or an artificial intelligence (AI) model. In an example in which the ROI is a wine label, a square sticker label, a rectangular sticker label, etc. may be classified as the ROI 220 having a structured design, but the present disclosure is not limited thereto.

The electronic device 3000 may use various methods when removing distortion in an ROI of an object.

For the ROI 210 having an unstructured design, it is difficult to specify a shape, a boundary, etc. of the ROI. That is, 3D information (e.g., 3D distortion information) of the ROI is needed to remove 3D distortion of the ROI, but because it is difficult to specify the ROI, it is also difficult to infer 3D information of the ROI. Thus, the electronic device 3000 may obtain the 3D information of the ROI on a surface of the object by inferring object 3D information based on object features. For the ROI 220 having a structured design, the electronic device 3000 may obtain object 3D information based on object features, or because the ROI can be specified, obtain object 3D information based on features of the ROI.

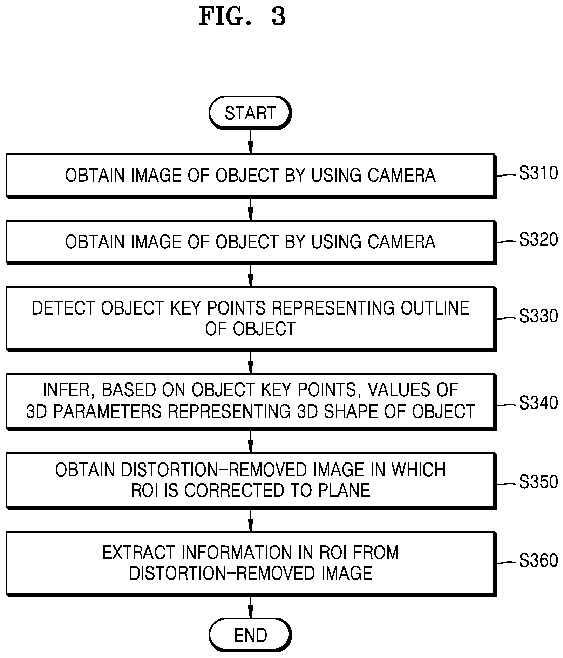

In an embodiment, the electronic device 3000 may use an object shape-based distortion removal method. When the ROI is the ROI 210 having an unstructured design, the shape of the ROI cannot be specified, and thus, it may be appropriate to infer 3D information of an object itself. In the object shape-based distortion removal method, the 3D information of the object may be obtained by inferring a 3D shape of the object based on the object, and 3D distortion may be removed based on the obtained 3D information. The object shape-based distortion removal method is further described with reference to FIGS. 3 to 10B.

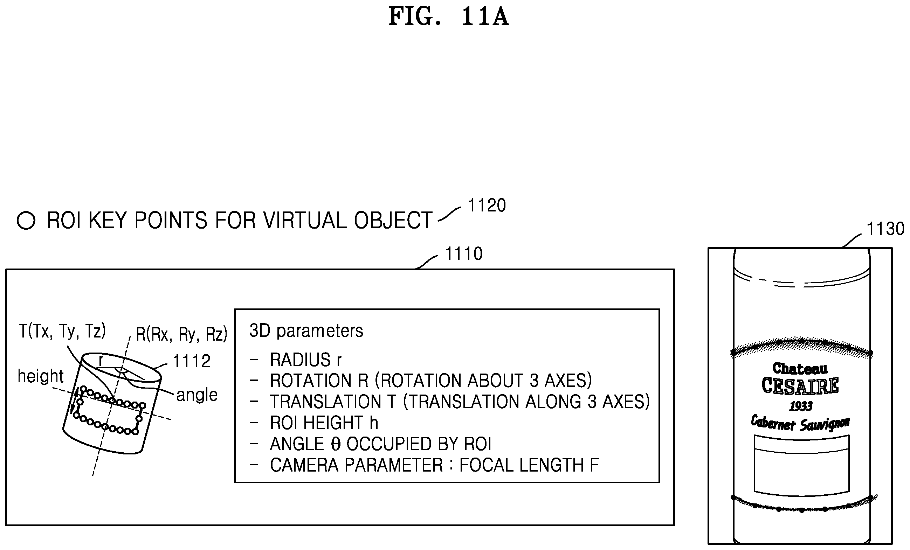

In an embodiment, the electronic device 3000 may use an ROI shape-based distortion removal method. When the ROI is the ROI 220 having a structured design, a shape of the ROI is specified, and thus, it may be appropriate to infer 3D information of an object based on the ROI. In the ROI shape-based distortion removal method, the 3D information of the object may be obtained by inferring a 3D shape of the object based on the ROI, and 3D distortion may be removed based on the obtained 3D information. The ROI shape-based distortion removal method is further described with reference to FIGS. 11A to 11D.

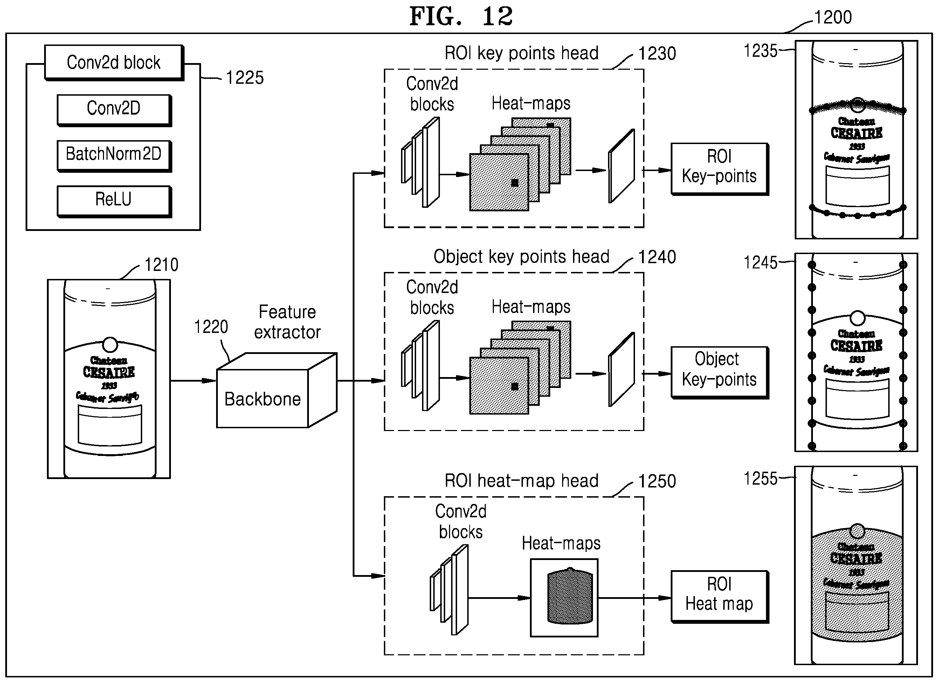

In an embodiment, the electronic device 3000 may use a combination of the ROI shape-based distortion removal method and the object shape-based distortion removal method. The electronic device 3000 may obtain 3D information of an object and remove 3D distortion by integrating the object shape-based distortion removal method with the ROI shape-based distortion removal method. An ROI shape- and object shape-based distortion removal method is further described with reference to FIGS. 12 to 15B.

FIG. 3 is a flowchart illustrating a method, performed by an electronic device, of processing an image, according to an embodiment of the present disclosure.

In operation S310, the electronic device 3000 obtains an image of an object by using a camera.

The electronic device 3000 may activate the camera via manipulation by the user. For example, the user may activate the camera of the electronic device 3000 and capture an image of the object in order to obtain information about the object. The user may activate the camera by pressing a hardware button or touching an application icon on a screen of the electronic device 3000, or the user may activate the camera via a voice command (e.g., turn on the camera).

The electronic device 3000 may activate the camera and capture an image including the object via user manipulation.

In operation S320, the electronic device 3000 detects an ROI on a surface of the object. The ROI may be a region including information related to the object.

In an embodiment, the object may be a 'product' and the ROI may be a 'label' of the product. Accordingly, the ROI may include a trademark or a product name that is information related to the product. In addition, the ROI may include information related to the product, such as ingredients, instructions for use, amount of use, handling precautions, price, volume, capacity, etc. of the product.

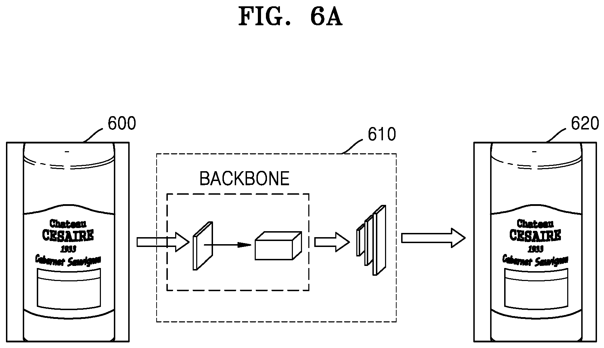

In an embodiment, the electronic device 3000 may detect the ROI of the object by using an ROI detection model that is an Al model. An ROI detection model may be an Al model trained to, when taking an image as an input, output data representing an ROI in the image. The ROI detection model may be implemented using various known deep neural network architectures and algorithms or through modifications to the various known deep neural network architectures and algorithms. In the present disclosure, an example of the object is a 'product' and an example of the ROI is a 'label', so the ROI detection model is referred to as a "label detection model". A specific operation in which the electronic device 3000 detects an ROI is further described with reference to FIGS. 6A to 6D.

In operation S330, the electronic device 3000 detects object key points representing an outline of the object.

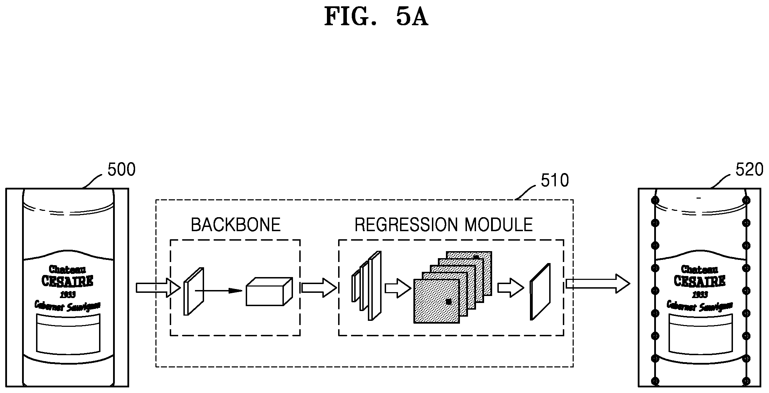

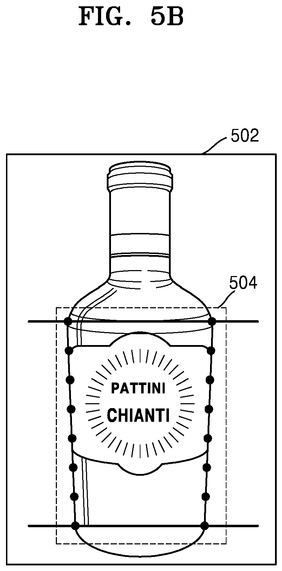

In an embodiment, the electronic device 3000 may detect key points of the object by using an object detection model that is an Al model. An object detection model may be an Al model trained to, when taking an image as an input, output key points that represent an outline of an object in the image. The object detection model may be implemented using various known deep neural network architectures and algorithms or through modifications to the various known deep neural network architectures and algorithms. A specific operation in which the electronic device 3000 detects object key points is further described with reference to FIGS. 5A and 5B.

In operation S340, the electronic device 3000 infers, based on the object key points, values of 3D parameters representing a 3D shape of the object, e.g., values of 3D parameters representing an original shape of the object.

When the electronic device 3000 obtains the image of the object having a 3D shape by using the camera, the 3D object is projected onto a 2D plane. This may cause perspective distortion in which a relative size, position, and shape of the object in a 3D scene appear different within a 2D image. The electronic device 3000 may infer the values of 3D parameters to infer the original 3D shape of the object in the 3D scene.

In an embodiment, the 3D parameters may include various features that may describe the original 3D shape of the object. The features in the 3D parameters may correspond to at least one of, for example, 3D rotation, 3D translation, a dimension, and 3D scaling of the object, and a camera parameter. In addition, the camera parameter is an intrinsic parameter of the camera, and may include, but is not limited to, a focal length, a principal point, an aspect ratio, a skew coefficient, etc.

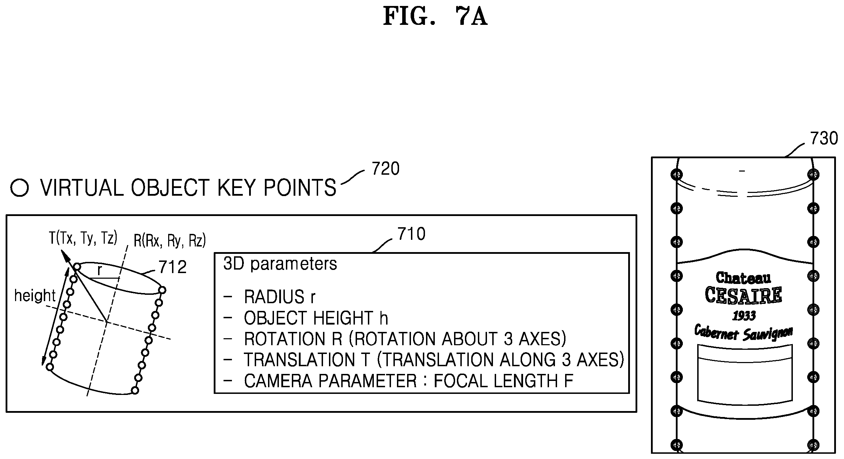

A specific operation in which the electronic device 3000 infers the values of 3D parameters representing the original 3D shape of an object is further described with reference to FIGS. 7A to 9C.

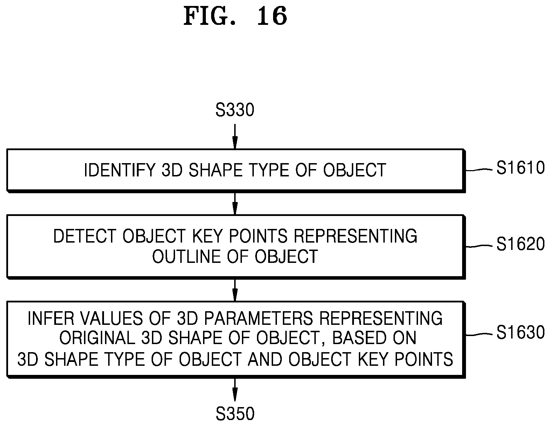

Moreover, when the electronic device 3000 infers the values of the 3D parameters, information about the 3D shape of the object may be used. For example, when a type of the 3D shape of the object is a cylinder type, the 3D parameters may also consist of features representing 3D properties of a cylinder. The electronic device 3000 may identify the 3D shape of the object in order to use information about the 3D shape. An operation in which the electronic device 3000 identifies the 3D shape of the object is further described with reference to FIGS. 16 to 18D.

In operation S350, the electronic device 3000 obtains a distortion-removed image in which the ROI is rectified to a plane by performing a perspective transform on the image based on the 3D parameters.

When the electronic device 3000 infers the values of the 3D parameters, the values of the 3D parameters represent 3D information of the object. Therefore, the electronic device 3000 may remove 3D distortion of the object present in the image.

In an embodiment, the electronic device 3000 may generate 2D mesh data that represents 3D distortion on the surface of the object (e.g., curvature distortion, etc.). The 2D mesh data is a result of projecting points on the surface of the object in 3D space into two dimensions by using the values of the 3D parameters, and may represent surface distortion information of the object. However, the present disclosure is not limited thereto, and the electronic device 3000 may generate various types of data that may be used to remove 3D distortion by using the 3D parameters.

In an embodiment, the electronic device 3000 may perform a perspective transform on the image. For example, based on 2D mesh data including the distortion of the object, the electronic device 3000 may select points in an original image including the distortion and corresponding points in a transformed image from which the distortion is removed. The electronic device 3000 may calculate a homography matrix for performing the perspective transform based on the selected points. The electronic device 3000 may apply the perspective transform by using the homography matrix, and obtain an image from which the distortion is removed. Accordingly, the electronic device 3000 may remove 3D distortion of the ROI of the object. In addition, in the present disclosure, when the electronic device 3000 removes distortion, it means that the electronic device 3000 performs a series of operations to remove the distortion, and does not necessarily imply that it completely removes the distortion. In other words, as a result of removing the distortion, a distortion-free image or a distortion-reduced image may be obtained.

In an embodiment, the electronic device 3000 may crop out only a region corresponding to the ROI from the distortion-removed image.

In operation S360, the electronic device 3000 extracts information within the ROI from the distortion-removed image. The electronic device 3000 may obtain information related to the object by extracting the information within the ROI from the distortion-removed image.

In an embodiment, the electronic device 3000 may identify text within the ROI by using an optical character recognition (OCR) model. The electronic device 3000 infers 3D information of the object in the image and performs a precise perspective transform by using the inferred 3D information of the object, thereby removing distortion in the ROI. Therefore, text within the ROI may be extracted with improved accuracy compared to when applying OCR to the original image with 3D distortion.

In an embodiment, the electronic device 3000 may detect information within the ROI by using an information detection model that is an Al model. An information detection model may be an Al model trained to, when taking an image as an input, output identifiable information within the image. For example, the information detection model may be used to identify a picture, a logo, an icon, etc. within the ROI, but is not limited thereto. The ROI detection model may be implemented using various known deep neural network architectures and algorithms or through modifications to the various known deep neural network architectures and algorithms.

According to an embodiment, the electronic device 3000 may extract information related to the object by using the OCR model and/or the information detection model, and output the extracted information. For example, the information related to the object may be output on the screen of the electronic device 3000 and provided to the user.

In addition, the OCR model and/or the information detection model may be stored in a memory of the electronic device 3000, or may be stored in an external server. Thus, an information detection operation may be performed by the electronic device 3000 or may be performed in the external server.

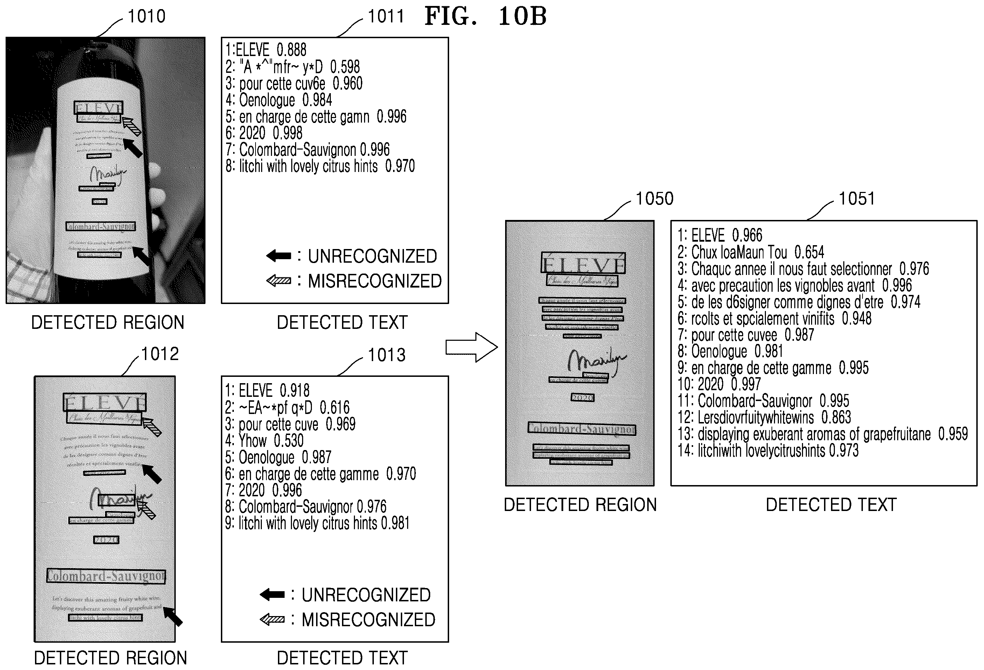

An operation in which the electronic device 3000 obtains information related to an object from a distortion-removed image by using an OCR model and/or an information detection model is further described with reference to FIG. 10B.

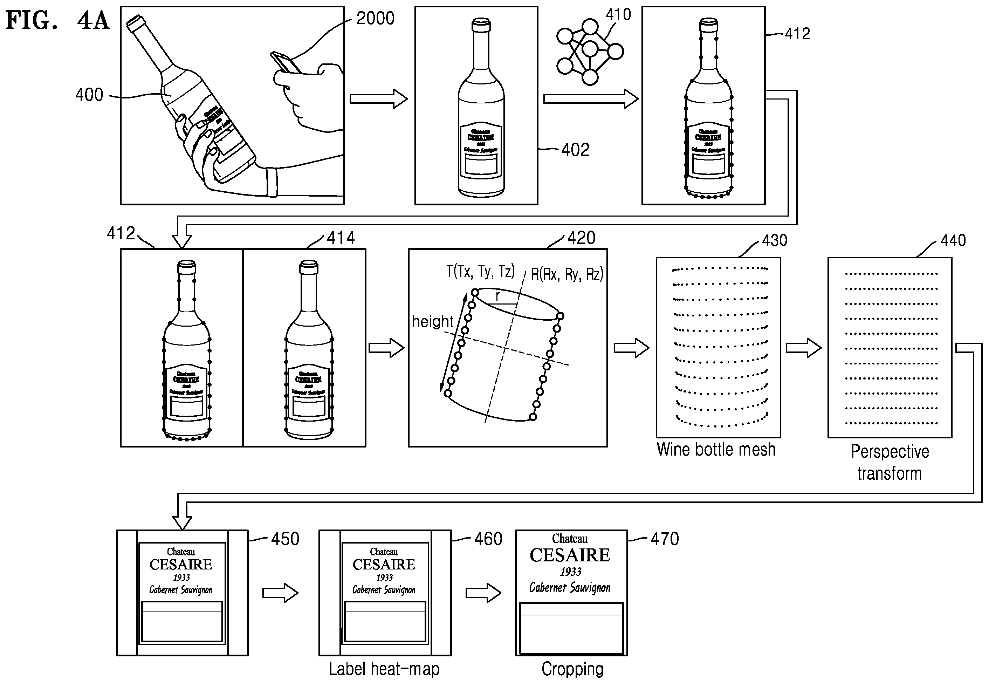

FIG. 4A is a diagram generally illustrating operations performed by an electronic device for processing an image, according to an embodiment of the present disclosure.

In describing FIG. 4A, an example in which an object is a wine bottle is provided. Accordingly, operations below are described assuming that an image of a wine label in the wine bottle is processed. For example, object key points 412 are key points of the wine bottle that are detected, and 3D parameters include features for representing a shape of the wine bottle. However, this is only an example, and in a case where the object is not a wine bottle but another object, setting values (e.g., features of the 3D parameters, etc.) appropriate for the object may be applied.

Referring to FIG. 4A, the electronic device 3000 according to an embodiment may obtain an object image 402. The object image 402 may be obtained by a user of the electronic device 3000 capturing an image of an object 400. Alternatively, the obtained object image 402 may be a captured image of the object 400 that has been previously stored in the electronic device 3000. Alternatively, the object image 402 may be a captured image of the object 400 received from another electronic device (e.g., an external server, an electronic device of another user, etc.).

In an embodiment, the electronic device 3000 may detect the object key points 412 that represent an outline of the object. The electronic device 3000 may detect the object key points 412 from the object image 402 by using an object detection model 410. The object detection model 410 may be an Al model trained to, when taking the image as an input, output the key points 412 that represent the outline of the object in the image.

In an embodiment, the electronic device 3000 may preprocess the object image 402 and input it to the object detection model 410. For example, the electronic device 3000 may crop out a portion of the object image 402. The cropped region may be a region other than the object within the object image 402. For example, the electronic device 3000 may resize the object image 402 so that a resolution of the object image 402 is reduced to reduce the amount of data.

In an embodiment, the electronic device 3000 may select some of the object key points 412 obtained by using the object detection model 410. For example, when the object key points 412 correspond to the shape of the wine bottle, the electronic device 3000 may select, as a subset 414 of object key points, object key points that correspond to a bottle body portion, excluding key points that correspond to a bottle neck portion. The subset 414 of object key points are also key points representing the outline of the object, so they are hereinafter described collectively as the object key points 412.

In an embodiment, the electronic device 3000 may infer, based on the object key points 412, values of 3D parameters 420 capable of describing an original 3D shape of the object. The 3D parameters 420 may include various features that may describe the original 3D shape of the object. The features in the 3D parameters may correspond to at least one of, for example, 3D rotation, 3D translation, a dimension, and 3D scaling of the object, and a camera parameter. In addition, the camera parameter is an intrinsic parameter of the camera, and may include, but is not limited to, a focal length, a principal point, an aspect ratio, a skew coefficient, etc. Because the features of the 3D parameters 420 are for representing a 3D shape, features of the 3D parameters 420 corresponding to each 3D shape may be different. For example, when a 3D shape type is a sphere type, the 3D parameters 420 corresponding to the sphere type may be used, and when the 3D shape type is a cube type, the 3D parameters 420 corresponding to the cube type may be used. In this case, features constituting the 3D parameters 420 may be different for each 3D shape type. For example, the 3D parameters 420 for the sphere type may include features such as a radius and/or a diameter, and the 3D parameters 420 of the cube type may include features such as a width, a length, and a height. Similarly, when the object is a wine bottle as illustrated in FIG. 4A, the 3D parameters 420 corresponding to a cylinder type or a bottle type may be used.

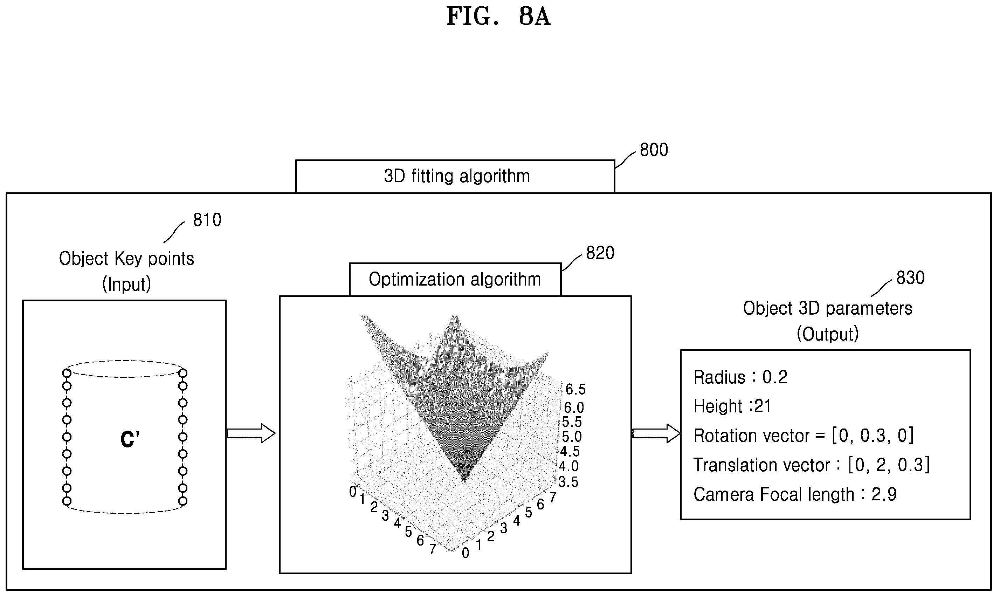

The electronic device 3000 may obtain initial values of the 3D parameters 420 and tune the initial values of the 3D parameters 420 by using the object key points 412. In the present disclosure, a process by which the electronic device 3000 tunes the values of the 3D parameters 420 may be referred to as a "3D fitting process (or a 3D fitting operation)." The 3D fitting may be performed using an algorithm and/or an Al model. The algorithm and/or the Al model for the 3D fitting will be further described with reference to FIGS. 8A to 9C. When the electronic device 3000 tunes the values of the 3D parameters 420 to obtain final values, the final values of the 3D parameters 420 represent the original 3D shape of the object. In other words, the final values of the 3D parameters 420 represent 3D information of the object. The electronic device 3000 may generate, based on the 3D information of the object, data for removing 3D distortion of the object. For example, the electronic device 3000 may generate 2D mesh data 430 representing 3D distortion on a surface of the object (e.g., curvature distortion, etc.). The 2D mesh data 430 refers to data generated by projecting coordinates of an ROI of the object in 3D space into two dimensions based on the obtained values of the 3D parameter 420, and includes distortion information of the ROI of the object. For example, an ROI attached to the surface of the "wine bottle, which is a 3D object having a curved shape, may be a "wine label". In this case, the 2D mesh data 430 is a 2D projection of 3D spatial coordinates of the wine label attached to the surface of the wine bottle, and may represent distortion information of the wine label that is the ROI in an image including the wine bottle.

In an embodiment, the electronic device 3000 may apply a perspective transform 440 to the object image 402. For example, based on the 2D mesh data including the distortion of the object, the electronic device 3000 may select points in the original image 402 including the distortion and corresponding points in a transformed image from which the distortion is removed. The electronic device 3000 may calculate a homography matrix for performing the perspective transform based on the selected points. The electronic device 3000 may apply the perspective transform 440 by using the homography matrix, and obtain an image 450 from which the distortion is removed. Prior to performing the perspective transform 440, the electronic device 3000 may crop out only a region corresponding to the object 400 from the object image 402. According to an embodiment, because the electronic device 3000 infers 3D information of the object and performs the perspective transform 440 by using the 3D information, the electronic device 300 may remove distortion in the image more precisely than when perspective transform is generally performed without using 3D information of the object.

In an embodiment, the electronic device 3000 may perform ROI detection 460 within the image 450 from which the distortion is removed. For example, the electronic device 3000 may generate a heat map representing an ROI by using an ROI detection model, but is not limited thereto.

In an embodiment, when the electronic device 3000 detects the ROI, the electronic device 3000 may obtain an ROI image 470 by cropping out a region corresponding to the ROI. According to an embodiment, the electronic device 3000 may obtain information related to the object by extracting information in the ROI from the ROI image 470 from which the distortion is removed.

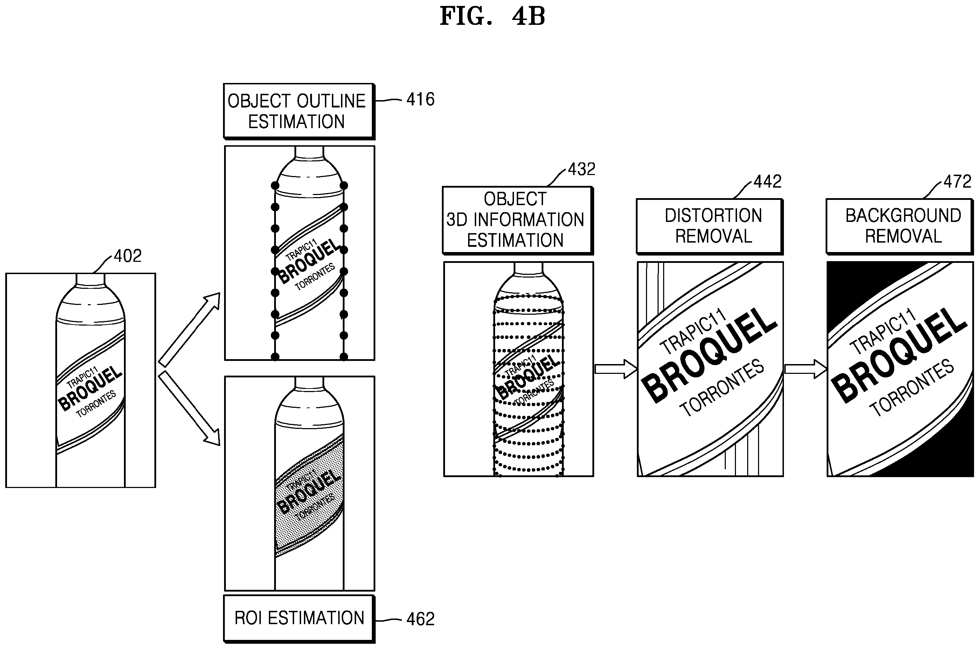

FIG. 4B is a diagram schematically illustrating operations performed by an electronic device for processing an image, according to an embodiment of the present disclosure.

Referring to FIG. 4b, the electronic device 3000 may process an object image 402 including a 3D object. When the electronic device 3000 captures an image of the 3D object, the 3D object is projected onto a 2D plane (e.g., an image sensor of a camera, etc.), which may result in perspective distortion in which a relative size, position, and shape of the object in a 3D scene appear different in a 2D image. Operations of the electronic device 3000 to remove distortion may include at least the following operations.

The operations of the electronic device 3000 may include an object outline estimation operation 416. The electronic device 3000 may obtain object outline information (e.g., object key points) by analyzing the object image 402 to estimate an object outline. Furthermore, the operations of the electronic device 3000 may include an ROI estimation operation 462. The electronic device 3000 may obtain ROI information by analyzing the object image 402 to estimate an ROI of the object. The object outline estimation operation 416 is further described in the description with respect to FIGS. 5A and 5B, and the ROI estimation operation 462 is further described in the description with respect to FIGS. 6A to 6D.

The operations of the electronic device 3000 may include an object 3D information estimation operation 432. The electronic device 3000 may obtain object 3D information, based on at least some of the object outline information and the ROI information. The electronic device 3000 may use an algorithm for estimating the object 3D information, or may use an Al model trained to estimate the object 3D information. The object 3D information estimation operation is further described in the description with respect to FIGS. 8A to 9C.

The operations of the electronic device 3000 may include a distortion removal operation 442. The electronic device 3000 may remove 3D distortion of the ROI based on the object 3D information. For example, to remove 3D distortion, the electronic device 3000 may perform a perspective transform based on the object 3D information. However, for the distortion removal operation 442, other algorithms for removing 3D distortion may be applied.

The operations of the electronic device 3000 may include a background removal operation 472. In some embodiments, the background removal operation 472 may be omitted. For example, the background removal operation 472 may be omitted when the shape of the ROI is a structured design (e.g., a quadrilateral) or when an ROI image obtained after removing the 3D distortion has no background. Alternatively, when the shape of the ROI is an unstructured design, pixels outside of the ROI may be removed through the background removal operation 472.

FIG. 5A is a diagram illustrating an operation in which an electronic device detects object key points, according to an embodiment of the present disclosure.

In an embodiment, the electronic device 3000 may detect object key points 520 by using an object detection model 510. The electronic device 3000 may input an object image 500 to the object detection model 510 and obtain the object key points 520 output from the object detection model 510.

The object detection model 510 may include a backbone network and a regression module. The backbone network may use an architecture of a known neural network (e.g., a network based on convolutional neural networks (CNNs), etc.) for extracting various features from the input image 500. The backbone network may be a pre-trained network, and may take the input image 500 as an input and output a feature map. The regression module performs a task of detecting the object key points 520 by using the feature map output from the backbone network. The regression module may use a regression algorithm for training the regression module so that the object key points 520 representing an object outline converge to ground-truth values. The regression module may include neural network layers and weights for detecting the object key points 520. For example, the regression module may be configured to include, but is not limited to, a series of fully connected layers and convolutional layers specially designed for detecting an object. When the electronic device 3000 trains the object detection model 510 by using a training dataset for the object detection model 510, weights of the backbone network and the regression module may be updated during the training process.

FIG. 5B is a diagram illustrating training data for an object detection model, according to an embodiment of the present disclosure.

In an embodiment, the object detection model 510 may be trained using a training dataset consisting of various images including an object. The training dataset for the object detection model 510 may include an object image 502 and ground-truth annotations 504 that correspond to the object image 502 and represent an outline of the object. The ground-truth annotations 504 may be, for example, coordinates of key points for object detection, but are not limited thereto. Specifically, the object key points, which are points that are set to infer an original 3D shape of the object, may be points representing outer edge regions of the object. When there is an ROI on a surface of the 3D object*, some of the key points may be points representing outer edge regions of the ROI.

The electronic device 3000 may train the object detection model 510 by using the training dataset for the object detection model 510. The object detection model 510 may take an image as an input, predict object key points, and calculate an error between ground-truth annotations 504 and the predicted object key points by using a loss function. The weights of the backbone network and the regression module of the object detection model 510 may be updated based on the calculated error.

Moreover, the ground-truth annotations 504 representing the outline of the object may be in a preset form. For example, when the ground-truth annotations 504 are key points representing the outline of the object and the object is a wine bottle, the key points representing the outline of the object may include key points corresponding to a bottle neck portion and key points corresponding to a bottle body portion. In this case, positions and numbers of the key points may be preset. For example, the ground-truth annotations 504 may include only the key points corresponding to the bottle body portion having a cylindrical shape, excluding the key points corresponding to the bottle neck portion. In addition, the ground-truth annotations 504 may be 18 key points representing the outline of the object, specifically, 9 key points on a left side of the object and 9 key points on a right side of the object. In this case, the electronic device 3000 may detect the 18 key points representing the outline of the object by using the object detection model 510.

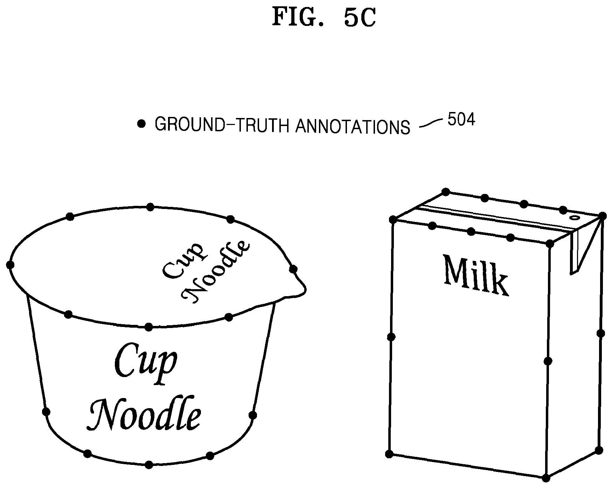

FIG. 5C is a diagram further illustrating training data for an object detection model, according to one embodiment of the present disclosure.

In an embodiment, object images included in a training dataset may include images of objects of various types of 3D shapes. Accordingly, depending on a 3D shape type of an object, ground-truth annotations 504 representing an outline of the object may be different.

For example, if the ground-truth annotations 504 are key points representing an outline of an object, and the object is a cup noodle, the key points representing the outline of the object may include key points corresponding to an outer edge of a top circular surface of the cup noodle and key points corresponding to an outer edge of a bottom circular surface of the cup noodle.

Alternatively, if the ground-truth annotations 504 are key points representing an outline of an object, and the object is a carton of milk, the key points representing the outline of the object may include key points corresponding to edge portions that are seen when viewing the carton of milk having a cuboidal shape from a specific viewpoint.

In addition, for the objects such as the wine bottle, the cup noodle, and the carton of milk, the location where the ground-truth annotations 504 representing the key points of each of the objects are set according to a 3D shape type of the object is only an example. The ground-truth annotations 504 representing the outline of the object may be set in another location that may represent features of the object in order to obtain 3D information of the object.

In an embodiment, the electronic device 3000 may train the object detection model 510 using a training dataset consisting of images of objects having various 3D shapes. The trained object detection model 510 enables the electronic device 3000 to obtain a new image and detect key points of an object in the image.

FIG. 6A is a diagram illustrating an operation in which an electronic device identifies an ROI on a surface of an object, according to an embodiment of the present disclosure.

In an embodiment, the electronic device 3000 may detect an ROI 620 by using an ROI detection model 610. The electronic device 3000 may input an object image 600 to the ROI detection model 610 and obtain the ROI 620 output from the ROI detection model 610. The ROI 620 of FIG. 6A is a heat map visualization of the ROI 620.

The ROI detection model 610 may include a backbone network and task-specific layers (or also referred to as 'heads') for detecting an ROI. The backbone network may use an architecture of a known neural network (e.g., CNNs, etc.) for extracting various features from the input image 500. The backbone network may be a pre-trained network, and may take the object image 600 as an input and output a feature map. The task-specific layers may be blocks that each consist of layers and weights for detecting an ROI. For example, the task-specific layers may be blocks, each consisting of convolutional layers for outputting a heat map, but are not limited thereto. The task-specific layers may each include a regression module, as illustrated in FIG. 5A. The regression module performs a task of detecting the ROI 620 by using the feature map output from the backbone network. The regression module may include neural network layers and weights for detecting an ROI. For example, the regression module may be configured to include, but is not limited to, a series of fully connected layers and convolutional layers designed for detecting an ROI. When the electronic device 3000 trains the ROI detection model 610 by using a training dataset for the ROI detection model 610, weights of the ROI detection model 610 may be updated during the training process.

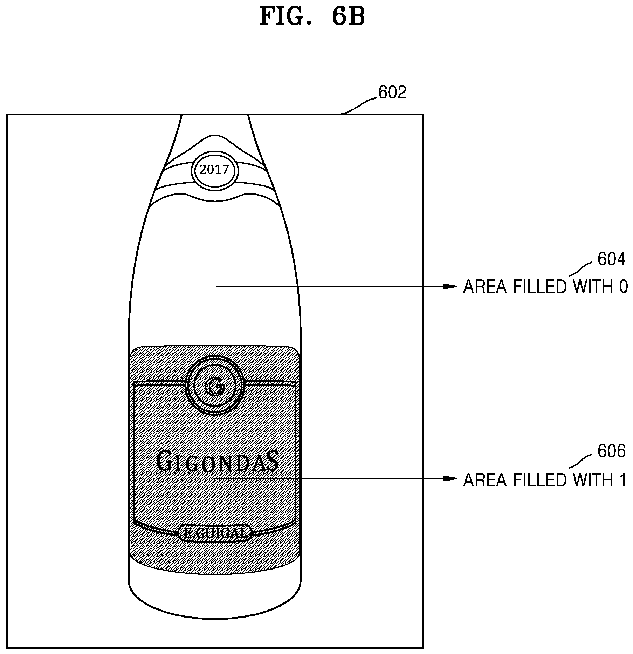

FIG. 6B is a diagram illustrating training data for an ROI detection model, according to an embodiment of the present disclosure.

In an embodiment, the ROI detection model 610 may be trained using a training dataset consisting of various images including an ROI. The training dataset for the ROI detection model may include an object image 602 and ground-truth annotations that correspond to the object image 602 and represent the ROI. The ground-truth annotations may be, for example, a binary mask. Specifically, pixels corresponding to a region other than the ROI in the object image 602 may be masked with 0, and pixels corresponding to the ROI may be masked with 1, but are not limited thereto.

The electronic device 3000 may train the ROI detection model 610 by using the training dataset for the ROI detection model 610. The ROI detection model 610 may take an image as an input, predict an ROI on a surface of an object, and calculate an error between the ground-truth annotations 504 and the predicted ROI by using a loss function. Based on the calculated error, the weights of the ROI detection model 610 may be updated.

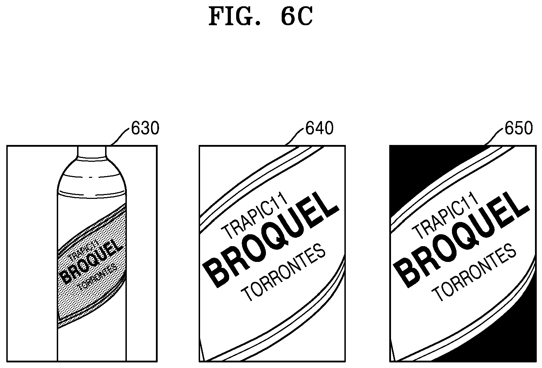

FIG. 6C is a diagram illustrating a result of detection of an ROI by an electronic device, according to an embodiment of the present disclosure.

Referring to FIG. 6C, the electronic device 3000 may obtain ROI data by detecting an ROI in an image. For example, the electronic device 3000 may obtain a heat map image 630 representing the ROI. In this case, the electronic device 3000 may use the ROI detection model 610 described above.

The electronic device 3000 may use the heat map image 630 in various ways.

In an embodiment, the electronic device 3000 may generate an ROI image 640 by cropping out only the ROI based on the heat map image 630 representing the ROI. The ROI image 640 may be an image from which distortion has been removed. In an embodiment, the electronic device 3000 may obtain the ROI image 640, and remove 3D distortion in the ROI image 640 based on information about an original 3D shape of an object obtained according to the above-described embodiment. In an embodiment, the electronic device 3000 may obtain information about the original 3D shape of the object by using an input image according to the above-described embodiment, remove 3D distortion of the ROI on a surface of the object, and obtain the ROI image 640 by cropping out only the ROI.

In an embodiment, based on the heat map image 630 and/or the ROI image 640 both representing the ROI, the electronic device 3000 may generate an ROI image 650 from which a background is removed. The ROI image 650 with the background removed may be an image from which pixels corresponding to other regions have been removed, except for pixels corresponding to the ROI. In addition, the ROI image 650 with the background removed may be an image of the ROI from which 3D distortion is removed according to the above-described embodiment. The electronic device 3000 may provide the user with the ROI image 650 with the background removed. For example, when the ROI is a label of a product, the ROI image 650 with the background removed may be referred to as a "label image." The electronic device 3000 may store and provide the label image and product information together so that the user may easily identify information about the product. Alternatively, the electronic device 3000 may synthesize the label image onto the object (e.g., by warping the label), and provide the synthesized label image to the user.

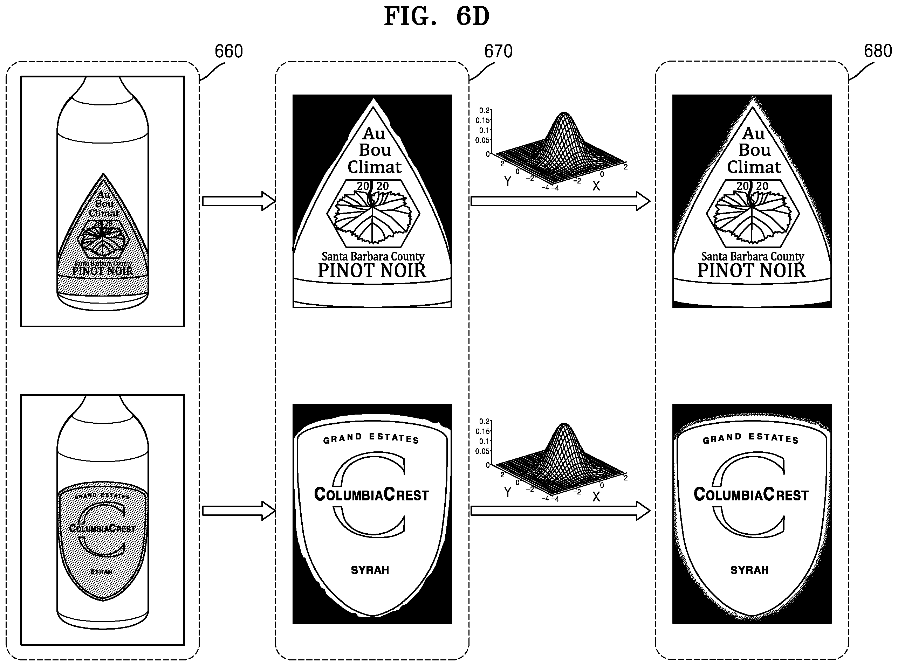

FIG. 6D is a diagram illustrating an operation in which an electronic device processes an image of an ROI, according to an embodiment of the present disclosure.

Referring to FIG. 6D, a heat map image 660 shown in FIG. 6D is a visualization of a region corresponding to an ROI overlapping an input image in the form of a heat map.

In an embodiment, when generating an ROI image 670, the electronic device 3000 may generate the ROI image 670 based on heat map data. For example, in the heat map image 670, pixels in the region corresponding to the ROI are masked with 1, and pixels in a region other than the ROI are masked with 0. The electronic device 3000 may obtain the ROI image 670 by removing the pixels other than the pixels in the region corresponding to the ROI based on a binary mask.

In an embodiment, when the electronic device 3000 generates the ROI image 670 based on the heat map data, the ROI is extracted by a value of 0 or 1 in the binary mask, so edges of the ROI may be jagged and rough, and the shape of the ROI may appear irregular and uneven. Before providing the ROI image 670 to the user of the electronic device 3000, the electronic device 3000 may apply a Gaussian filter to the binary mask of the heat map data to smooth the ROI image 670.

For example, the electronic device 3000 may apply a convolution to the heat map image 660 consisting of 0's and 1's by using a Gaussian filter and calculate a weighted sum of surrounding pixels. The electronic device 3000 may compare intensities of pixels with a threshold and select only pixels with intensities higher than the threshold, and not select the other pixels. The threshold may be a preset value. For example, the threshold may be 0.5, but is not limited thereto. Because a specific algorithm for applying a Gaussian filter is a known technology, a detailed description thereof is omitted. The electronic device 3000 may perform processing for smoothing the edges of the ROI by applying, to the ROI image 670, a calculation result obtained by applying the Gaussian filter. That is, in order to provide the ROI image 670 to the user in a more visually appealing form, the electronic device 3000 may apply a Gaussian filter to the ROI image 670 and provide the user with an ROI image 680 to which the Gaussian filter has been applied.

Moreover, the ROI image 670 and/or the ROI image 680 to which the Gaussian filter has been applied may be a distortion-removed image to which distortion removal processing is applied according to the above-described embodiment. Alternatively, the electronic device 3000 may obtain the ROI image 670 and/or the ROI image 680 to which the Gaussian filter has been applied before distortion removal processing, and apply the distortion removal processing to obtain a distortion-removed image in which the ROI is rectified to be a plane.

FIG. 7A is a diagram illustrating 3D parameters used by an electronic device to infer a 3D shape of an object, according to an embodiment of the present disclosure.

3D parameters 710 described with reference to FIG. 7A represent 3D features of an object, and may be referred to as "object shape-based 3D parameters." The object 3D parameters are distinguished from "ROI shape-based 3D parameters," which represents 3D features of an ROI on a surface of the object, as described below with reference to FIG. 11A. For example, the features included in the object 3D parameters may be different from the features in the ROI 3D parameters.

In describing the 3D parameters 710 illustrated in FIG. 7A, for convenience of description, an example is provided where a 3D shape type of the object is a cylinder and the 3D parameters 710 include features corresponding to a cylinder type. However, the 3D type of the object is not limited to the cylinder. For example, when the 3D shape type of the object is a sphere, the 3D parameters 710 may include features corresponding to a sphere type.

In an embodiment, features of the 3D parameters 710 corresponding to the cylinder type may include, for example, but are not limited to, a radius r of the cylinder, a height h of the cylinder, rotation information R of the cylinder in 3D space, translation information T of the cylinder in 3D space, a camera parameter (e.g., focal length information F of the camera), etc. Each feature included in the 3D parameters 710 may have an initial value set thereto.

In an embodiment, the electronic device 3000 may render a virtual object 712 based on initial values of the features of the 3D parameters 710. In this case, because the 3D parameters 710 correspond to the cylinder type, a 3D shape of the virtual object 712 is a cylindrical shape. In addition, the initial values r, h, R, T, and F of the 3D parameters 710 are set as 3D information of the virtual object. In other words, the 3D information of the virtual object may mean that the virtual object has, in 3D space, a radius r, a height h, rotation information R and translation information T, and the camera has a focal length F, assuming that the camera captures images of the virtual object 712.

The electronic device 3000 may set virtual object key points 720 representing an outline of the virtual object 712. The virtual object key points 720 are distinguished from real-world object key points 730 that the electronic device 3000 detects by capturing an image of the real-world object. In the present disclosure, unless specially stated as 'virtual', the term object key points refer to key points of a real-world object. The electronic device 3000 may tune the initial values of the 3D parameters 710 by using the virtual object key points 720 and the object key points 730. In the present disclosure, a process by which the electronic device 3000 tunes the values of the 3D parameters 710 may be referred to as a "3D fitting process (or 3D fitting operation)." The 3D fitting may be performed using an algorithm and/or an Al model. When the electronic device 3000 completes the 3D fitting process, final values of the 3D parameters 710 are tuned to represent an original 3D shape of the real-world object. That is, 3D information of the real-world object may be obtained.

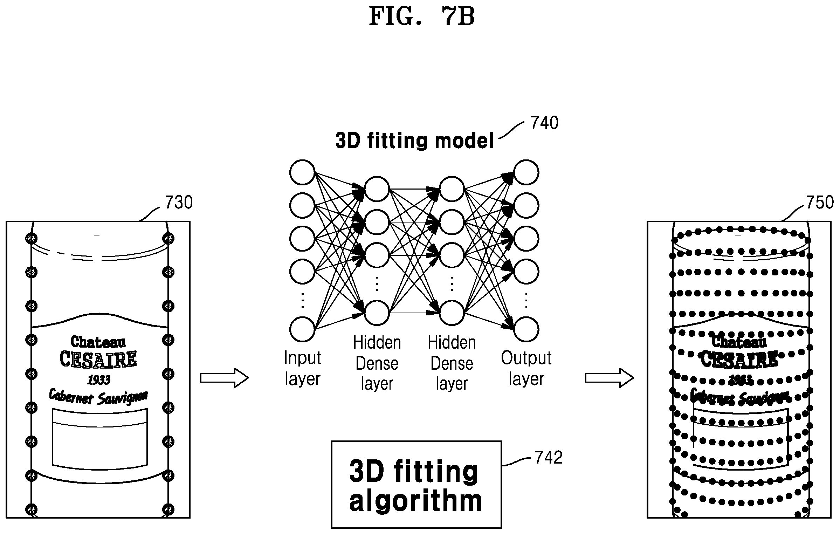

FIG. 7B is a diagram illustrating an operation in which an electronic device infers 3D information of an object based on a shape of the object, according to an embodiment of the present disclosure.

In an embodiment, the electronic device 3000 may use a 3D fitting model 740 and/or a 3D fitting algorithm 742 to obtain object 3D information 750. The object 3D information 750 may be, but is not limited to, mesh data representing 3D distortion of the object (e.g., curvature distortion, etc.). The 3D fitting model 740 and/or the 3D fitting algorithm 742 may perform 3D fitting by using the object key points 730. As described with reference to FIG. 7A, 3D fitting refers to obtaining initial values of 3D parameters and tuning the 3D parameters to obtain 3D parameters representing the original 3D shape of the object. The 3D fitting model 740 may be implemented using an Al model.

In an embodiment, when performing the 3D fitting, the electronic device 3000 may determine whether to use the 3D fitting algorithm 742 or the 3D fitting model 740. For example, when lightweight and fast computation is required, the electronic device 3000 may determine to use the 3D fitting algorithm 742. Alternatively, when accurate computation using more computing resources is required, the electronic device 3000 may determine to use the 3D fitting model 740.

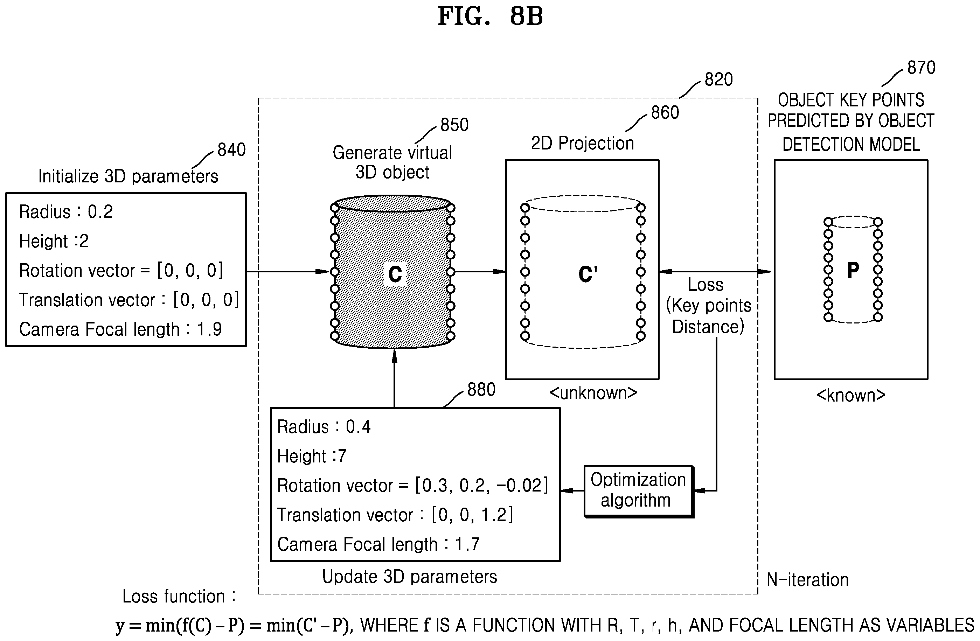

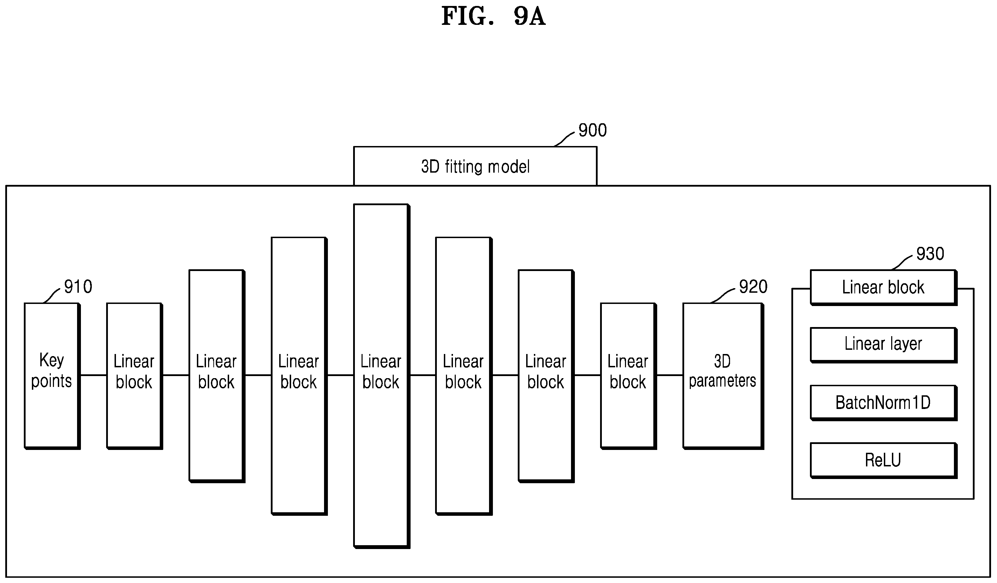

The implementation of 3D fitting using the 3D fitting algorithm 742 is described with reference to FIGS. 8A and 8B, and the implementation of the 3D fitting model 740 as an Al model is described with reference to FIGS. 9A to 9C.

FIG. 8A is a diagram illustrating an object shape-based 3D fitting algorithm according to an embodiment of the present disclosure.

In an embodiment, the 3D fitting algorithm 800 may take object key points 810 as input, apply an optimization algorithm 820, and output object 3D parameters 830. For example, the 3D fitting algorithm 800 may take, as an input, data of key points representing an outline of a 3D object having a cylindrical shape. In this case, the 3D fitting algorithm 800 may output the object 3D parameters 830 representing an original 3D shape of the object. In a specific example, the 3D fitting algorithm 800 may output the object 3D parameters 830 including a radius, a height, a rotation vector, and a translation vector of the object having a cylinder shape, a camera focal length, etc.

In an embodiment, the optimization algorithm 820 may be any of a variety of algorithms used to infer the object 3D parameters 830. For example, optimization algorithms for finding a minimum of a function, such as Broyden-Fletcher-Goldfarb-Shanno (BFGS), limited-memory BFGS with Bounds (L-BFGS-B), Conjugate Gradient (CG), Nelder-Mead, Powell, etc., may be used, but are not limited thereto. The 3D fitting algorithm 800 and the optimization algorithm 820 are further described with reference to FIG. 8B.

FIG. 8B is a diagram illustrating an object shape-based 3D fitting algorithm according to an embodiment of the present disclosure.

In an embodiment, the electronic device 3000 may obtain initial 3D parameters 840 having preset initial values. The initial 3D parameters 840 may correspond to a 3D shape type of an object. For example, when the 3D shape type of the object is a cylinder, features of the 3D parameters 840 consist of features for representing 3D information of the cylinder. The electronic device 3000 may identify a 3D shape of the object before obtaining the 3D parameters. For example, the electronic device 3000 may determine, based on a user input, that the 3D shape of the object is a cylinder. Alternatively, the electronic device 3000 may identify that the 3D shape of the object in an image is a cylinder by using an object 3D shape classification model. Alternatively, based on a preset object recognition mode (e.g., a wine bottle/wine label recognition mode) being executed, the electronic device 3000 may determine that the 3D shape of the object is a cylinder. The electronic device 3000 may obtain the initial 3D parameters 840 corresponding to the 3D shape of the object and having preset initial values.

The electronic device 3000 may generate a virtual object 850 by using the initial 3D parameters 840 having initial values. Here, the virtual object 850 is an object having a 3D shape that is a cylinder shape and having, as 3D information, a radius, a height, a rotation vector, a translation vector, and a focal length in the initial 3D parameters 840.

The electronic device 3000 may update the values of the initial 3D parameters 840 in order to infer 3D parameters representing an original 3D shape of the real-world object. The electronic device 3000 may project the virtual object 850 into two dimensions and set virtual object key points 860 representing an outline of the virtual object 850. The electronic device 3000 may change the values of the initial 3D parameters 840 such that the virtual object key points 860 match the object key points 870. The object key points 870 may be obtained from a captured image of the real-world object. The operation in which the electronic device 3000 obtains the object key points 870 representing the outline of the object in the image has been described above, so a repeated description is omitted for brevity.

When the electronic device 3000 changes the values of the initial 3D parameters 840, a loss function may be used. The loss function may be a function set to minimize a difference between the virtual object key points 860 and the object key points 870. The electronic device 3000 may change the initial 3D parameters 840 based on the loss function, and obtain updated 3D parameters 880. In this case, an optimization algorithm may be used when calculating the updated 3D parameters 880.

The electronic device 3000 may repeat the above-described 3D fitting operations. For example, the electronic device 3000 may adjust the 3D parameters to represent the original 3D shape of the object by repeating the 3D fitting operations a preset number of N times. Specifically, the electronic device 3000 may regenerate (update) the virtual object 850 based on the updated 3D parameters 880 and compare the key points 860 of the virtual object 850 with the object key points 870. For example, the electronic device 3000 may adjust the values of the 3D parameters to obtain the updated 3D parameters 880, generate a virtual object having changed 3D information, and repeat the operation of adjusting the values of the 3D parameters to obtain the values of the 3D parameters such that a difference between the virtual object key points 860 and the object key points 870 is minimized. As the adjustment of the values of the 3D parameters is repeated, the values of the initial 3D parameters 840 may be eventually adjusted to closely match ground-truth values of the 3D parameters representing the 3D shape of the object. When the virtual object key points 860 match the object key points 870, values of the 3D parameters of the virtual object 850 at this time represent 3D information of the object in the image. That is, the electronic device 3000 may finally obtain the 3D parameters representing the 3D information of the object in the image through iterations of the 3D fitting operation.

FIG. 9A is a diagram illustrating an object shape-based 3D fitting model according to an embodiment of the present disclosure.

In an embodiment, a 3D fitting model 900 may be implemented as an Al model. The 3D fitting model 900 may be an Al model trained to, when taking object key points 910 as input, output 3D parameters 920. For example, the 3D fitting model 900 may take, as an input, data of key points representing an outline of a 3D object having a cylindrical shape. In this case, the 3D fitting model 900 may output the object 3D parameters 920 representing an original 3D shape of the object. In a specific example, the 3D fitting model 900 may output the object 3D parameters 920 including a radius, a height, a rotation vector, and a translation vector of the object having a cylinder shape, a camera focal length, etc.

The 3D fitting model 900 may include one or more linear blocks 930. Each linear block 930 may include at least a linear layer, a batch normalization layer, and an activation function layer (e.g., a rectified linear unit (ReLU)). The linear layer may also be referred to as a fully connected layer. The linear layer may receive input features and linearly combine the input features by using weights and biases and output a linear combination thereof. The batch normalization layer may rescale the mean and standard deviation of each layer's inputs for a batch of multiple inputs. The activation function layer may determine an output of a neuron.

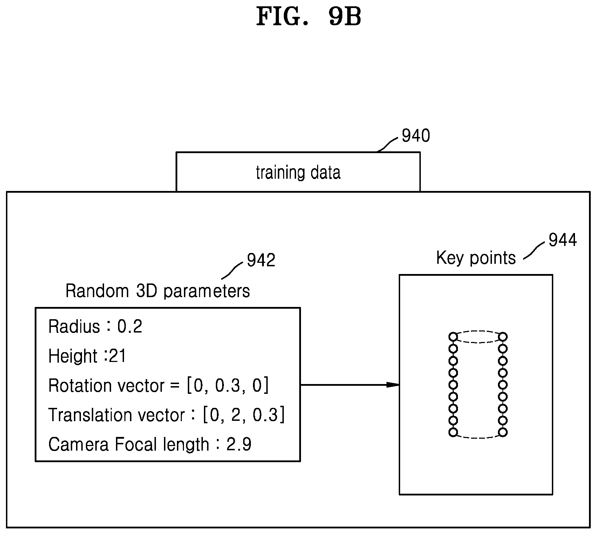

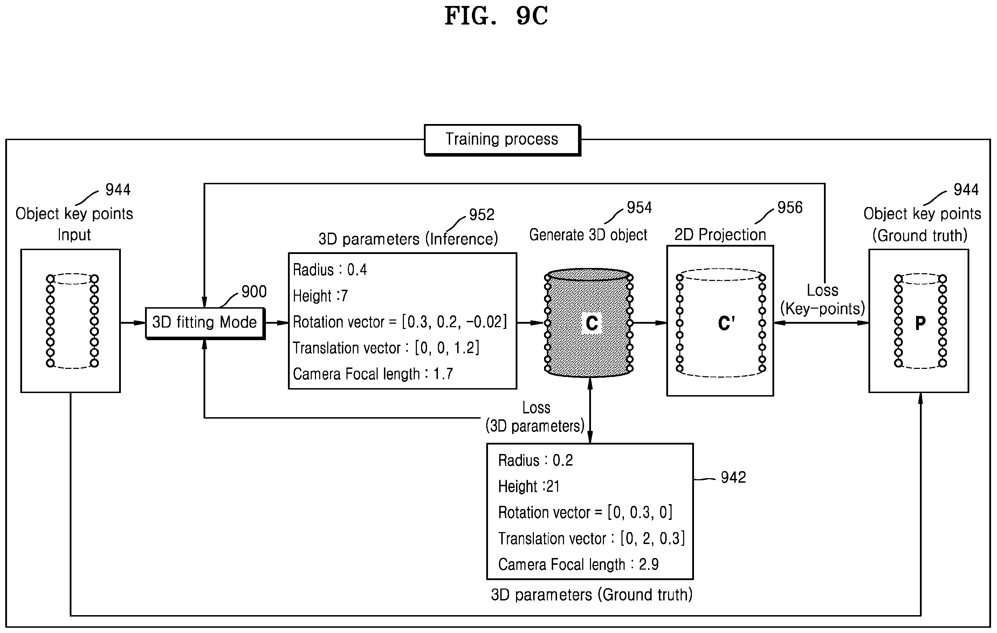

According to an embodiment, the electronic device 3000 may train the 3D fitting model 900 based on training data for the 3D fitting model 900. This is further described with reference to FIGS. 9B and 9C.

FIG. 9B is a diagram illustrating a method of generating training data for an object shape-based 3D fitting model, according to an embodiment of the present disclosure.

In an embodiment, the electronic device 3000 may generate training data 940 for training the 3D fitting model 900.

The electronic device 3000 may generate 3D parameters 942 for a random object, which represent a 3D shape of the object. The 3D parameters 942 may include different features depending on a 3D shape of an object. For example, the electronic device 3000 may generate the 3D parameters 942 representing a 3D shape of a random cylinder type, in which case the 3D parameters 942 may include a cylinder radius, a cylinder height, a rotation vector, a translation vector, and a camera focal length.

The electronic device 3000 may render a random 3D object based on the 3D parameters 942 for the random object. For example, the electronic device 3000 may render a 3D cylinder shape based on values of the cylinder radius, cylinder height, rotation vector, translation vector, and camera focal length included in the 3D parameters 942. The electronic device 3000 may generate object key points 944 representing an outline of the generated 3D object.

The 3D parameters 942 generated by the electronic device 3000 assuming the random object and object key points 944 representing an outline of the random 3D object may be the training data 940 for training the 3D fitting model 900.

The training data 940 for the 3D fitting model 900 may include training data generated by the electronic device 3000 and training data obtained by the electronic device 3000. The training data obtained by the electronic device 3000 may be ground-truth values of 3D parameters and object key points of a specific 3D object. The electronic device 3000 may train the 3D fitting model 900 by using the training data 940. A training process of the 3D fitting model is further described with reference to FIG. 9C.

FIG. 9C is a diagram illustrating an operation in which an electronic device trains an object shape-based 3D fitting model, according to an embodiment of the present disclosure.

Referring to FIG. 9C, the electronic device 3000 may train the 3D fitting model 900 to infer 3D parameters 952 of the object. Also, in FIG. 9C, the ground-truth object key points 944 and the ground-truth 3D parameters 942 may have been generated through the operation described with reference to FIG. 9B. Hereinafter, a brief training process of the 3D fitting model 900 is described.

During the training process of the 3D fitting model 900, the electronic device 3000 may input the ground-truth object key points 944 to the 3D fitting model 900. The 3D fitting model 900 outputs a result of inferring the object 3D parameters 952 through a series of neural network operations.

When the 3D parameters 952 are output from the 3D fitting model 900, the electronic device 3000 renders a 3D object 954 based on the inferred 3D parameters 952. The electronic device 3000 may project the 3D object 954 into two dimensions and set object key points 956 representing an outline of the 3D object 954.

The electronic device 3000 may update weights of the 3D fitting model 900 based on a loss function. The electronic device 3000 may update the 3D fitting model 900 based on the loss function that calculates an error between the inferred 3D parameters 952 and the ground-truth 3D parameters 942. Furthermore, the electronic device 3000 may update the 3D fitting model 900 based on a loss function that calculates an error between the ground-truth object key points 944 and the object key points 956 generated based on the inferred 3D parameters 952. The training operations described above may be repeated a preset number of times or until the error rate calculated from the loss function satisfies a preset value.

When the electronic device 3000 completes the training process of the 3D fitting model 900, the electronic device 3000 may infer 3D information of the object by using the 3D fitting model 900. That is, the electronic device 3000 may input object key points to the 3D fitting model 900 and obtain 3D parameters representing an original 3D shape of an object.

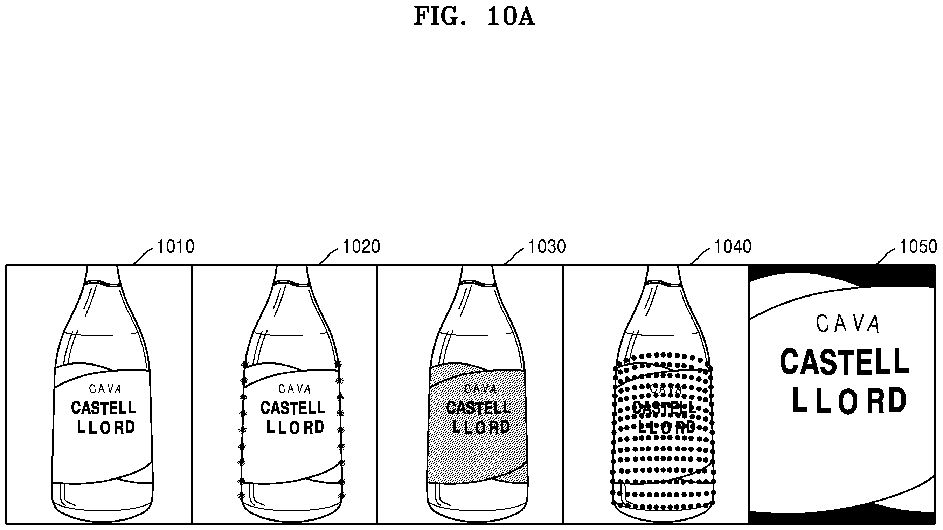

FIG. 10A is a diagram illustrating a process by which an electronic device processes an image, according to an embodiment of the present disclosure.

Referring to FIG. 10A, data produced as the electronic device 3000 performs a series of image processing operations by using an object image 1010 is illustrated.

The electronic device 3000 may detect object key point data 1020 representing an outline of an object in an input image 1010. The electronic device 3000 may obtain the object key point data 1020 by using an object detection model. The description with respect to the electronic device 3000 detecting the object key point data 1020 has been provided above, and thus, is not repeated for brevity.

The electronic device 3000 may detect ROI data 1030 on a surface of the object in the input image 1010. The electronic device 3000 may obtain ROI data 1030 by using an ROI detection model. The description with respect to the electronic device 3000 detecting the ROI data 1030 has been provided above, and thus, is not repeated for brevity.

The electronic device 3000 may obtain 3D information 1040 of the object in the input image 1010. The 3D information 1040 of the object may be mesh data representing a 3D shape of the object, but is not limited thereto. The 3D information 1040 of the object may be obtained based on 3D parameters. By using a 3D fitting model, the electronic device 3000 may obtain the 3D parameters representing an original 3D shape of the object. The description with respect to the electronic device 3000 obtaining the 3D information 1040 has been provided above, and thus, is not repeated for brevity.

The electronic device 3000 may obtain a distortion-removed image 1050 by using at least some of the input image 1010, the object key point data 1020, the ROI data 1030, and the 3D information 1040 of the object. The distortion-removed image 1050 may be an image in which an ROI on the surface of the object is rectified to be a plane. The electronic device 3000 may obtain the distortion-removed image 1050 in which the ROI on the surface of the object in the image is rectified to a plane by applying a perspective transform to the input image 1010 based on the 3D information 1040 of the object.

FIG. 10B is a diagram illustrating an example in which an electronic device extracts information from a distortion-removed image, according to an embodiment of the present disclosure.

Referring to FIG. 10B, an original image 1010, a cropped image 1012, and a distortion-removed image 1050 are shown.

In an embodiment, the electronic device 3000 may extract information present in an image by using an information detection model. When the electronic device 3000 obtains the distortion-removed image 1050, the electronic device 3000 may detect information in an ROI by using a general information detection model. In other words, the electronic device 3000 may generate the distortion-removed image 1050 and apply a general detection model to the distortion-removed image 1050 without having to separately train a detection model by reflecting distortion in the image to extract information in the distorted image. Accordingly, the electronic device 3000 may save computing resources for separately training/updating the information detection model.

For example, the electronic device 3000 may detect texts present in an image by using an OCR model. Hereinafter, an example in which the electronic device 3000 extracts text from an image by using the OCR model is described.

In an embodiment, the original image 1010 is a raw image obtained by the electronic device 3000 using a camera. The original image 1010 may include distortion of the ROI due to a 3D shape of the object, and may further include other blank spaces in the image in addition to the ROI. In other words, noise pixels outside the ROI may be included therein. When the electronic device 3000 applies OCR to the original image 1010, at least some of the texts in the ROI may be unrecognized or misrecognized due to the features of the original image 1010 described above. For example, within the original image 1010, a region where text is detected is indicated by a quadrilateral box, and among regions where texts are detected, a region where a detected text is misrecognized is indicated by a hatched arrow (if misrecognized). Also, a region that has text but is not identified as a detected region is indicated by a black arrow (if unrecognized). In a more specific example, when the number of text blocks to be detected within the ROI is 14, as a result of applying OCR to the original image 1010 (i.e., referring to texts 1011 detected from the original image 1010), there are 8 text blocks detected, at least some of which may not have accurate text detection results.

For a clearer understanding, cases where texts are unrecognized and misrecognized, which are illustrated as examples in the present disclosure, are further described with reference to the texts 1011 detected from the original image 1010, and examples of results of extracting information from the cropped image 1012 and the distortion-removed image 1050 are described.

In an embodiment, the OCR model may detect text in an image, recognize the detected text, and output a recognition result based on confidence of the recognition result being higher than or equal to a predetermined threshold (e.g., 0.5).

In the examples of the present disclosure, "unrecognized" may mean that text detection and recognition results are not output from an image even though text detection and recognition has been performed on the image. For example, "unrecognized" may include 1) a case where no text is detected and 2) a case where text is detected and text recognition is performed, but a recognition result is not output because confidence of the recognition result is lower than a predetermined threshold (e.g., 0.5).

In the examples of the present disclosure, "recognized" may include a case where text is detected, text recognition is performed, and a recognition result is output because confidence of the recognition result is higher than or equal to the predetermined threshold (e.g., 0.5). Here, "recognized" may be classified into "well-recognized" and "misrecognized". In the examples of the present disclosure, the terms "well-recognized" and "misrecognized" may be used as relative concepts. For example, "misrecognized" may refer to a case where confidence of a recognition result is low (e.g., confidence of at least 0.5 but less than 0.8), and "well-recognized" may refer to a case where confidence of a recognition result is relatively higher than when "misrecognized" (e.g., confidence of 0.8 or higher). Accordingly, text recognition results corresponding to "misrecognized" may not be accurate recognition results of actual text even though the recognition results are output. For example, '2: "A *^"mfr~ y*D', which represents a second recognized text among recognition results of the texts 1011 detected from the original image 1010, may be referred to as "misrecognized" because confidence of the recognition result is 0.598, which is relatively low value, and the recognition result is also inaccurate text. As a similar example, '1: ELEVE', which represents a first recognized text among the recognition results of the texts 1011 detected from the original image 1010, may be referred to as "well-recognized" because confidence of the recognition result is 0.888, which is a relatively high value, and the recognition result is also accurate text.

Moreover, even if confidence of a result of detection/recognition of text by the OCR model is high, the result of text detection/recognition may not be accurate due to distortion in an image itself. For example, among the recognition results of the texts 1011 detected from the original image 1010, '3: pour cette cuv6e' representing a third recognized text has confidence of 0.960 in a recognition result, but an actual accurate text is 'pour cette cuvee'. This is caused by curvature distortion present in the original image 1010 itself, and may be due to using a general OCR model rather than separately learning features specific to the distortion. The electronic device 3000 according to the embodiment generates the distortion-removed image 1050 and performs OCR on the distortion-removed image 1050, thereby allowing accurate text to be detected even when using a general OCR model.

Hereinafter, examples of text detection using a general OCR model are further described with respect to the cropped image 1012 and the distortion-removed image 1050 that are images with different features. The above descriptions related to non-recognition/misrecognition may be equally applied to texts 1013 detected from the cropped image 1012 described below and texts 1051 detected from the distortion-removed image 1050, as described below.

In an embodiment, the cropped image 1012 is an image obtained by detecting an ROI from the original image 1010 and cropping only the ROI. The cropped image 1012 may include distortion of the ROI due to the 3D shape of the object. When the electronic device 3000 applies OCR to the cropped image 1012, at least some of the texts in the ROI may be unrecognized or misrecognized due to the features of the cropped image 1012 described above. In a specific example, when the number of text blocks to be detected within the ROI is 14, as a result of applying OCR to the cropped image 1012 (i.e., referring to the texts 1013 detected from the cropped image 1012), there are 9 text blocks detected, at least some of which may not have accurate text detection results.

In an embodiment, the distortion-removed image 1050 is an image obtained by the electronic device 3000 inferring values of 3D parameters representing 3D information of the object and performing a perspective transform based on the values of the 3D parameters, according to the above-described embodiment. Because the distortion-removed image 1050 is an image that precisely has undergone the perspective transform into two dimensions based on the 3D information, the electronic device 3000 may obtain a more accurate text detection result. When the electronic device 3000 applies OCR to the distortion-removed image 1050, texts within the ROI may be accurately detected. In a specific example, when the number of text blocks to be detected within the ROI is 14, as a result of applying OCR to the distortion-removed image 1050 (i.e., referring to the texts 1051 detected from the distortion-removed image 1050), the number of text blocks detected is 14, and accurate text detection results may be obtained.

In addition, the number of text blocks to be detected, unrecognized text blocks, and misrecognized text blocks described above are only examples for the convenience of description and are not intended to determine the text recognition results. In other words, it should be understood that it is intended to illustrate that the text detection results for the distortion-removed image 1050 are more accurate than the text detection results for the original image 1010 and the cropped image 1012.

FIG. 11A is a diagram illustrating 3D parameters used by an electronic device to infer a 3D shape of an ROI, according to an embodiment of the present disclosure.

In describing 3D parameters 1110 illustrated in FIG. 11A, for convenience of description, an example is provided where a 3D shape type of an object is a cylinder and the 3D parameters 1110 include features corresponding to a cylinder type. However, the 3D type of the object is not limited to the cylinder. For example, when the 3D shape type of the object is a sphere, the 3D parameters 1110 may include features corresponding to a sphere type.

Furthermore, the 3D parameters 1110 shown in FIG. 11A may be distinguished from the 3D parameters 710 shown in FIG. 7A. For example, the 3D parameters 710 of FIG. 7A may be referred to as "object shape-based 3D parameters," and the 3D parameters 1110 of FIG. 11A may be referred to as "ROI shape-based 3D parameters". Alternatively, the 3D parameters 710 of FIG. 7A may be referred to as 'first 3D parameters', and the 3D parameters 1110 of FIG. 11A may be referred to as "second 3D parameters". However, because they are similar in that they are used to infer the original 3D shape of the object, they will hereinafter be referred to simply as the 3D parameters 1110.

In an embodiment, features of the 3D parameters 1110 corresponding to the cylinder type may include, for example, a radius r of the cylinder, rotation information R of the cylinder in 3D space, translation information T of the cylinder in 3D space, a camera parameter (e.g., focal length information F of the camera), etc. In addition, the features of the 3D parameters 1110 may include, but are not limited to, a height h of the ROI on a surface of the cylinder, an angle θ occupied by the ROI (e.g., a label of a product, etc.) on the surface of the cylinder, etc., which are features related to the ROI. Each feature included in the 3D parameters 1110 may have an initial value set thereto.

In an embodiment, the electronic device 3000 may render a virtual object 1112 based on initial values of the features of the 3D parameters 1110. In this case, because the 3D parameters 1110 correspond to the cylinder type, a 3D shape of the virtual object 1112 is a cylindrical shape. In addition, 3D information of the virtual object is set to initial values r, R, T, h, θ, and F of the 3D parameters. That is, the radius of the virtual object 1112 is set to r, the height of the ROI on the surface of the virtual object 1112 is set to h, and the angle occupied by the ROI on the surface of the virtual object 1112 is set to θ.

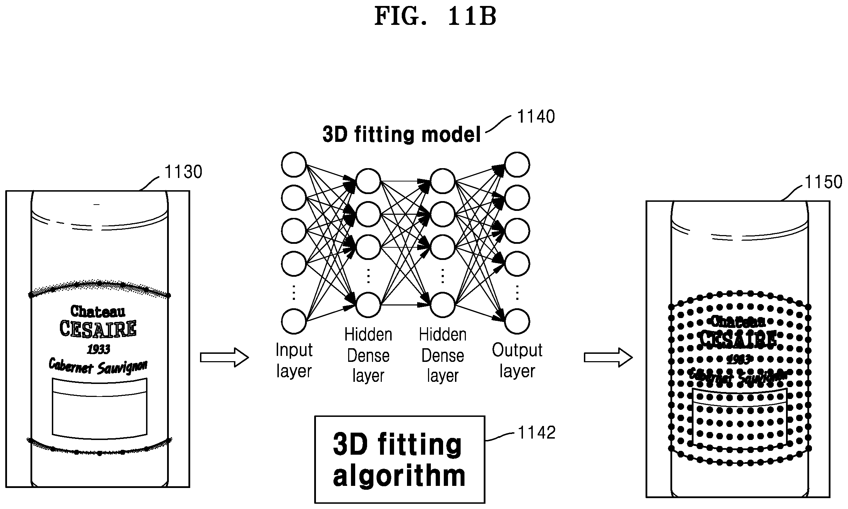

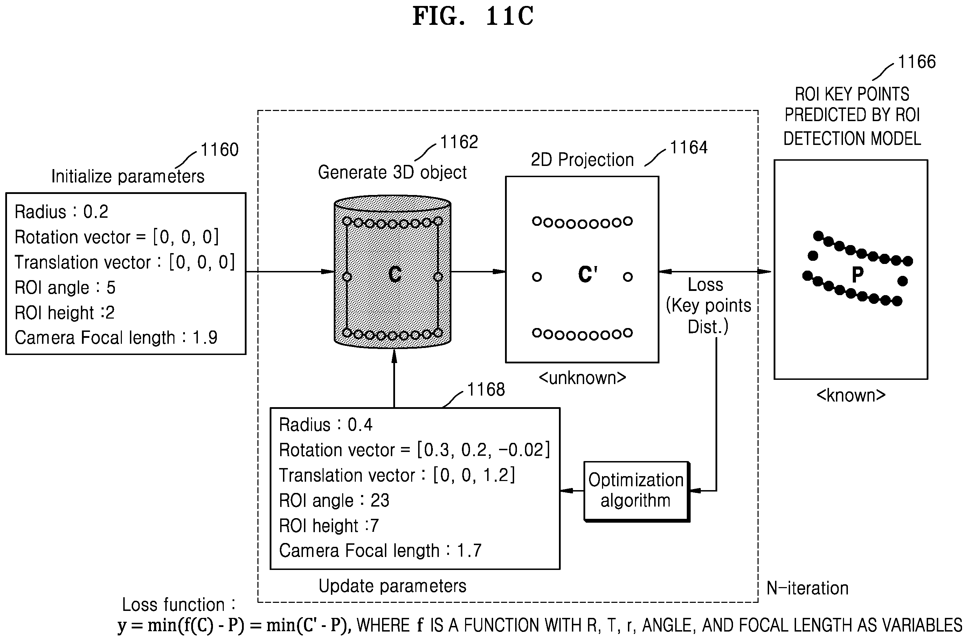

The electronic device 3000 may set ROI key points 1120 for the virtual object 1112, which represent an outline of the ROI on the surface of the virtual object 1112. The ROI key points 1120 for the virtual object are distinguished from ROI key points 1130 for a real-world object that the electronic device 3000 detects by capturing an image of the real-world object. In the present disclosure, unless specially stated as 'virtual', the term ROI key points for an object refer to ROI key points for a real-world object. The ROI key points for the real-world object may be obtained by a separate Al model for detecting key points of the ROI, or based on a heat map image obtained from the above-described ROI detection model. The electronic device 3000 may tune the initial values of the 3D parameters 1110 by using the ROI key points 1120 for the virtual object and the ROI key points 1130 for the object. A process by which the electronic device 3000 tunes the values of the 3D parameters 1110 may be referred to as a 3D fitting process. This is further described with reference to FIGS. 11B and 11C.

FIG. 11B is a diagram illustrating an operation in which an electronic device infers 3D information of an object based on a shape of an ROI, according to an embodiment of the present disclosure.

In an embodiment, the electronic device 3000 may use a 3D fitting model 1140 and/or a 3D fitting algorithm 1142 to obtain object 3D information 1150.

The 3D fitting model 1140 and the 3D fitting algorithm 1142 shown in FIG. 11B may be distinguished from the 3D fitting model 740 and the 3D fitting algorithm 742 shown in FIG. 7B. For example, the 3D fitting model 740/3D fitting algorithm 742 of FIG. 7B may be referred to as an "object shape-based 3D fitting model/object shape-based 3D fitting algorithm" because it uses object key points, and the 3D fitting model 1140 of FIG. 11B may be referred to as an "ROI shape-based 3D fitting model/ROI shape-based 3D fitting algorithm" because it uses ROI key points. Alternatively, the 3D fitting model 740/3D fitting algorithm 742 of FIG. 7B and the 3D fitting model 1140/3D fitting algorithm 1142 of FIG. 11B may be respectively referred to as 'first 3D fitting model/first 3D fitting algorithm' and 'second 3D fitting model/second 3D fitting algorithm'. However, because the it is similar in that it performs 3D fitting to infer the original 3D shape of the object, it will hereinafter be referred to simply as the 3D fitting model 1140.

In an embodiment, the electronic device 3000 may use the 3D fitting model 1140 and/or 3D fitting algorithm 1142 to obtain the object 3D information 1150. The object 3D information 1150 may be, but is not limited to, mesh data representing 3D distortion of the ROI of the object (e.g., curvature distortion, etc.). The 3D fitting model 1140 and/or the 3D fitting algorithm 1142 may perform 3D fitting by using the ROI key points 1130 for the object.

In an embodiment, when performing the 3D fitting, the electronic device 3000 may determine whether to use the 3D fitting algorithm 1142 or the 3D fitting model 1140. For example, when lightweight and fast computation is required, the electronic device 3000 may determine to use the 3D fitting algorithm 1142. Alternatively, when accurate computation using more computing resources is required, the electronic device 3000 may determine to use the 3D fitting model 1140.

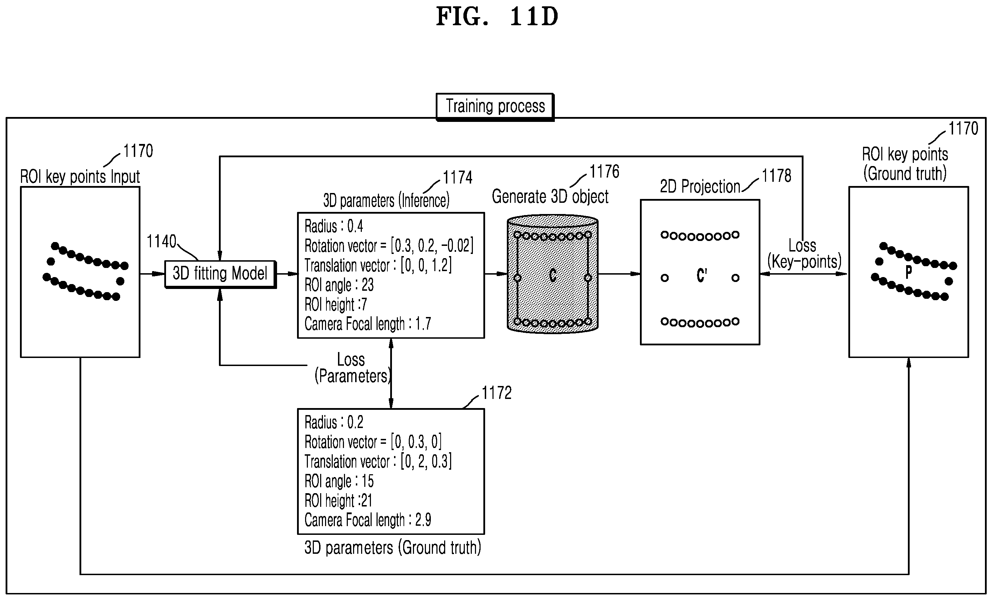

Moreover, when performing the 3D fitting, the electronic device 3000 may determine whether to perform object-based 3D fitting or ROI-based 3D fitting. This may be determined based on whether the shape of the ROI is a structured design or an unstructured design. The implementation of 3D fitting using the 3D fitting algorithm 1142 is described with reference to FIG. 11C, and the implementation of the 3D fitting model 1140 as an Al model is described with reference to FIG. 11D.

FIG. 11C is a diagram illustrating an ROI shape-based 3D fitting algorithm according to an embodiment of the present disclosure.

The electronic device 3000 may generate a virtual object 1162 by using initial 3D parameters 1160 having initial values. Here, the virtual object 1162 is an object having a 3D shape of a cylinder shape and having, as 3D information, a radius, a rotation vector, a translation vector, an ROI angle, an ROI height, a camera focal length of the initial 3D parameters 1160.

The electronic device 3000 may update the values of the initial 3D parameters 1160 in order to infer 3D parameters representing an original 3D shape of the real-world object. The electronic device 3000 may project the virtual object 1162 into two dimensions and set ROI key points 1164 for the virtual object 1162, which represent an outline of the ROI of the virtual object 1162. The electronic device 3000 may change the values of the initial 3D parameters 1160 such that the ROI key points 1164 for the virtual object match ROI key points 1166 for the object.

In addition, the 3D fitting based on ROI key points illustrated in FIG. 11C is identical/similar to the 3D fitting based on the object key points illustrated in FIG. 8B in general operations, except that the 3D parameters include features related to the ROI and use 3D ROI key points. Therefore, repeated descriptions are omitted.

FIG. 11D is a diagram illustrating an operation in which an electronic device trains an ROI shape-based 3D fitting model, according to an embodiment of the present disclosure.

Referring to FIG. 11D, the electronic device 3000 may train the 3D fitting model 1140 to infer 3D parameters 1174 of the object. During the training process of the 3D fitting model 1140, the electronic device 3000 may input ground-truth ROI key points 1170 to the 3D fitting model 1140. The 3D fitting model 1140 outputs a result of inferring the object 3D parameters 1174 through a series of neural network operations. In this case, the 3D parameters 1174 may include features related to the ROI (e.g., an angle occupied by the ROI on the surface of the object, a height of the ROI, etc.).

When the 3D parameters 1174 are output from the 3D fitting model 1140, the electronic device 3000 renders a 3D object 1176 based on the inferred 3D parameters 1174. In this case, the 3D object 1176 may include an ROI determined based on the 3D parameters 1174. The electronic device 3000 may project the 3D object 1176 into two dimensions, and set ROI key points 1178 representing an outline of the ROI on a surface of the 3D object 1176.

The electronic device 3000 may update weights of the 3D fitting model 1140 based on a loss function. The electronic device 3000 may update the 3D fitting model 1140 based on the loss function that calculates an error between the inferred 3D parameters 1174 and ground-truth 3D parameters 1172. Furthermore, the electronic device 3000 may update the 3D fitting model 1140 based on a loss function that calculates an error between the ground-truth ROI key points 1170 and the ROI key points 1178 generated based on the inferred 3D parameters 1174. The training operations described above may be repeated a preset number of times or until the error rate calculated from the loss function satisfies a preset value.

When the electronic device 3000 completes the training process of the 3D fitting model 1140, the electronic device 3000 may infer 3D information of the object by using the 3D fitting model 1140. That is, the electronic device 3000 may input ROI key points for an object to the 3D fitting model 1140 and obtain 3D parameters representing an original 3D shape of the object.

FIG. 12 is a diagram illustrating an object feature extraction model according to an embodiment of the present disclosure.

In an embodiment, the electronic device 3000 may use an object feature extraction model 1200. The object feature extraction model 1200 may be a model trained to, when taking an object image 1210 as input, output ROI key points 1235, object key points 1245, and an ROI heat map 1255, as described above with respect to the previous drawings. That is, the functions of the object detection model 510 of FIG. 5A and the ROI detection model 610 of FIG. 6A may be integrated and implemented as the object feature extraction model 1200 that is a single model.

The object feature extraction model 1200 may include a backbone network 1220. The backbone network 1220 may be a pre-trained network, and may take the object image 1210 as an input and output a feature map. The backbone network 1220 may use an architecture of a known neural network (e.g., ResNet50) for extracting features from the object image 1210. Alternatively, the backbone network 1220 may use an architecture of a lightweight neural network (e.g., MobileNetV2 (MV2)).

The object feature extraction model 1200 may include an ROI key point head 1230. The ROI key point head 1230 may be a block consisting of neural network layers for taking as input the feature map output from the backbone network 1220 and outputting the ROI key points 1235 representing an ROI.

The object feature extraction model 1200 may include an object key point head 1240. The object key point head 1240 may be a block consisting of neural network layers for taking as input the feature map output from the backbone network 1220 and outputting the object key points 1245 representing an outline of an object.

The object feature extraction model 1200 may include an ROI heat-map head 1250. The ROI heat-map head 1250 may be a block consisting of neural network layers for taking as input the feature map output from the backbone network 1220 and outputting a heat map representing the ROI.

Each of the ROI key point head 1230, the object key point head 1240, and the ROI heat-map head 1250 may include a convolution block 1225 capable of performing a 2D convolution operation. The convolution block 1225 may include at least a convolutional layer, a batch normalization layer, and an activation function layer.

In an embodiment, the electronic device 3000 may obtain the ROI key points 1235, the object key points 1245, and the ROI heat map 1255 by using the object feature detection model 1200. The electronic device 3000 may infer 3D information of the object, based on at least some of the ROI key points 1235, the object key points 1245, and the ROI heat map 1255, and obtain a distortion-removed image that is rectified to a plane by removing 3D distortion of the object.

In addition, operations S320 and S330 of FIG. 3 may also be performed in an integrated manner by the object feature detection model 1200.

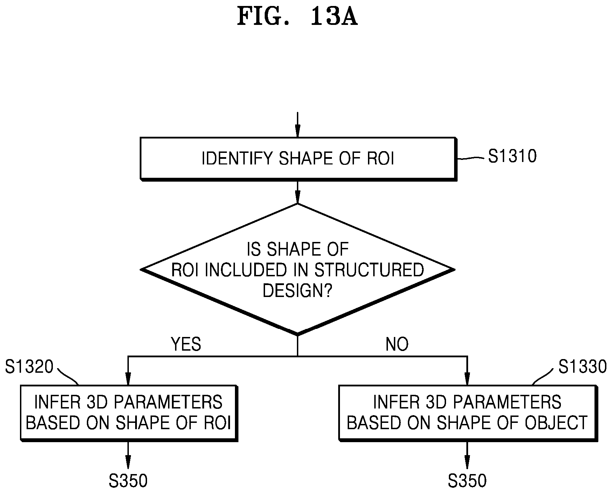

FIG. 13A is a flowchart illustrating an operation in which an electronic device determines data to be used to infer 3D parameters, according to an embodiment of the present disclosure.

Operation S1310 may be performed after operation S320 of FIG. 3 is performed.

In operation S1310, the electronic device 3000 identifies a shape of the ROI. The electronic device 3000 may identify the shape of the ROI based on at least one of ROI key points and an ROI heat map.

In an embodiment, algorithms suitable for the electronic device 3000 removing 3D distortion may vary depending on the shape of the ROI. For example, when the shape of the ROI is included in a structured design, it may be suitable to infer 3D information based on the ROI, and when the shape of the ROI is an unstructured design, it may be suitable to infer 3D information based on a shape of the object itself. Thus, the electronic device 3000 may identify whether the identified shape of the ROI is included in a structured design. The structured design may be a design prestored in the electronic device 3000, such as a square, a rectangle, or the like, but is not limited thereto. When the shape of the ROI is included in a structured design, the electronic device 3000 may perform operation S1320, and when the shape of the ROI is included in an unstructured design, the electronic device 3000 may perform operation S1330.

In operation S1320, the electronic device 3000 infers 3D parameters based on the shape of the ROI. Based on the shape of the ROI being included in the structured design, the electronic device 3000 may obtain ROI key points representing an outline of the ROI. The ROI key points may have already been detected in the previous operation (operation S320) of the electronic device 3000. Alternatively, when only an ROI heat map has been detected during the previous operation (operation S320), the electronic device 3000 may separately detect the ROI key points. Operation S1320 may replace operations S330 and S340 of FIG. 3. Accordingly, operation S350 of FIG. 3 may be performed after operation S1320. The operation in which the electronic device 3000 infers object 3D parameters by using the ROI key points has been described above with reference to FIGS. 11A to 11D, and therefore, a repeated description thereof is omitted for brevity.

In operation S1330, the electronic device 3000 infers 3D parameters based on a shape of the object. The electronic device 3000 may detect object key points based on the shape of the ROI being an unstructured design. Operation S1330 may replace operations S330 and S340 of FIG. 3. Accordingly, operation S350 of FIG. 3 may be performed after operation S1330. The operation in which the electronic device 3000 infers object 3D parameters by using the object key points has been described above with reference to FIGS. 8A to 9C, and therefore, a repeated description thereof is omitted for brevity.

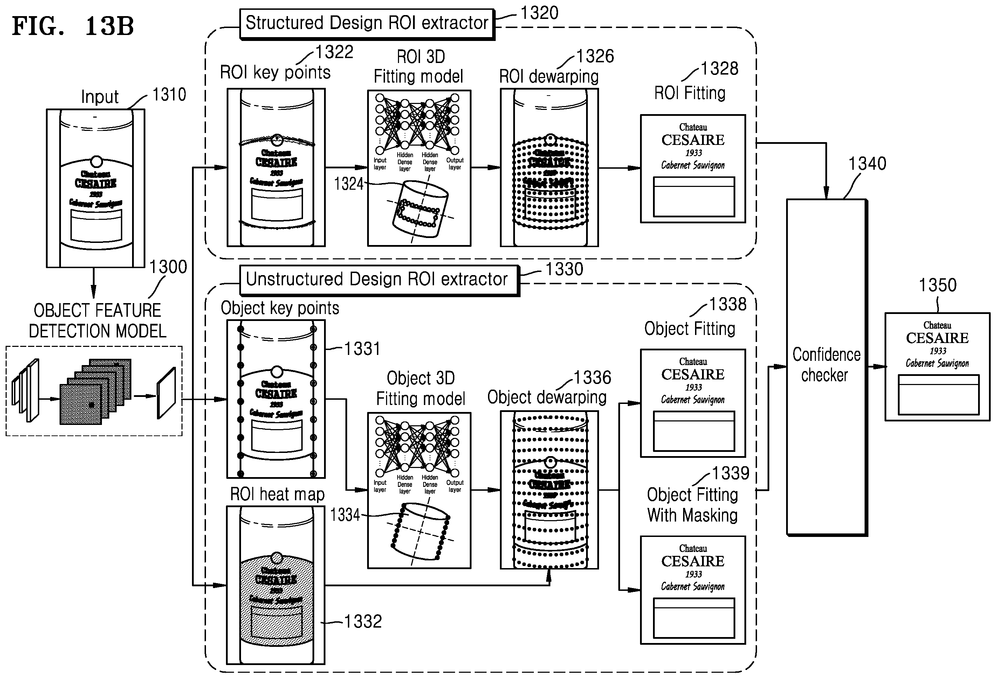

FIG. 13B is a diagram illustrating an operation in which an electronic device processes an image based on a shape of an ROI, according to an embodiment of the present disclosure.

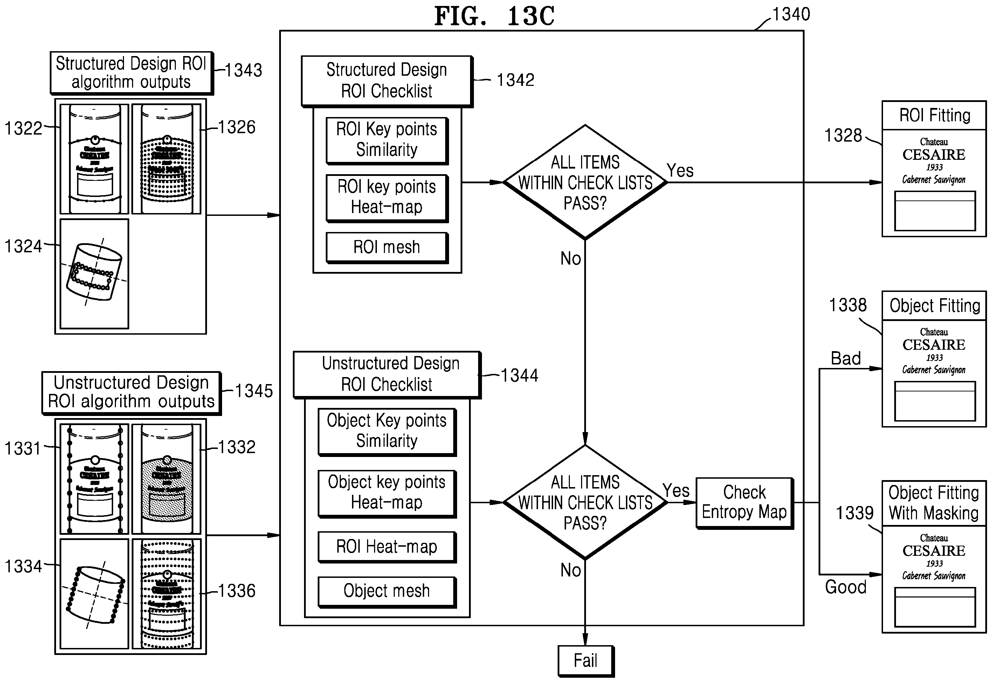

In describing FIGS. 13B and 13C, a specific example is provided in which an object is a wine bottle, an ROI is a wine label, and a structured shape of the ROI is set to a rectangle. However, the specific example is only used for the convenience of describing generalizable concepts, and is not intended to limit any specific embodiment.

Referring to FIG. 13B, the electronic device 3000 may input an object image 1310 to an object feature detection model 1300. Because the object feature detection model 1300 has been described above with reference to FIG. 12, a repeated description thereof is omitted. The object feature detection model 1300 may output ROI key points 1322, object key points 1331, and an ROI heat map 1332. The ROI key points 1322 may be provided to an ROI extractor 1320 (hereinafter, a first ROI extractor) for a structured design (e.g., a rectangle). The object key points 1331 and the ROI heat map 1332 may be provided to an ROI extractor 1330 (hereinafter, a second ROI extractor) for an unstructured design (e.g., non-rectangle).

The first ROI extractor 1320 dewarps an ROI based on the ROI key points 1322. The first ROI extractor 1320 may include an ROI 3D fitting model. The ROI 3D fitting model may infer 3D parameters 1324 related to the ROI and the object. Because this has been described above with reference to FIGS. 11A to 11D, a repeated description thereof is omitted for brevity. Hereinafter, an operation of the first ROI extractor 1320 may be referred to as an "ROI shape-based distortion removal algorithm."

The first ROI extractor 1320 may obtain 3D information of the ROI (e.g., an ROI mesh 1326) based on the inferred 3D parameters, and dewarp the ROI, thereby generating a first distortion-removed image 1328 representing the dewarped ROI.

The second ROI extractor 1330 dewarps the ROI based on at least one of the object key points 1331 and the ROI heat map 1332. The second ROI extractor 1330 may include an object 3D fitting model. The object 3D fitting model may infer 3D parameters 1334 related to the object. Because this has been described above with reference to FIGS. 8A to 9C, a repeated description thereof is omitted for brevity. Hereinafter, an operation of the second ROI extractor 1330 may be referred to as an "object shape-based distortion removal algorithm."

The second ROI extractor 1330 may obtain 3D information of the object (e.g., an object mesh 1336) based on the inferred 3D parameters, and dewarp the object, thereby generating a distortion-removed image representing a dewarped ROI on the surface of the object. For example, after performing the dewarping, the second ROI extractor 1330 may generate a second distortion-removed image 1338 representing the dewarped ROI by cropping out a region corresponding to the ROI. Alternatively, after performing the dewarping, the second ROI extractor 1330 may generate a third distortion-removed image 1339 representing the dewarped ROI by cropping out the ROI based on the ROI heat map 1332 or by cropping out the ROI and removing a background.

In an embodiment, the electronic device 3000 may determine a final distortion-removed image 1350 by using a confidence checker 1340. For example, among the first distortion-removed image 1328, the second distortion-removed image 1338, and the third distortion-removed image 1339, the third distortion-removed image 1339 may be determined as the final distortion-removed image 1350 by the confidence checker 1340. The operation of the confidence checker 1340 is further described with reference to FIG. 13C.

FIG. 13C is a diagram schematically illustrating an operation of a confidence checker, according to an embodiment of the present disclosure.

In an embodiment, the confidence checker 1340 may optimize a process of removing 3D distortion in an image by checking items in a checklist. The purpose of the confidence checker 1340 is to ensure that a distortion removal algorithm of the first ROI extractor 1320 that operates based on a shape of an ROI is applied when the shape of the ROI is a structured design and a distortion removal algorithm of the second ROI extractor 1330 that operates based on a shape of an object is applied when the shape of the ROI is an unstructured design. The confidence checker 1340 may determine a first distortion-removed image by first checking a structured design ROI checklist 1342, and if any of the items in the checklist is not satisfied, checking an unstructured design ROI checklist 1344.

The description with respect to FIG. 13C is provided in conjunction with FIG. 13B. Referring to FIG. 13B, the confidence checker 1340 is illustrated as operating in a final stage of an overall algorithm pipeline for removing image distortion, but this is due to the visualization of the algorithm, and the confidence checker 1340 may review the confidence of intermediate outputs throughout the overall stages of the algorithm pipeline.

The first ROI extractor 1320 uses an algorithm for an ROI of a structured design. Intermediate outputs 1343 of the first ROI extractor 1320 may include the ROI key points 1322, the ROI shape-based 3D parameters 1324, the ROI mesh 1326, etc. In this case, the confidence checker 1340 may evaluate confidence of outputs when each output is obtained. For example, the confidence checker 1340 may check, based on the structured design ROI checklist 1342, whether ROI key points similarity is normal, whether an ROI key points heat-map is normal, whether an ROI mesh is normal, etc. When all items in the structured design the ROI checklist 1342 pass as a result of the checking by the confidence checker 1340, the first distortion-removed image 1328 may be determined to be the final distortion-removed image. The first distortion-removed image may refer to an image obtained by applying ROI 3D fitting.

The second ROI extractor 1330 uses an algorithm for an ROI of an unstructured design. Intermediate outputs 1345 of the second ROI extractor 1330 may include the object key points 1331, the ROI key heat map 1332, the object shape-based 3D parameters 1334, the object mesh 1336, etc. In this case, the confidence checker 1340 may evaluate confidence of outputs when each output is obtained. For example, the confidence checker 1340 may check, based on the unstructured design ROI checklist 1344, whether object key points similarity is normal, whether object key points heat-map is normal, whether an ROI heat-map is normal, whether an object mesh is normal, etc. When all items in the unstructured design ROI checklist 1344 pass as a result of the checking by the confidence checker 1340, the confidence checker 1340 may determine a final distortion-removed image by checking an entropy map. In this case, when a result of the entropy check is 'bad', the second distortion-removed image 1338 may be determined to be the final distortion-removed image. The second distortion-removed image 1338 may refer to an image obtained by applying object 3D fitting. In other words, when the result of the entropy check is 'bad', the electronic device 3000 may roughly extract an ROI instead of precisely extracting the ROI. For example, the second distortion-removed image 1338 may be an image roughly cropped based on a bounding box region including the ROI heat map 1332.

In addition, when a result of the entropy check is 'good', the third distortion-removed image 1339 may be determined to be the final distortion-removed image. The third distortion-removed image may refer to an image obtained by applying object 3D fitting and with the ROI cropped and/or the background removed based on mask information of the ROI heat map 1332. In other words, when the result of the entropy check is 'good', the electronic device 3000 may precisely extract the ROI. For example, ROI cropping and/or background removal may be performed based on the ROI heat map 1332.

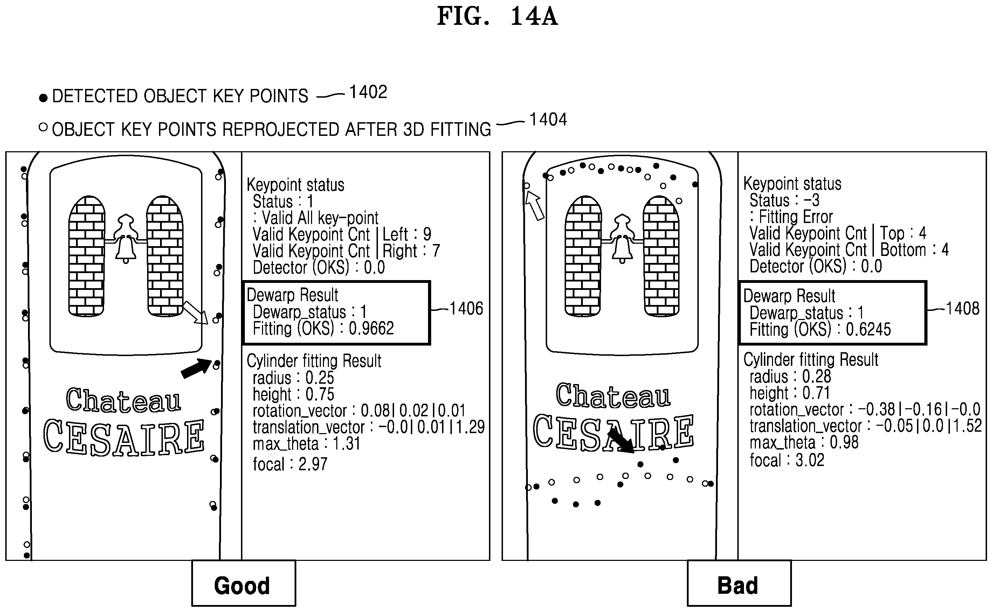

Specific operations in which the electronic device 3000 evaluates confidence of outputs by using the confidence checker 1340, according to an embodiment, are further described with reference to FIGS. 14A to 14E.

FIG. 14A is a diagram illustrating a specific operation of a confidence checker, according to an embodiment of the present disclosure.

In an embodiment, the electronic device 3000 may check whether similarity of key points is normal. The electronic device 3000 may calculate object key points similarity (or OKS). The object key points similarity refers to the similarity between detected object key points 1402 and object key points 1404 reprojected after 3D fitting. The detected object key points 1402 may be obtained from an object detection model and/or an object feature extraction model. The object key points 1404 reprojected after 3D fitting may be obtained by rendering a 3D object based on 3D parameters obtained after 3D fitting and setting key points of the rendered 3D object.

Based on the object key points similarity being greater than or equal to a preset threshold, the electronic device 3000 may determine that the key points similarity is normal. The preset threshold may be, for example, 0.9, but is not limited thereto. Specifically, referring to a first check result 1406, the electronic device 3000 may determine that a result of checking the object key points similarity is 'good' because the object key points similarity is 0.9662. In addition, referring to a second check result 1408, the electronic device 3000 may determine that a result of checking the object key points similarity is 'bad' because the object key points similarity is 0.6245.

Moreover, although the electronic device 3000 calculating the object key points similarity is described with reference to FIG. 14A, the description may be equally applied to calculating ROI key points similarity.

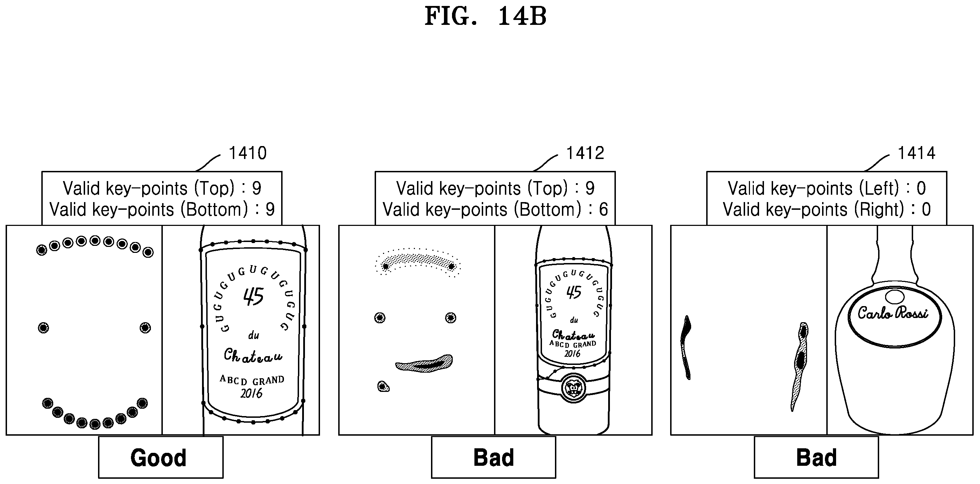

FIG. 14B is a diagram illustrating a specific operation of a confidence checker, according to an embodiment of the present disclosure.

In an embodiment, the electronic device 3000 may check whether a heat map of key points (object key points or ROI key points) is normal. The electronic device 3000 may obtain a heat map of detected key points. The electronic device 3000 may determine that a key point is a normal key point when an intensity of a pixel in a heat map corresponding to a position of a key point is greater than or equal to a preset first threshold. The preset first threshold may be, for example, 0.5, but is not limited thereto. In addition, the electronic device 3000 may determine that the heat map of key points is normal when the number of normal key points is greater than a second threshold preset at the top/bottom or left/right. The preset second threshold may be, for example, 7, but is not limited thereto.

A first check result 1410 indicates a result of checking whether a heat map of key points is normal for ROI key points. Referring to the first check result 1410, as a result of checking normal key points based on whether a pixel intensity is greater than or equal to the first threshold (e.g., 0.5), it may be determined that there are nine valid key points at the top of the ROI and nine valid key points at the bottom of the ROI. In this case, because the number of normal key points at the top/bottom of the ROI is greater than the preset second threshold of 7, the electronic device 3000 may determine that the result of checking the key points of the heat map is 'good'.

A second check result 1412 indicates another result of checking whether the heat map of the key points is normal for the ROI key points. Referring to the second check result 1412, as a result of checking normal key points based on whether a pixel intensity is greater than or equal to the first threshold (e.g., 0.5), it may be determined that there are nine valid key points at the top of the ROI and six valid key points at the bottom of the ROI. In this case, the number of normal key points at the top of the ROI is 9, which is greater than the preset second threshold of 7, but the number of normal key points at the bottom of the ROI is 6, which is less than the preset threshold of 7. Thus, the electronic device 3000 may determine that the result of checking the key points of the heat map is 'bad'.

A third check result 1414 indicates a result of checking whether a heat map of key points is normal for object key points. Referring to the third check result 1414, as a result of checking normal key points based on whether a pixel intensity is greater than or equal to the first threshold (e.g., 0.5), there are no valid key points. Thus, the electronic device 3000 may determine that the result of checking the key points of the heat map is 'bad'.

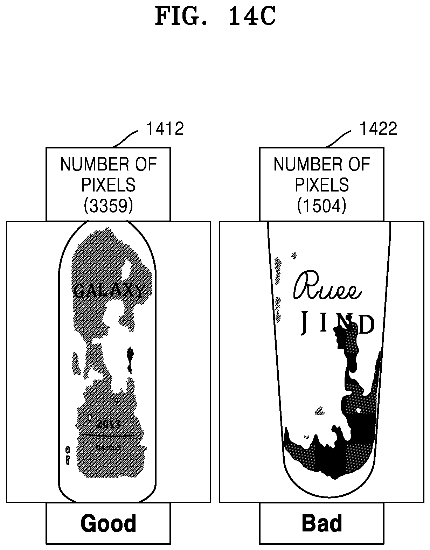

FIG. 14C is a diagram illustrating a specific operation of a confidence checker, according to an embodiment of the present disclosure.

In an embodiment, the electronic device 3000 may check whether an ROI heat map is normal. The electronic device 3000 may obtain an ROI heat map. The electronic device 3000 may determine that the ROI heat map is normal when, for pixels in the heat map from which an ROI is detected, pixel intensities are greater than or equal to a preset first threshold, and the number of pixels with an intensity greater than or equal to the first threshold is greater than or equal to a second threshold. For example, the electronic device 3000 may determine that the ROI heat map is normal when, for the pixels in the heat map, there are 3000 or more pixels having pixel intensities of 0.35 or higher, but is not limited thereto.

In a specific example, referring to a first heat map check result 1420, the electronic device 3000 may determine that a result of checking an ROI heat map is 'good' because there are 3359 pixels with pixel intensities of 0.35 or higher, which is more than 3000. In addition, referring to a second heat map check result 1422, the electronic device 3000 may determine that a result of checking an ROI heat map is 'bad' because there are 1504 pixels with pixel intensities of 0.35 or higher, which are less than 3000.

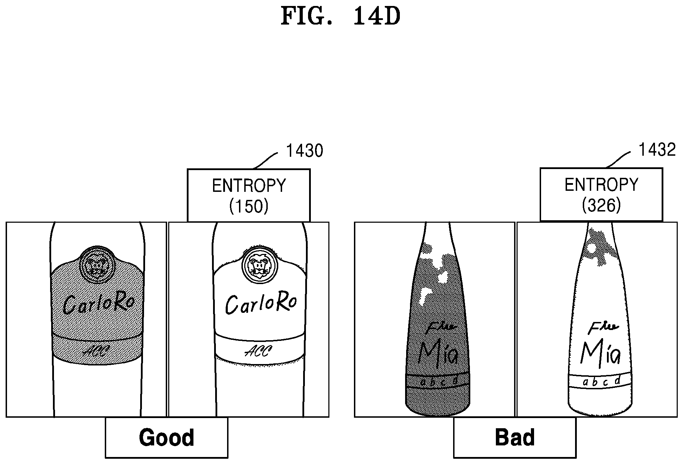

FIG. 14D is a diagram illustrating a specific operation of a confidence checker, according to an embodiment of the present disclosure.

In an embodiment, the electronic device 3000 may check whether an entropy check result is normal. The electronic device 3000 may generate an entropy map based on an ROI heat map. The electronic device 3000 may generate an entropy map by calculating entropy per pixel using the ROI heat map. The electronic device 3000 may determine that the entropy check result is normal when the sum of all entropy values is less than or equal to a preset threshold based on the entropy map. The preset threshold for the sum of entropy values may be, for example, 200, but is not limited thereto.

In a specific example, referring to a first entropy map check result 1430, the electronic device 3000 may determine that the entropy check result is 'good' because the calculated total entropy is 150, which is less than 200. Also, referring to a second entropy map check result 1432, the electronic device 3000 may determine that the entropy check result is 'bad' because the total entropy is 326, which is greater than 200.

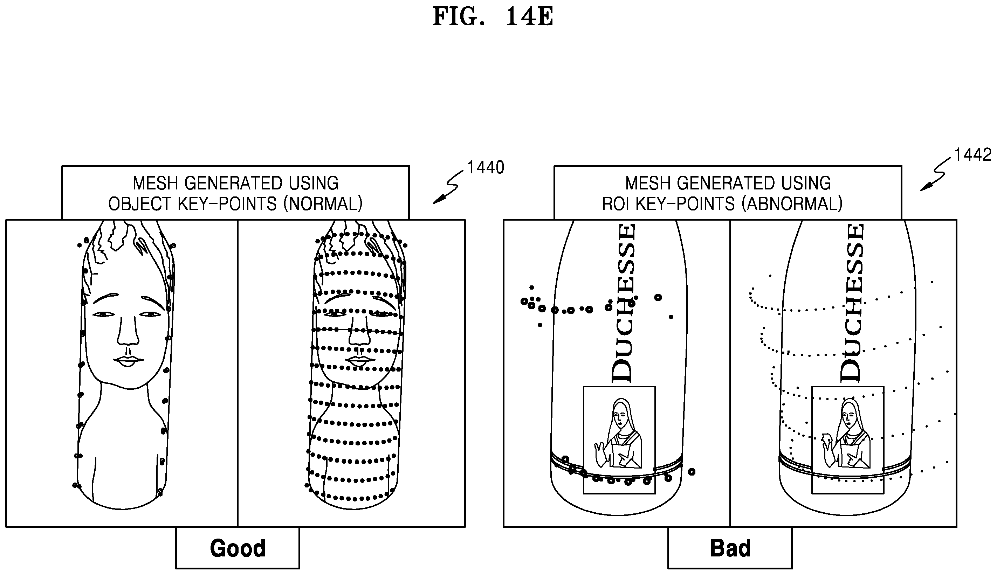

FIG. 14E is a diagram illustrating a specific operation of a confidence checker, according to an embodiment of the present disclosure.

In an embodiment, the electronic device 3000 may check whether an object mesh or an ROI mesh is normal. The electronic device 3000 may generate a mesh representing an object/ROI based on 3D parameters inferred as a result of 3D fitting, and check whether mesh points overlap the object within a preset range.

For example, referring to a first check result 1440, object key points are detected normally. As a result of the electronic device 3000 inferring 3D parameters based on the object key points and generating an object mesh, the electronic device 3000 may determine that a result of checking the object mesh is 'good' because points in the generated mesh match the object.

For example, referring to a second check result 1442, ROI key points are detected abnormally. As a result of the electronic device 3000 inferring 3D parameters based on the ROI key points and generating an ROI mesh, the electronic device 3000 may determine that a result of checking the ROI mesh is 'bad' because points in the generated mesh do not match an object.

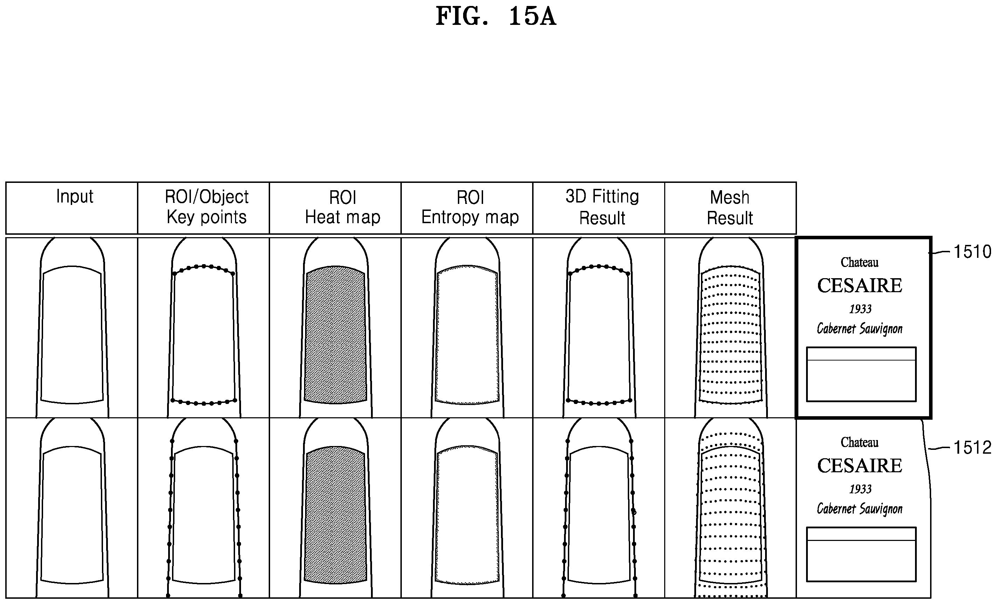

FIG. 15A is a diagram illustrating an operation in which an electronic device selects a final distortion-removed image by using a confidence checker, according to an embodiment of the present disclosure.

In an embodiment, the electronic device 3000 may check confidence of intermediate outputs in processes of obtaining distortion-removed images, and obtain a final distortion-removed image. The intermediate outputs may mean ROI/object key points, an ROI heat map, an ROI entropy map, a 3D fitting result, a mesh result, etc.

Checking of the confidence of the intermediate outputs may be performed by a confidence checker. The purpose of the confidence checker is to ensure that a distortion removal algorithm operating based on a shape of an ROI is applied when the shape of the ROI is a structured design and a distortion removal algorithm operating based on a shape of an object is applied when the shape of the ROI is an unstructured design.

Referring to FIG. 15A, a shape of an ROI of an object is included in a structured design. In other words, because a label of a wine is rectangular, the confidence checker causes the distortion removal algorithm that operates based on the shape of the ROI to be applied first. Accordingly, among an ROI-based distortion-removed image 1510 and an object-based distortion-removed image 1512, the ROI-based distortion-removed image 1510 may be selected as the final distortion-removed image. However, the selection of the ROI-based distortion-removed image 1510 as the final distortion-removed image presupposes that all confidence checks in the ROI-based distortion removal algorithm process have been passed by the conference checker. In this case, this means that the ROI shape-based distortion removal algorithm operates normally because the shape of the ROI of the object is included in the structured design, so the ROI-based distortion-removed image 1510 is selected as the final distortion-removed image.

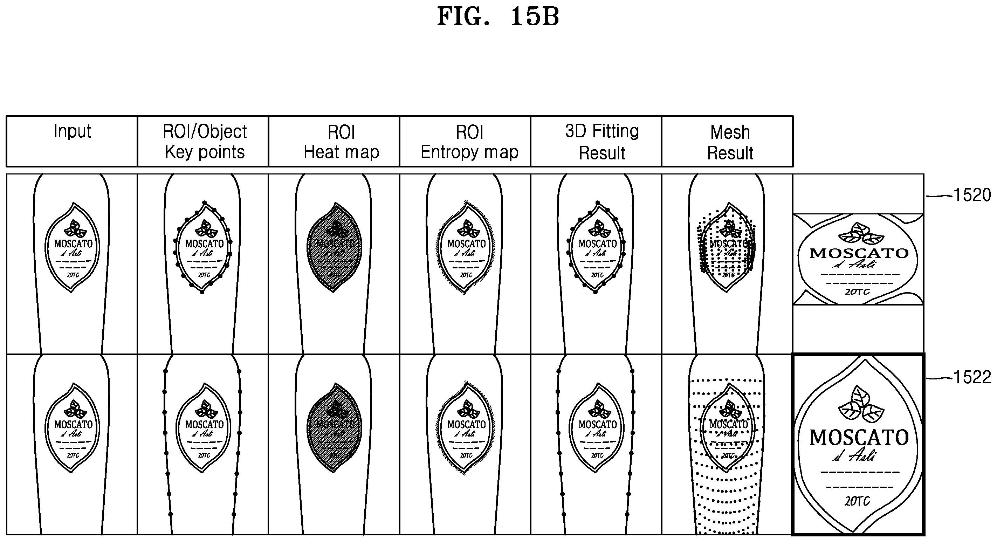

FIG. 15B is a diagram illustrating an operation in which an electronic device selects a final distortion-removed image by using a confidence checker, according to an embodiment of the present disclosure.

Referring to FIG. 15B, a shape of an ROI of an object is an unstructured design. In other words, because a label of a wine is not rectangular, the object shape-based distortion removal algorithm may be more accurate. Therefore, the confidence checker causes the object shape-based distortion removal algorithm to be applied. Accordingly, among an ROI-based distortion-removed image 1520 and an object-based distortion-removed image 1522, the object-based distortion-removed image 1522 may be selected as the final distortion-removed image. However, the selection of the object-based distortion-removed image 1522 as the final distortion-removed image presupposes that confidence checks in the ROI-based distortion removal algorithm process have not been passed by the conference checker. In this case, the shape of the ROI is included in an unstructured design, so the ROI shape-based distortion removal algorithm may not work normally. That is, 3D distortion may be incompletely removed, as illustrated in the ROI-based distortion-removed image 1520. In this case, this means that the object shape-based distortion removal algorithm works normally because the shape of the ROI of the object is included in the unstructured design, so the ROI-based distortion-removed image 1510 is selected as the final distortion-removed image.

FIG. 16 is a diagram illustrating an operation in which an electronic device identifies a 3D shape of an object, according to an embodiment of the present disclosure.

Operation S1610 may be performed before operation S330 of FIG. 3 is performed.

In operation S1610, the electronic device 3000 identifies a 3D shape type of the object.

The electronic device 3000 may identify a 3D shape type of the object in the image, based on the image of the object obtained via the camera. In this case, an object 3D shape classification model, which is an Al model for identifying a 3D shape type of an object, may be used.

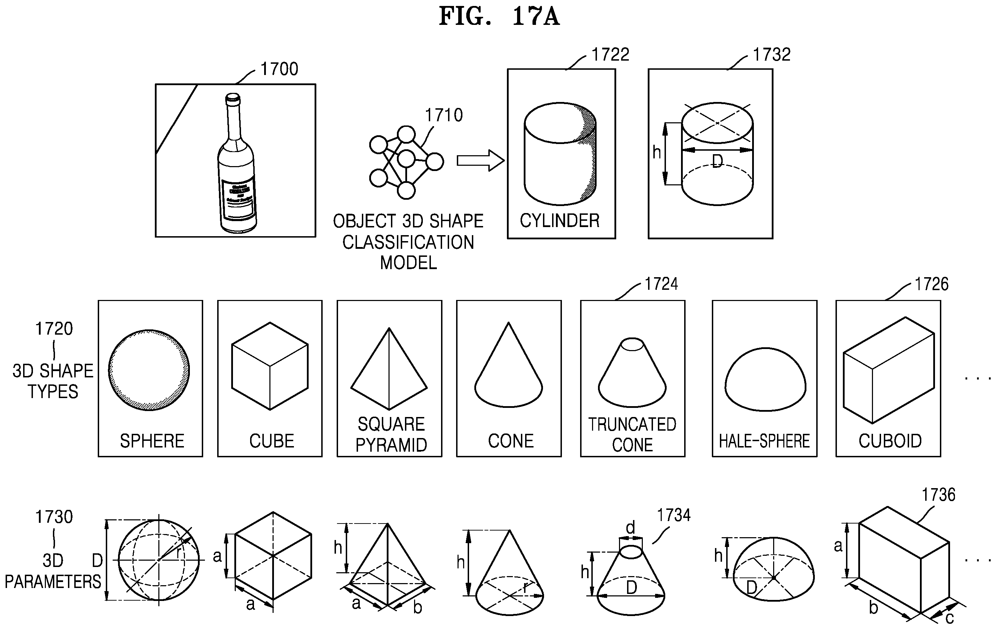

The object 3D shape classification model may be an Al model trained to, when taking an image as input, output data related to a 3D shape type of an object in the image. For example, the electronic device 3000 may classify the 3D shape type (e.g., a sphere, a cube, a cylinder, etc.) of the object included in the image by using the 3D object shape classification model. An operation in which the electronic device 3000 classifies the 3D shape type of the object by using the 3D object shape classification model is further described in the description with respect to FIG. 17A.

In operation S1620, the electronic device 3000 detects object key points representing an outline of the object.

In an embodiment, the electronic device 3000 may detect key points of the object by using an object detection model that is an Al model.

In an embodiment, the object detection model may be a model that takes a 3D shape type of an object as input data. For example, the object detection model may be an Al model trained to, when taking as input a 3D shape type of an object and an image including the object, output key points representing an outline of the object in the image. Specifically, the object detection model may take, as input, a 3D shape type "cylinder" of an object and an "image" including the object having a cylinder shape, and output key points representing the outline of the cylinder shape. As a further example, the object detection model may take, as input, 3D shape types, such as a sphere, a cube, a pyramid, a cone, a truncated cone, a half sphere, and a cuboid, etc., and output key points representing an outline of each 3D shape in an image.

In an embodiment, the object detection model may be a model corresponding to the 3D shape type of the object. For example, when the identified 3D shape type of the object is "cylinder", an "object detection model for cylinder" trained to detect key points of a cylinder-shaped object may be used. Alternatively, when the identified 3D shape type of the object is "cuboid", an "object detection model for cuboid" trained to detect key points of a cuboid-shaped object may be used.

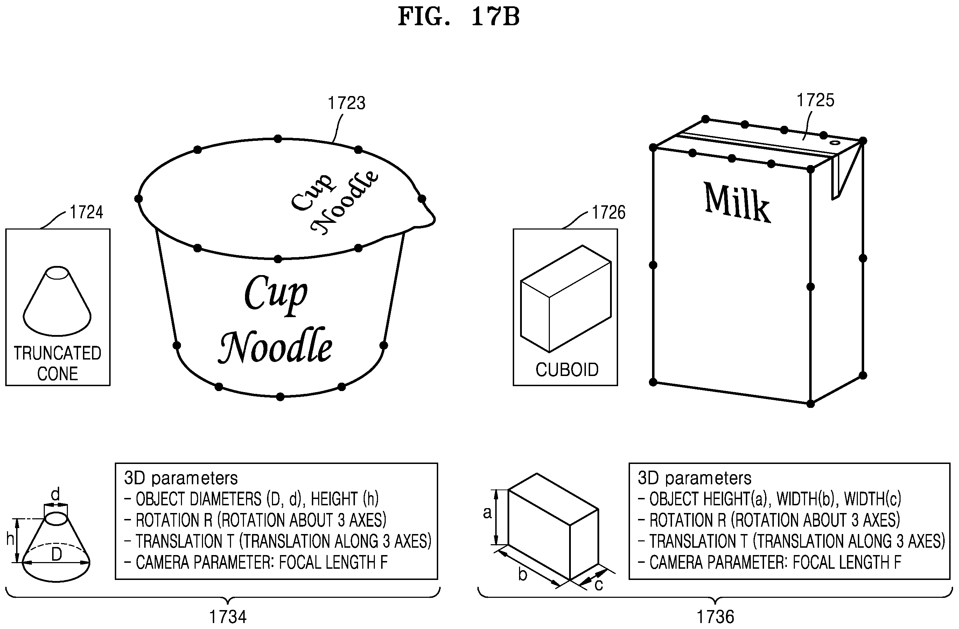

In other words, once the electronic device 3000 identifies the 3D shape type of the object, the electronic device 3000 may use information about the 3D shape type of the object in detecting key points of the object. The electronic device 3000 detecting object key points based on a 3D shape type of an object is further described with reference to FIG. 17B.

In operation S1630, the electronic device 3000 infers values of 3D parameters representing an original 3D shape of the object, based on the 3D shape type of the object and the object key points.

In an embodiment, features of the 3D parameters are determined to correspond to the 3D shape of the object. That is, features of 3D parameters corresponding to each 3D shape type may be different. For example, if a 3D shape is a cylinder type, 3D parameters corresponding to the cylinder type may include a radius, but if the 3D shape is a cube type, 3D parameters corresponding to the cube type may not include a radius.

Specifically, features of the 3D parameters corresponding to the cylinder type may correspond to at least one of, for example, 3D rotation, 3D translation, a dimension, and 3D scaling of the object, and a camera parameter. In addition, the camera parameter is an intrinsic parameter of the camera, and may include, but is not limited to, a focal length, a principal point, an aspect ratio, a skew coefficient, etc.

Determining 3D parameters to correspond to the 3D shape of the object is further described with reference to FIG. 17B. In addition, the electronic device 3000 inferring the values of the 3D parameters representing the original 3D shape of the object may be implemented by applying the 3D fitting operation described above in the same/similar manner depending on the 3D shape type of the object. Because the specific operations of the 3D fitting has been described above, a repeated description thereof is omitted.

In addition, while FIG. 16 describes the use of the 3D shape as an example of an object shape-based distortion removal algorithm using object key points, the identified 3D shape may also be equally applied to an ROI shape-based distortion removal algorithm using ROI key points.

FIG. 17A is a diagram illustrating an operation in which an electronic device classifies a 3D shape of an object, according to an embodiment of the present disclosure.

In an embodiment, the electronic device 3000 may identify a 3D shape type 1720 of an object by using an object 3D shape classification model 1710.

The electronic device 3000 may identify the 3D shape type 1720 of the object via neural network operations of the object 3D shape classification model 1710 that takes an image 1700 of the object as input and extracts features.

The object 3D shape classification model 1710 may be trained based on a training dataset consisting of various images including objects having 3D shapes. Object images in the training dataset of the object 3D shape classification model 1710 may be annotated with ground-truth labels of the 3D shape types 1720 of objects. The 3D shape types 1720 of objects may include, for example, but are not limited to, a sphere, a cube, a pyramid, a cone, a truncated cone 1724, a half sphere, a cuboid 1726, etc.

In an embodiment, the electronic device 3000 may obtain, based on the identified 3D shape type 1720, 3D parameters 1730 corresponding to the 3D shape type 1720 of the object. For example, when the 3D shape type 1720 is a 'sphere', the 3D parameters 1730 of the 'sphere' may be obtained, and when the 3D shape type 1720 is a 'cube', the 3D parameters 1730 of the 'cube' may be obtained. Features constituting the 3D parameters 1730 may be different for each 3D shape type 1720. For example, the 3D parameters 1730 of the 'sphere' may include features such as a radius and/or a diameter, and the 3D parameters 1730 of the 'cube' may include features such as a width, a length, and a height.

In addition, while the 3D parameters 1730 illustrated in FIG. 17A include only geometric features such as width, length, radius, depth, etc. for convenience of description, the 3D parameters 1730 are not limited thereto. The 3D parameters 1730 may further include rotation information of the object in space, translation information of the object in space, a parameter (e.g., a focal length) of a camera capturing an image of the object, 3D information about an ROI of the object (e.g., a width, a length, a curvature, etc. of the ROI), etc. That is, the 3D parameters 1730 illustrated are only an example for visual understanding, and the 3D parameters 1730 may further include any type of features that may be utilized to estimate 3D information of the object in the image in addition to the examples described above, and some features may be excluded from the examples described above.

Also, in a specific example, according to an embodiment, the electronic device 3000 may identify a cylinder type 1722, which is the 3D shape type 1720 of the object in the image 1700, by applying the image 1700 to the object 3D shape classification model 1710. The electronic device 3000 may obtain the 3D parameters 1732 of a cylinder corresponding to the cylinder type 1722. The 3D parameters 1732 of the cylinder may include, for example, but are not limited to, a diameter D of the cylinder, a radius r of the cylinder, rotation information R of the cylinder in 3D space, translation information T of the cylinder in 3D space, a height h of the cylinder, focal length information F of the camera, etc.

Moreover, while the drawings of the present disclosure illustrate an example in which the object in the image 1700 is 'wine' and the ROI is 'wine label', the present disclosure is not limited thereto.

For example, while it has been described in the present disclosure that the 3D shape type 1720 of the wine bottle is identified as the cylinder type 1722, depending on the training and tuning of the object 3D shape classification model 1710, the wine bottle may be identified as a bottle type, and 3D parameters obtained accordingly may also be 3D parameters corresponding to the bottle type.

In another example, objects in the image may be objects of different 3D shape types, such as a sphere, a cone, and a cuboid'. In this case, the electronic device 3000 may identify the 3D shape type 1720 for each object and obtain the 3D parameters 1730 thereof.

FIG. 17B is a diagram illustrating object key points determined according to a 3D shape type of an object and 3D parameters corresponding to the 3D shape type of the object.

As described with reference to FIG. 17A, the 3D parameters 1730 may correspond to each shape type 1720 of an object. In addition, object key points representing an outline of the object may be different for each 3D shape type 1720 of the object.

For example, for a cup noodle 1723 that is an object illustrated in FIG. 17B, a 3D shape type of the object may be identified as a truncated cone 1724 (or a cup shape). In this case, 3D parameters 1734 of the truncated cone are obtained as 3D parameters corresponding to the 3D shape type (the truncated cone 1724). The 3D parameters 1734 of the truncated cone may include, but are not limited to, a diameter D of a bottom of the object, a diameter d of a top of the object, rotation information R of the truncated cone 1724 in 3D space, translation information T of the truncated cone 1724 in 3D space, focal length information F of the camera, etc. In this case, the electronic device 3000 may infer values of the 3D parameters representing an original 3D shape of the object by performing a 3D fitting operation based on the truncated cone 1724, which is the 3D shape type of the object, and key points representing an outline of the object having the truncated cone shape. The operation in which the electronic device 3000 obtains 3D information of the object through 3D fitting has already been described with reference to the previous drawings by using the example of the case where the 3D shape of the object is the cylinder 1722, so a repeated description thereof is omitted.

Furthermore, in the case of a carton of milk 1725 that is a product illustrated in FIG. 17B, a 3D shape type of the object may be identified as a rectangular prism 1726. In this case, 3D parameters 1736 of a rectangular prism is obtained as 3D parameters corresponding to the 3D shape type (the rectangular prism 1726). The 3D parameters 1736 of the rectangular prism may include, but are not limited to, height a, width b, length c, rotation information R of the rectangular prism 1726 in 3D space, translation information T of the rectangular prism 1726 in 3D space, focal length information F of the camera, etc. In this case, the electronic device 3000 may infer values of the 3D parameters representing an original 3D shape of the object by performing a 3D fitting operation based on the rectangular prism 1726, which is the 3D shape type of the object, and key points representing an outline of the object having a rectangular prism shape. The operation in which the electronic device 3000 obtains 3D information of the object through 3D fitting has already been described with reference to the previous drawings by using the example of the case where the 3D shape of the object is the cylinder 1722, so a repeated description thereof is omitted.

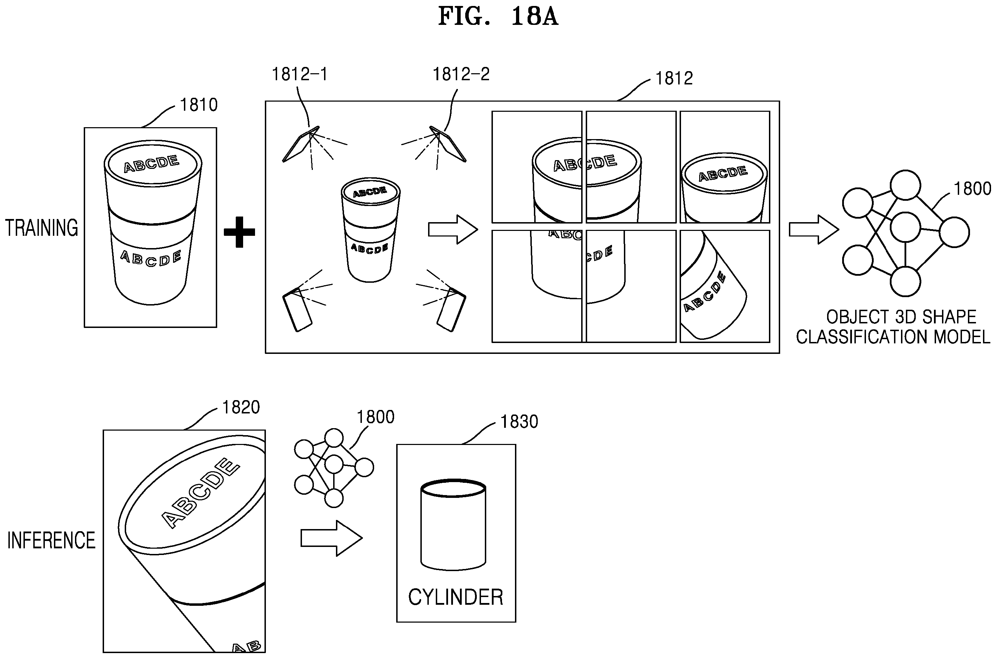

FIG. 18A is a diagram illustrating an operation in which an electronic device trains an object 3D shape classification model, according to an embodiment of the present disclosure.

In an embodiment, the electronic device 3000 may train an object 3D shape classification model 1800. The electronic device 3000 may train the object 3D shape classification model 1800 by using a training dataset consisting of various images including a 3D object. The training dataset may include training image(s) 1810 including an entire 3D shape of the object.

In an embodiment, the electronic device 3000 may use training images 1812 including portions of the object having the 3D shape to improve inference performance of the object 3D shape classification model 1800. The training images 1812 including the portions of the object having the 3D shape may be obtained by capturing images of the entire or portions of the object from various angles and distances. For example, an image captured of the entire or a portion of the object in a first direction 1812-1 may be obtained, and an image captured of the entire or a portion of the object in a second direction 1812-2 may be obtained. As in the examples described above, images captured of the entire or portions of the object from all possible directions in which the object may be captured may be included in the training images 1812 and used as training data.

In some embodiments, the training images 1812 including portions of the 3D shape of the object may be already included in the training dataset. In some embodiments, the electronic device 3000 may receive the training images 1812 including portions of the 3D shape of the object from an external device (e.g., a server, etc.). In some embodiments, the electronic device 3000 may obtain the training images 1812 including portions of the object having the 3D shape by using the camera. In this case, to obtain training data, the electronic device 3000 may provide the user with a graphical interface for guiding the user to capture an image of a portion of the object.

According to an embodiment, the electronic device 3000 may infer a 3D shape of an object by using the object 3D shape classification model trained using the training image(s) 1810 including the entire object having the 3D shape and the training images 1812 including portions of the object having the 3D shape. For example, even when only an input image 1820 obtained by capturing an image of only a portion of an object is input, the electronic device 3000 may infer that a 3D shape type of the object in the input image 1820 is a cylinder 1830.

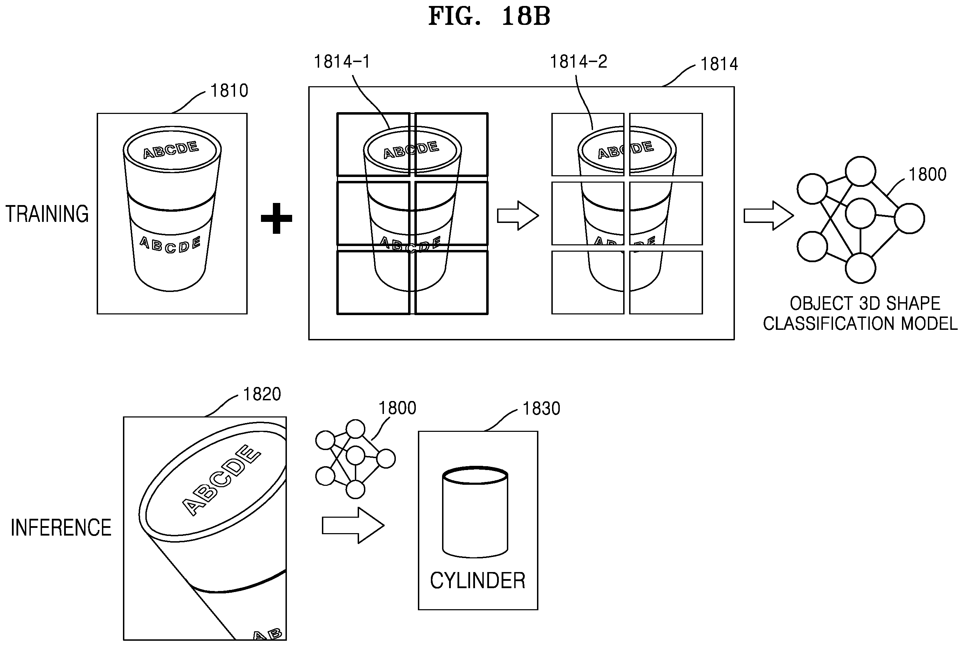

FIG. 18B is a diagram illustrating an operation in which an electronic device trains an object 3D shape classification model, according to an embodiment of the present disclosure.

Referring to FIG. 18B, the electronic device 3000 may generate training data for training the object 3D shape classification model 1800.

In an embodiment, a training dataset may include training image(s )1810 including the entire 3D shape of the object. The electronic device 3000 may generate training data by performing a predetermined data augmentation operation on images included in the training dataset. For example, the electronic device 3000 may generate training images 1814 including portions of the 3D shape of the object by cropping the training image(s) 1810 including the entire 3D shape of the object. In a specific example, the electronic device 3000 may augment the data by dividing the training image 1810 into 6 segment regions so that one training data is six training data. For example, when a first region 1814-1 in the training image 1810 is determined as a segment region, a cropped first image 1814-2 may be used as the training data. In addition, although only cropping is illustrated as an example in FIG. 18B, various other data augmentation techniques such as rotation and flipping may be applied.

According to an embodiment, the electronic device 3000 may infer a 3D shape of an object by using the object 3D shape classification model 1800 trained using the training image(s) 1810 including the entire 3D shape of the object and the training images 1814 including portions of the 3D shape of the object. For example, even when only an input image 1820 obtained by capturing an image of only a portion of an object is input, the electronic device 3000 may infer that a 3D shape type of the object in the input image 1820 is a cylinder 1830.

In addition, the electronic device 3000 may perform a predetermined data augmentation operation on the above-described training data and train the object 3D shape classification model 1800 by further using the augmented data, thereby improving the inference performance of the object 3D shape classification model 1800. For example, the electronic device 3000 may apply various data augmentation techniques, such as cropping, rotation, flipping, etc. to the training image(s) 1810 including the entire object having the 3D shape and the training images 1812 and 1814 including portions of the object having the 3D shape, and include the augmented data in the training dataset.

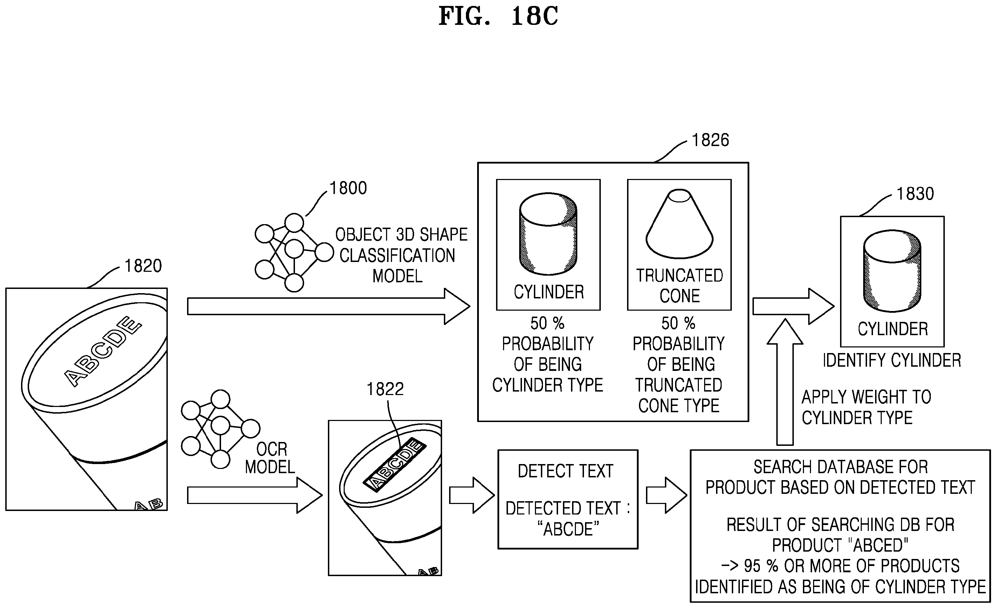

FIG. 18C is a diagram illustrating an embodiment in which an electronic device identifies a 3D shape of an object, according to an embodiment of the present disclosure.

In an embodiment, the electronic device 3000 may input, to the object 3D shape classification model 1800, an input image 1820 (hereinafter, an input image) obtained by capturing an image of only a portion of an object, and obtain an object 3D shape inference result 1826. In this case, because the input image 1820 does not include the entire shape of the object, the object 3D shape inference result 1826 may need to be supplemented. For example, the object 3D shape inference result 1826 may be a 50% probability of being a cylinder type and a 50% probability of being a truncated cone type, and a threshold for determining an object 3D shape by the object 3D shape classification model 1800 may be a probability value of 80% or greater. In this case, because neither the probability (50 %) of being a cylinder type nor the probability (50 %) of being a cone type exceeds the threshold (80 %) for determining the object 3D shape, the electronic device 3000 may perform an operation for supplementing the object 3D shape inference result 1826.

In an embodiment, based on a value of the object 3D shape inference result 1826 being less than the preset threshold, the electronic device 3000 may perform an information detection operation for supplementing the object 3D shape inference result 1826. The information detection operation may be, for example, detecting information such as a logo, an icon, text, etc. within an image, but is not limited thereto. In a more specific example, the electronic device 3000 may detect text within the input image 1820 by performing OCR on the input image 1820. In this case, the detected text may be a product name 'ABCDE'. The electronic device 3000 may search for a product within a database or via an external server based on the detected text. For example, the electronic device 3000 may search for an 'ABCDE' product within the database. The electronic device 3000 may determine a weight of a 3D shape type based on a result of searching for the product. For example, as a result of searching for the 'ABCDE' product, 95 % or more of the 'ABCDE' products distributed on the market may be identified as being of a cylinder type. In this case, the electronic device 3000 may determine to apply a weight to the cylinder type. The electronic device 3000 may apply the determined weight to the object 3D shape inference result 1826. As a result of applying the weight, a final determined 3D shape type of the object may be determined to be a cylinder 1830.

In an embodiment, the electronic device 3000 may perform an information detection operation in parallel to inputting the input image 1820 to the object 3D shape classification model 1800. For example, the electronic device 3000 may perform OCR on the input image 1820. Based on a result of the OCR performed in parallel, the electronic device 3000 may determine a weight to be applied to the object 3D shape inference result 1826.

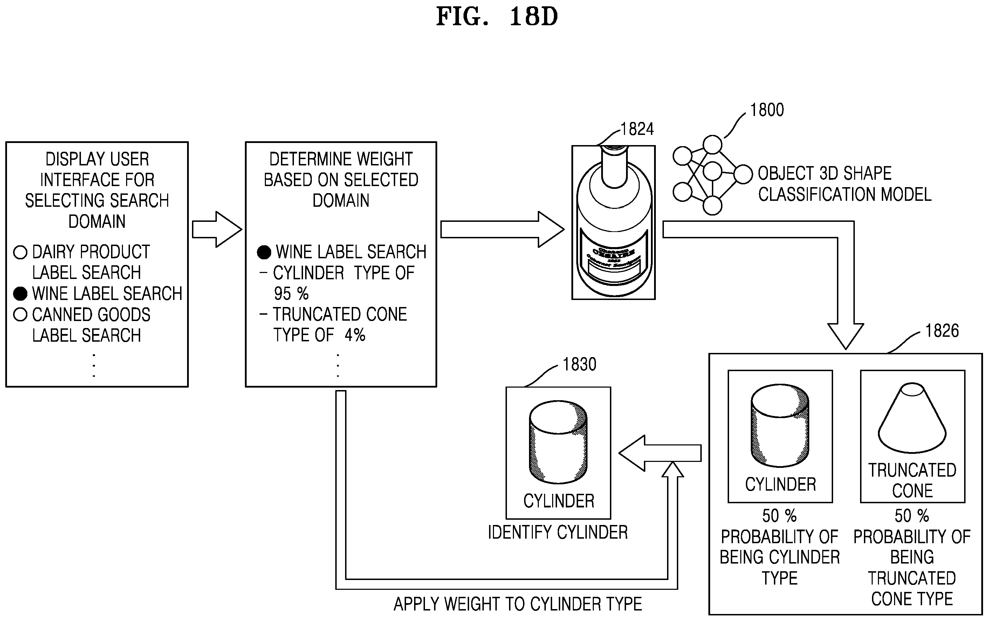

FIG. 18D is a diagram illustrating an embodiment in which an electronic device identifies a 3D shape of an object, according to an embodiment of the present disclosure.

In an embodiment, the electronic device 3000 may input an input image 1824 to the object 3D shape classification model 1800 and obtain an object 3D shape inference result 1826.

Prior to applying the input image 1824 to the object 3D shape classification model 1800, the electronic device 3000 may display a user interface for selecting an object search domain. For example, the electronic device 3000 may display selectable domains such as dairy product, wine, canned goods, etc., and receive a user input for selecting a domain.

The electronic device 3000 may determine a weight of a 3D shape type based on a user input for selecting a search domain. For example, when the user selects a wine label search, 95 % or more of wine products distributed on the market may be identified as being of a cylinder type. In this case, the electronic device 3000 may determine to apply a weight to the cylinder type. The electronic device 3000 may apply the determined weight to the object 3D shape inference result 1826. As a result of applying the weight, a final determined 3D shape type of the object may be determined to be a cylinder 1830.

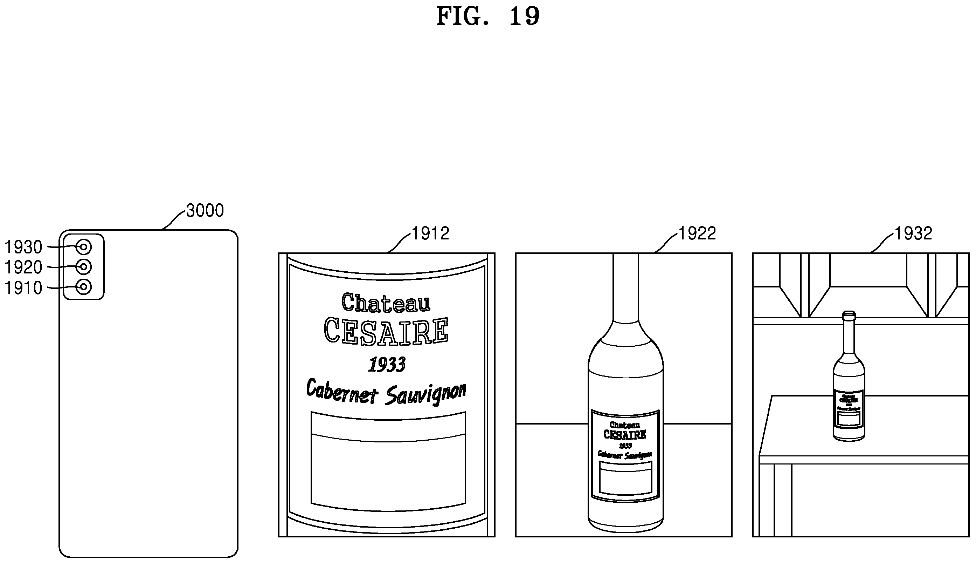

FIG. 19 is a diagram illustrating multiple cameras that may be included in an electronic device, according to an embodiment of the present disclosure.

In an embodiment, the electronic device 3000 may include multiple cameras. For example, the electronic device 3000 may include a first camera 1910, a second camera 1920, and a third camera 1930. Although the number of cameras illustrated in FIG. 19 is three, the number of cameras is not limited thereto, and the multiple cameras refer to two or more cameras.

Each camera included in the multiple cameras may have different specifications. For example, the first camera 1910 may be configured as a telephoto camera, the second camera 1920 as a wide-angle camera, and the third camera 1930 as an ultra-wide-angle camera. However, the types of cameras are not limited thereto, and may include a standard camera, etc.

The multiple cameras may each obtain images with different features. For example, a first image 1912 obtained by the first camera 1910 may be an image that includes a portion of an object by zooming in on the object and capturing the portion of the object. A second image 1922 obtained by the second camera 1920 may be an image that includes the entire object by capturing the object from a wider angle of view than the first camera 1910. A third image 1932 obtained by the third camera 1930 may be an image that includes the entire object and a wide area of a scene by capturing the object from a wider angle of view than the first camera 1910 and the second camera 1920.

In an embodiment, images respectively obtained from the multiple cameras included in the electronic device 3000 have different features, and therefore, depending on which camera is used to obtain an image, results of the electronic device 3000 removing 3D distortion of the object in the image and extracting information from the distortion-removed image according to the above-described operations may also be different. In order to more accurately and efficiently recognize the object included in an image and extract information from an ROI of the object, the electronic device 3000 may determine which of the multiple cameras to activate.

In an embodiment, the electronic device 3000 may obtain the first image 1912 by activating the first camera 1910 and capturing an image of the object. The electronic device 3000 may identify a 3D shape type of the object in the image and an ROI of the object by using the first image 1912. In some embodiments, according to the above-described example, the first image 1912 may be an image obtained using the first camera 1910, which is a telephoto camera. In this case, because the first image 1912 includes only a portion of the object, the ROI of the object in the first image 1912 may be identified with sufficient confidence (e.g., a predetermined confidence value or higher), but a 3D shape type of the object in the first image 1912 may be identified with insufficient confidence. To identify the 3D shape type of the object, the electronic device 3000 may obtain the second image 1922 and/or the third image 1932 including the entire object by activating the second camera 1920 and/or the third camera 1930, and identify the 3D shape type of the object by using the second image 1922 and/or the third image 1932. In other words, the electronic device 3000 may selectively use an image suitable for identifying the ROI and the 3D shape type of the object.

In an embodiment, the electronic device 3000 may obtain the first image 1912 and the second image 1922 by activating the first camera 1910 and the second camera 1922 and capturing images of the object. The electronic device 3000 may identify the ROI of the object by using the first image 1912, which includes the portion of the object, and identify a 3D shape type of the object by using the second image 1922 and/or the third image 1932, which includes the entire object.

The operation in which the electronic device 3000 activating the camera according to an embodiment is not limited to the above-described example. The electronic device 3000 may utilize all possible combinations of cameras included in the multiple cameras. For example, the electronic device 3000 may activate only the second camera 1920 and the third camera 1930, or may activate all of the first camera 1910, the second camera 1920, and the third camera 1930.

In addition, operations, performed by the electronic device 3000, for obtaining key points of the object, identifying the ROI of the object, identifying the 3D shape type of the object, etc. have been described above with reference to the previous drawings, so repeated descriptions thereof are omitted for brevity.

Specific operations in which the electronic device 3000 processes images obtained using multiple cameras and removes distortions from the images are further described with reference to the drawings below.

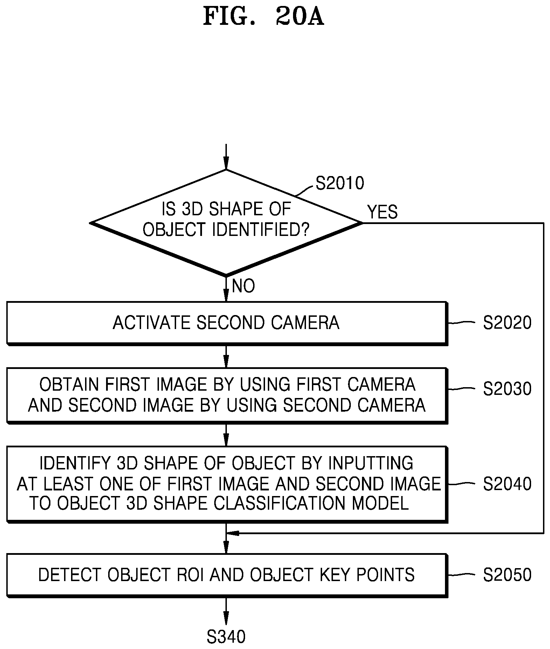

FIG. 20A is a flowchart illustrating an operation in which an electronic device uses multiple cameras, according to an embodiment of the present disclosure.

In operation S2010, the electronic device 3000 checks whether a 3D shape type of the object is identified from a first image of the object obtained using a first camera. For example, when the first image obtained using the first camera includes only a portion of the object, even if the electronic device 3000 inputs the first image to an object 3D shape classification model, the object 3D shape classification model cannot accurately infer the 3D shape type of the object. At this time, the object 3D shape classification model may output a result indicating that the 3D shape type of the object cannot be inferred, or output a low confidence value for inferring the 3D shape type. When a result having a confidence value less than or equal to a threshold is output from the object 3D shape classification model, the electronic device 3000 may determine that the 3D shape type of the object is not identified from the first image.

In an embodiment, when the 3D shape type of the object is not identified from the first image, the electronic device 3000 may perform operation S2020. Moreover, operation S2020 may be applied by the electronic device 3000 selectively or redundantly with the operation of determining a weight for a 3D shape type and identifying a 3D shape by applying the weight, as described above with reference to FIGS. 18C and 18D. When the 3D shape type of the object is identified, the electronic device 3000 may perform operation S2050 to continue a distortion removal operation.

In operation S2020, the electronic device 3000 activates a second camera. The second camera may be a camera having a wider angle of view than the first camera. The second camera may be, for example, a wide-angle camera, an ultra-wide-angle camera, etc., but is not limited thereto.

In operation S2030, the electronic device 3000 obtains a second image by using the second camera. Because the second camera has a wider angle of view than the first camera, the second image obtained using the second camera may include an entire 3D shape of the object, while the first image obtained using the first camera includes only a partial 3D shape of the object.

In operation S2040, the electronic device 3000 obtains data regarding the 3D shape type of the object by applying the second image to the object 3D shape classification model. The second image may include the entire 3D shape of the object. Because operation S2040 is the same as operation S1610 of FIG. 16, a detailed description thereof is omitted.

In operation S2050, the electronic device 3000 detects an object ROI and object key points by using at least one of the first image and the second image.

In an embodiment, the first image includes only the partial 3D shape of the object, but may include the entire ROI. The electronic device 3000 may detect an ROI in the first image by applying the first image to an ROI detection model.

In an embodiment, the second image includes the entire 3D shape of the object, and thus, may include the complete shape and the entire ROI of the object. The electronic device 3000 may detect ROI key points and/or object key points in the second image by applying the second image to the ROI detection model and/or the object detection model, respectively.

In an embodiment, the electronic device 3000 may apply each of the first image and the second image to the ROI detection model and/or the object detection model, and select or combine ROI identification results obtained from each image. After performing operation S2050, the electronic device 3000 may perform operation S340 of FIG. 3 or operation S1610 of FIG. 16.

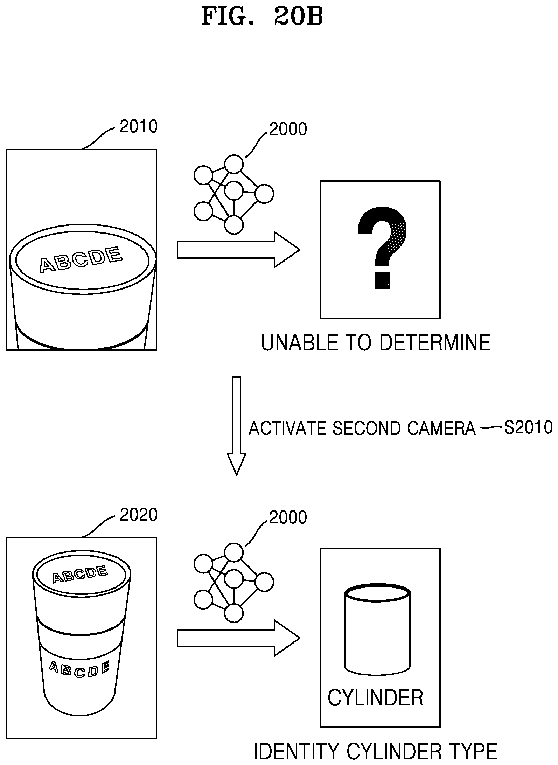

FIG. 20B is a diagram for supplementary illustration of FIG. 20A.

In an embodiment, a first image 2010 obtained by the electronic device 3000 using the first camera may include only a portion of an object. In this case, an object 3D shape classification model 2000 may not be able to identify a 3D shape type of the object from the first image 2010. In this case, the electronic device 3000 may perform operation S2020 to activate the second camera having a wider angle of view than the first camera, and obtain a second image 2020 by using the activated second camera. The electronic device 3000 may identify the 3D shape type of the object by inputting the second image 2020 to the object 3D shape classification model 2000.

Moreover, the operation in which the electronic device 3000 identifies the 3D shape type of the object by using the second image may be selectively or redundantly applied with the operation in which the electronic device 3000 determines a weight for a 3D shape type and identifies a 3D shape by applying the weight, as described above with reference to FIGS. 18C and 18D.

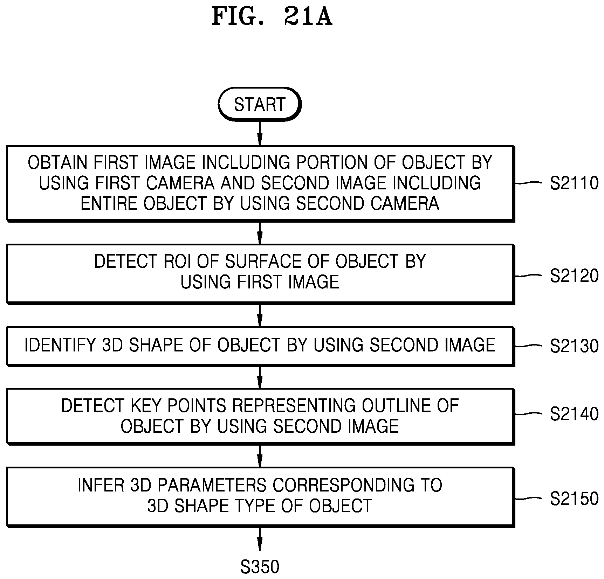

FIG. 21A is a flowchart illustrating an operation in which an electronic device uses multiple cameras, according to an embodiment of the present disclosure.

In operation S2110, the electronic device 3000 obtains a first image including a portion of an object (e.g., a label) by using the first camera, and a second image including the entire object by using the second camera. The second camera may be a camera with a wider angle of view than the first camera. For example, the first camera may be a telephoto camera, and the second camera may be a wide-angle camera, an ultra-wide-angle camera, or the like, but they are not limited thereto. In an embodiment, the user may capture an image of the object by activating a camera of the electronic device 3000. The user may activate the camera by touching a hardware button or icon for launching the camera, or activate the camera through a voice command.

When the user adjusts a position of the electronic device 3000 such that an ROI (e.g., a label) of the object appears overall in a preview area corresponding to the first camera in order to extract information from the ROI, the first image obtained by the electronic device 3000 by using the first camera may clearly show the ROI of the object but not the entire shape of the object. However, the second image obtained using the second camera having a wider angle of view than the first camera may show the entire shape of the object.

In operation S2120, the electronic device 3000 detects an ROI on a surface of the object by using the first image. The first image is a focused image of the ROI, so it may be suitable for accurately identifying the ROI. Because operation S2120 corresponds to operation S320 of FIG. 3, a repeated description thereof is omitted.

In operation S2130, the electronic device 3000 identifies a 3D shape of the object by using the second image. Because operation S2130 corresponds to operation S1610 of FIG. 16 and operation S2040 of FIG. 20A, a repeated description thereof is omitted.

In operation S2140, the electronic device 3000 detects object key points representing an outline of the object by using the second image. The second image is an image captured to include the entire shape of the object, so it may be suitable for accurately identifying the outline of the object. Because operation S2140 corresponds to operation S330 of FIG. 3, a repeated description thereof is omitted.

In operation S2150, the electronic device 3000 infers values of 3D parameters corresponding to the 3D shape type of the object. The inferred 3D parameters represent an original 3D shape of the object. Because operation S2150 corresponds to operation S340 of FIG. 3, a repeated description thereof is omitted.

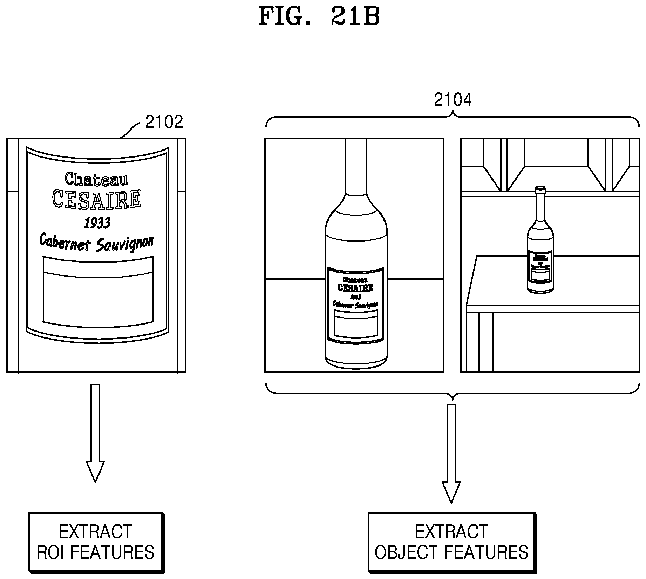

FIG. 21B is a diagram for supplementary illustration of FIG. 21A.

In an embodiment, a first image 2102 obtained by the electronic device 3000 using the first camera may be an image obtained using a telephoto camera. Because the first image 2102 does not include the entire 3D shape of the object but an enlarged view of an ROI, the first image 2102 may be an image suitable for identifying the ROI. In this case, the electronic device 3000 may extract features of the ROI by using the first image 2102. For example, the electronic device 3000 may detect ROI key points, an ROI heat map, etc. from the first image 2102, but is not limited thereto.

In an embodiment, a second image 2104 obtained by the electronic device 3000 using the second camera may be an image obtained using a wide-angle camera and/or an ultra-wide-angle camera. Because the second image 2104 includes the entire 3D shape of the object, the second image 2104 may be an image suitable for identifying a 3D shape of the object and features of the object. In this case, the electronic device 3000 may extract the features of the object by using the second image 2104. For example, the electronic device 3000 may detect a 3D shape type of the object, object key points, etc. from the second image 2104, but is not limited thereto.

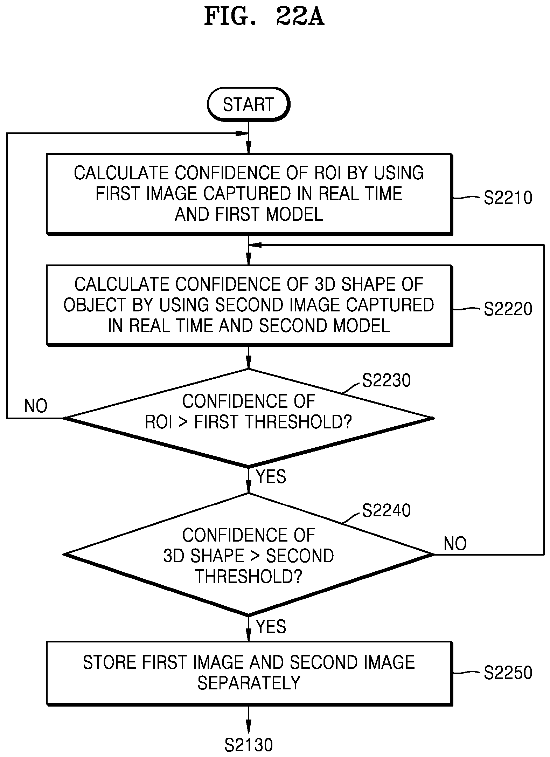

FIG. 22A is a flowchart illustrating an operation in which an electronic device uses multiple cameras, according to an embodiment of the present disclosure.

In operation S2210, according to an embodiment, the electronic device 3000 obtains confidence of an ROI by applying, to an object detection model, a first image captured in real time by using the first camera. The first camera may be a telephoto camera, and the first image may be a focused image of the ROI.

In an embodiment, when the user of the electronic device 3000 wishes to recognize the object (e.g., wishes to search for a label of a product, etc.), the user may activate a camera application. The user may continuously adjust a field of view of the camera so that the camera is pointed at the object while viewing a preview image, etc. displayed on the screen of the electronic device 3000. For first image frames obtained in real time via the first camera, the electronic device 3000 may input each of the first image frames to an ROI detection model. The electronic device 3000 may obtain confidence of an ROI, which indicates the accuracy of ROI detection for each of the first image frames.

In operation S2220, according to an embodiment, the electronic device 3000 obtains confidence of a 3D shape type of the object by applying, to an object 3D shape classification model, a second image captured in real time by using the second camera. The second camera may be a wide-angle camera or an ultra-wide-angle camera, and the second image may be an image of the object.

In an embodiment, for second image frames obtained in real time via the second camera, the electronic device 3000 may input each of the second image frames to the object 3D shape classification model. The electronic device 3000 may obtain confidence of a 3D shape type of the object, which indicates the accuracy of object 3D shape classification for each of the second image frames.

In operation S2230, according to an embodiment, the electronic device 3000 determines whether the confidence of the ROI exceeds a first threshold. The first threshold may be a threshold preset for the ROI. When the confidence of the ROI is less than or equal to the first threshold, the electronic device 3000 may continuously perform operation S2210 until confidence exceeding the first threshold is obtained.

In operation S2240, according to an embodiment, the electronic device 3000 determines whether the confidence of the 3D shape type of the object exceeds a second threshold. The second threshold may be a threshold preset for the 3D shape of the object. When the confidence of the 3D shape type of the object is less than or equal to the second threshold, the electronic device 3000 may continuously perform operation S2220 until confidence exceeding the second threshold is obtained.

In operation S2250, according to an embodiment, the electronic device 3000 captures each of the first image and the second image.

In an embodiment, a condition for performing operation S2250 is an AND condition in which the confidence of the ROI exceeds the first threshold and the confidence of the 3D shape type exceeds the second threshold. The electronic device 3000 may separately capture and store the first image and the second image, and perform operation S1520 and subsequent operations. In this case, the electronic device 3000 may identify an ROI on the surface of the object by applying the first image to the ROI detection model, and identify a 3D shape of the object by applying the second image to the object 3D shape classification model. Because the specific operations therefor have been described above, repeated descriptions thereof are omitted. After operation S2250 is performed, operation 2130 of FIG. 21A may be performed. In this case, operation S2140 of identifying the 3D shape of the object has already been performed and may be omitted.

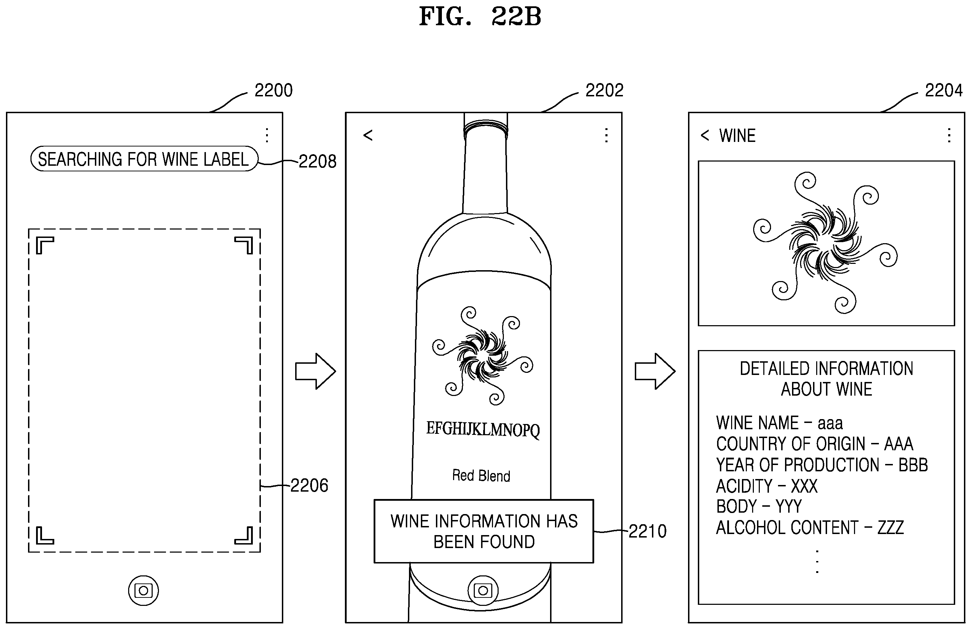

FIG. 22B is a diagram for supplementary illustration of FIG. 22A.

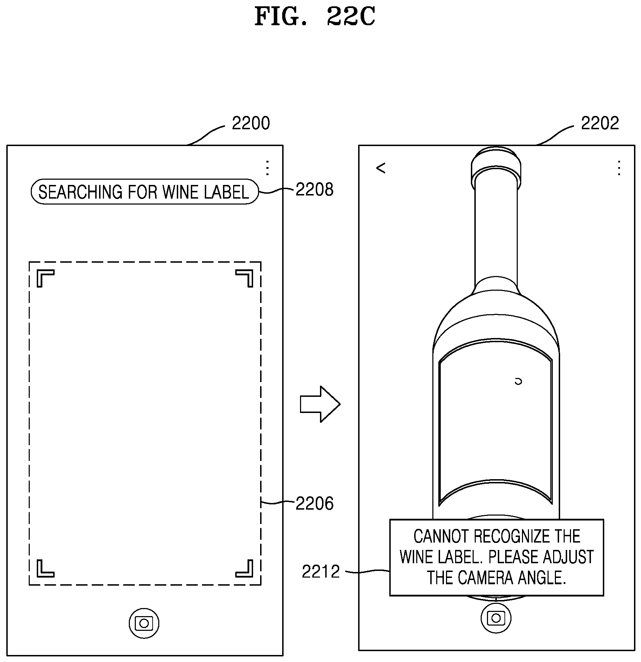

In describing FIGS. 22B and 22C, a case where a user wishes to recognize a label of wine is provided as an example.

Referring to FIG. 22B, according to an embodiment, the electronic device 3000 may display a first screen 2200 for recognizing an object. The first screen 2200 may include an interface that guides the user of the electronic device 3000 to perform object recognition. For example, the electronic device 3000 may display a quadrilateral box 2206 (however, its shape is not limited to a quadrilateral and may include other shapes that may serve a similar function, such as a circle) for guiding an ROI of the object to be included inside the first screen 2200, and display a guide 2208 such as 'Searching for a wine label'. In some embodiments, when the object is not recognized in an image displayed on the first screen 2200, the electronic device 3000 may output a guide such as 'Please point the camera at the product'.

In an embodiment, the electronic device 3000 may display a second screen 2202 representing a preview image obtained from a camera. While viewing the second screen 1420, the user may adjust a field of view of the camera so that the object is completely included in the image. The electronic device 3000 may calculate confidence of the ROI and confidence of a 3D shape type of the object while the second screen 2202, which is the preview image of the camera, is displayed. This has been described above, and thus, a repeated description thereof is omitted.

When the confidence of the ROI exceeds the first threshold and the confidence of the 3D shape type of the object exceeds the second threshold, the electronic device 3000 may infer values of 3D parameters representing the original 3D shape of the object. Then, the electronic device 3000 may perform a perspective transform based on the values of the 3D parameters related to the object, and remove 3D distortion, thereby obtaining a distortion-removed image in which the ROI is rectified to be flat. When the distortion-removed image is obtained and information related to the object is extracted from the distortion-removed image (i.e., when the product is recognized), the electronic device 3000 may output a notification 2210, such as 'Wine information has been found', on the preview image. Then, the electronic device 3000 may output information 2204 related to the object extracted from the distortion-removed image. For example, the electronic device 3000 may output a wine label image and detailed information about the wine.

FIG. 22C is a diagram for supplementary illustration of FIG. 22A.

Referring to FIG. 22C, according to an embodiment, the electronic device 3000 may display a first screen 2200 for recognizing an object. The first screen 2200 may include an interface that guides the user of the electronic device 3000 to perform object recognition. For example, the electronic device 3000 may display a quadrilateral box 2206 (however, its shape is not limited to a quadrilateral and may include other shapes that may serve a similar function, such as a circle) for guiding an ROI of the object to be included inside the first screen 2200, and display a guide 2208 such as 'Searching for a wine label'. In some embodiments, when the object is not recognized in an image displayed on the first screen 2200, the electronic device 3000 may output a guide such as 'Please point the camera at the product'.

In an embodiment, the electronic device 3000 may calculate confidence of the ROI and confidence of a 3D shape type of the object while a second screen 2202, which is a preview image of the camera, is displayed. The electronic device 3000 performs subsequent operations for removing distortion from the image only when the confidence of the ROI exceeds the first threshold and the confidence of the 3D shape type of the object exceeds the second threshold. Thus, when the confidence of the ROI is less than or equal to the first threshold and/or the confidence of the 3D shape type of the object is less than or equal to the second threshold, the electronic device 3000 may output a notification 2212 that guides the user to adjust a field of view of the camera to obtain the first image and the second image. For example, the electronic device 3000 may display a notification 2212 such as 'Cannot recognize the wine label. Please adjust the camera angle' on the screen, or output it as audio.

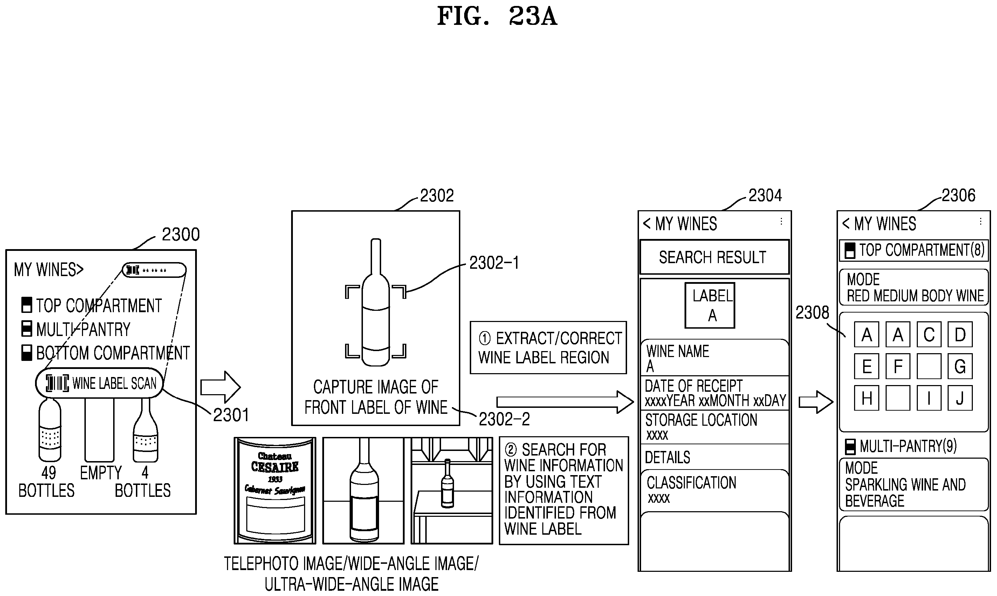

FIG. 23A is a diagram illustrating an operation in which an electronic device processes an image and provides extracted information, according to an embodiment of the present disclosure.

In an embodiment, the electronic device 3000 may generate a flat label image, which is a distortion-removed image, and extract information related to an object from the flat label image and provide the information to the user.

In an embodiment, the electronic device 3000 may display a first screen 2300 for starting object recognition. The first screen 2300 may include a user interface 2301, such as 'wine label scan'. The user of the electronic device 3000 may start an object recognition operation via the user interface 2301.

In an embodiment, the electronic device 3000 may display a second screen 2302 for performing object recognition. The second screen 2302 may include an interface that guides the user of the electronic device 3000 to perform object recognition. For example, the electronic device 3000 may display a guide area 2302-1 for guiding an ROI of the object to be included in the second screen 2302, and display a guide phrase 2302-2 such as 'Capture an image of a front label of the wine'. The electronic device 3000 may obtain a plurality of images (e.g., a telephoto image, a wide-angle image, an ultra-wide-angle image, etc.) via multiple cameras, and perform distortion removal operations based on 3D information described in the above-described embodiment. That is, the electronic device 3000 extracts a wine label region, which is the ROI within an image, and performs correction for removing distortion to generate a distortion-removed wine label image. In addition, the electronic device 3000 may extract information related to the wine by applying OCR to the distortion-removed wine label image. The electronic device 3000 may search for wine information by using text information identified on the wine label.

In an embodiment, when the electronic device 3000 may extract/correct the wine label region and searches for wine information by using text information identified on the wine label, the electronic device 3000 may display a third screen 2304 indicating object recognition and search results. The third screen 2304 may display a distortion-removed image generated by the electronic device 3000 according to the above-described embodiment. In the example of FIG. 23A, the distortion-removed image may be a wine label image. The wine label image may be a flat label image in which a curved wine label attached to a wine bottle has been converted to a flat shape.

The third screen 2304 may display information related to the object, which is obtained by the electronic device 3000 according to the above-described embodiment. In the example of FIG. 23A, the information related to the object may be detailed information about the wine. In this case, the wine name, country of origin, year of production, etc., which are the result of performing OCR on the wine label image, may be displayed.

In an embodiment, in addition to the information related to the object, which is obtained from the wine label image, the third screen 2304 may further display additional information related to the object, which is obtained from a server or from a database of the electronic device 3000. For example, the acidity, body, alcohol content, etc. of the wine, which cannot be obtained from the wine label image, may be displayed.

In an embodiment, the third screen 2304 may further display information obtained from another electronic device and/or information obtained based on a user input. For example, a nickname for the wine, date of receipt, a storage location, etc. may be displayed.

However, information that can be obtained from the wine label image and information obtained and displayed from a path other than the wine label image are described as examples, and are not limited to the above examples.

In an embodiment, the electronic device 3000 may display a fourth screen 2306 with a database of object recognition and search results. In this case, the electronic device 3000 may display flat label images, which are distortion-removed images, in a preview form 2308. When each of the flat label images is selected, wine information corresponding to the selected flat label image may be displayed again, as shown on the third screen 2304.

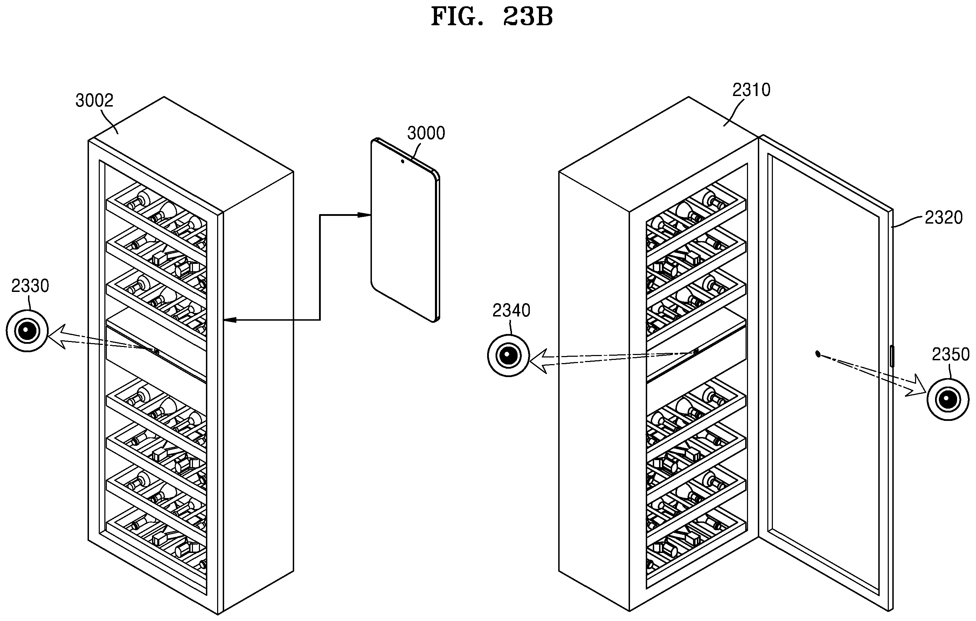

FIG. 23B is a diagram illustrating an operation of another form of electronic device, according to an embodiment of the present disclosure.

In the examples illustrated in the drawings described above, it is assumed that the electronic device 3000 according to the embodiment is a smartphone including a camera, but the above-described operations of the electronic device 3000 may also be performed by other electronic devices of various types and forms including cameras and/or displays. Examples of operations by other forms of electronic devices are described with reference to FIG. 23B.

In describing FIG. 23B, the electronic device 3000 and another type of electronic device 3002 are respectively referred to as a first electronic device 3000 and a second electronic device 3002. However, ordinal numbers such as first, second, etc. used as prefixes for electronic devices are only for distinguishing the respective independent electronic devices and are not intended to limit any order, etc. That is, the operations described with reference to the drawings described above may be independently performed by the first electronic device 3000 and may also be independently performed by the second electronic device 3002. In addition, the first electronic device 3000 and the second electronic device 3002 may be communicatively coupled to perform data communications, and perform the operations described with respect to the previous drawings in conjunction with each other.

Referring to FIG. 23B, the second electronic device 3002 may be a wine refrigerator (or a smart refrigerator). The second electronic device 3002 may include one or more cameras (a first camera 2330, a second camera 2340, and a third camera 2350). In addition, the second electronic device 3002 may include a body 2310 and a door 2320.

In an embodiment, the second electronic device 3002 may include the first camera 2330 positioned to face an exterior of the second electronic device 3002. For example, the first camera 2330 may be located at a center of a front (outside of the door) of the second electronic device 3002. However, the position where the first camera 2330 is located is not limited thereto. For example, the first camera 2330 may be disposed on a side, a top, etc. of the second electronic device 2000, and one or more first cameras 2330 may be disposed. A user of the second electronic device 3002 may capture an image of an object by using the first camera 2330. For example, before storing a product in the second electronic device 3002, the user may point an ROI (e.g., a wine label) of the object toward the first camera 2330 so that an image of the ROI of the object may be captured while the door 2320 of the second electronic device 3002 is closed. The second electronic device 3002 may obtain an object image by using the first camera 2330, perform 3D fitting based on an object shape and/or an ROI shape, and generate a distortion-removed image and object information for the ROI. In an embodiment, the second electronic device 3002 may recommend at least one of a storage location and a storage mode of the captured product to the user based on the extracted object (product) information. For example, the second electronic device 3002 may recommend that the captured product be stored in a multi-pantry among storage compartments of the second electronic device 3002. Alternatively, when the captured product is identified as wine, the second electronic device 3002 may recommend that the user execute a wine storage mode. Alternatively, the second electronic device 3002 may automatically execute the wine storage mode.

In an embodiment, the second electronic device 3002 may include a camera located to view an interior of a storage compartment of the second electronic device 3002. For example, a second camera 2340 may be located on the body 2310 of the second electronic device 3002. The second camera 2340 may capture images of the interior of the body 2310 of the second electronic device 3002 to capture images of objects (e.g., wine bottles) stored in storage compartments (e.g., a wine rack, a wine box, a multi-pantry, etc.) inside the body 2310 of the second electronic device 3002. The second electronic device 3002 may obtain an object image by using the second camera 2330, perform 3D fitting based on an object shape and/or an ROI shape, and generate a distortion-removed image and object information for the ROI. In an embodiment, the second electronic device 3002 may recommend an operation mode of the second electronic device 3002 to the user based on information about the stored object (product), or may automatically execute an optimal operation mode. For example, when the stored product is identified as wine, the second electronic device 3002 may recommend that the user execute the wine storage mode. Alternatively, the second electronic device 3002 may automatically execute the wine storage mode. In addition, the arrangement position of the second camera 2340 is not limited to the example illustrated in FIG. 23B, and may include other possible positions at which the second camera 2340 can view the inside of a storage compartment of the second electronic device 3002. In addition, there may be one or more second cameras 2340.

In an embodiment, the second electronic device 3002 may include a third camera 2350 facing the inside of the door 2320 of the second electronic device 3002. The user may capture an image of an object by using the third camera 2300 of the second electronic device 3002. For example, the user may open the door 2320 of the second electronic device 3002 and, before storing a product in the second electronic device 3002, may point an ROI of the object (e.g., a wine label) toward the third camera 2350 so that an image of the ROI of the object may be captured. The second electronic device 3002 may obtain an object image by using the third camera 2350, perform 3D fitting based on an object shape and/or an ROI shape, and generate a distortion-removed image and object information for the ROI. In an embodiment, the second electronic device 3002 may recommend at least one of a storage location and a storage mode of the captured product to the user based on the extracted object (product) information. For example, the second electronic device 3002 may recommend that the captured product be stored in the multi-pantry among the storage compartments of the second electronic device 3002. Alternatively, when the captured product is identified as wine, the second electronic device 3002 may recommend that the user execute the wine storage mode. Alternatively, the second electronic device 3002 may automatically execute the wine storage mode.

In an embodiment, the second electronic device 3002 may include a display. The second electronic device 3002 may display, on the display, a preview image of an object captured by the camera, or may display a distortion-removed image, object information, etc. on a screen of the display. In addition, the second electronic device 3002 may display an execution screen of an application capable of product management, operation mode control, etc. by using the display.

In an embodiment, when an image of an object is captured using the one or more cameras (the first camera 2330, the second camera 2340, and the third camera 2350)included in the second electronic device 3002, the second electronic device 3002 may register the object and provide the user with a notification indicating that the object has been registered. The notification may be output from the second electronic device 3002 in a visual and/or auditory form. Alternatively, the notification may be output in a visual and/or auditory form via the first electronic device 3000 linked with the second electronic device 30002.

In an embodiment, when the object is registered, a distortion-removed image and/or object information may be provided to the user via an application or the like installed on the second electronic device 3002 and/or the first electronic device 3000. The object information may include, but is not limited to, detailed information about the object, information related to the object, and information related to an electronic device that may be linked to the object. In a specific example, when the object is wine, detailed information about the wine, such as 'name, date of receipt, and storage location,' may be provided to the user. In addition, information related to the wine, such as 'how to drink wine, food that goes well with wine, and reviews of wine,' may be provided to the user. In addition, information related to an electronic device that may be linked to wine, such as 'operation mode of a wine refrigerator, inventory status in the wine refrigerator, status of refrigerator ingredients for cooking food to pair with wine, and operation mode of an oven for cooking', may be provided to the user.

In an embodiment, the second electronic device 3002 may use a server when processing images captured using the camera. The second electronic device 3002 may transmit an object image to the server and receive a distortion-removed image and object information from the server. The received distortion-removed image and object information may be provided to the user via an application or the like installed on the second electronic device 3002 and/or the first electronic device 3000.

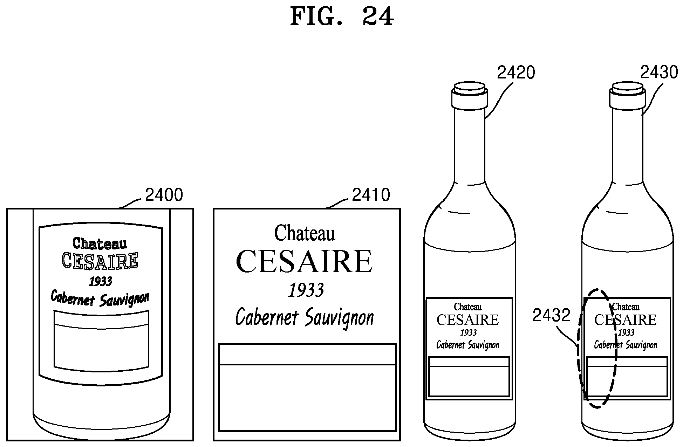

FIG. 24 is a diagram illustrating an operation in which an electronic device utilizes a distortion-removed image, according to an embodiment of the present disclosure.

The electronic device 3000 may obtain an object image 2400. The electronic device 3000 may obtain a distortion-removed image 2410 by extracting only an ROI within the object image and removing 3D distortion through the operations described with reference to the previous drawings.

In an embodiment, the electronic device 3000 may generate a first product image 2420 by synthesizing a distortion-removed image 2410 onto an object. The first product image 2420 may be obtained by synthesizing the distortion-removed image 2410 onto the object image. Referring to the first product image 2420, a wine bottle that is the object has a light reflection, but the distortion-removed image has no light reflection, causing the synthesized product image to appear unnatural. By applying a predetermined image processing algorithm to the first product image 2420, the electronic device 3000 may obtain a second product image 2430 that is a more natural synthetic image of the distortion-removed image and the product image. Referring to the second product image 2430, unlike the first product image 2420, the second product image 2430 includes a light reflection area 2432 generated through the image processing algorithm. The image processing algorithm may be, for example, an alpha blending algorithm, but is not limited thereto.

By generating the second product image 2430, the electronic device 3000 may generate a product image in a smooth and natural-looking manner, thereby providing a more realistic and visually appealing image to the user.

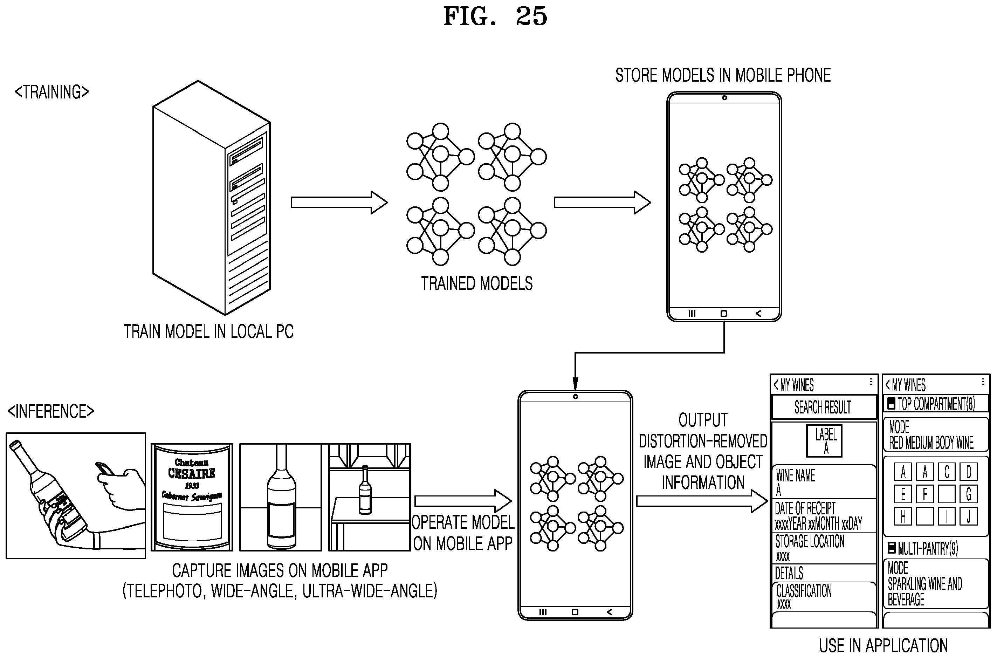

FIG. 25 is a diagram illustrating an example of a system related to operations performed by an electronic device for processing an image, according to an embodiment of the present disclosure.

In an embodiment, models used by the electronic device 3000 may have been trained in another electronic device (e.g., a local PC, etc.) suitable for performing neural network operations. For example, an object detection model, an ROI detection model, an object 3D shape classification model, a 3D fitting model, an information extraction model, etc. may have been trained in another electronic device and stored in a trained state.

In an embodiment, the electronic device 3000 may receive trained models stored in another electronic device. Based on the received models, the electronic device 3000 may perform the image processing operations described above. In this case, the electronic device 3000 may execute the trained models to perform an inference operation and generate a distortion-removed image for an ROI and information related to an object. The generated distortion-removed image and information related to the object may be provided to a user through an application, etc. FIG. 25 illustrates an example of the electronic device 3000 in which a model is stored and used on a mobile phone, but is not limited thereto. The electronic device 3000 may include any type of electronic device capable of executing an application and equipped with a display and a camera, such as a TV, a tablet PC, a smart refrigerator, etc.

Moreover, as described in the description with respect to the drawings above, the models used by the electronic device 3000 may be trained using computing resources of the electronic device 3000. The detailed description thereof is provided above, and thus, is not repeated.

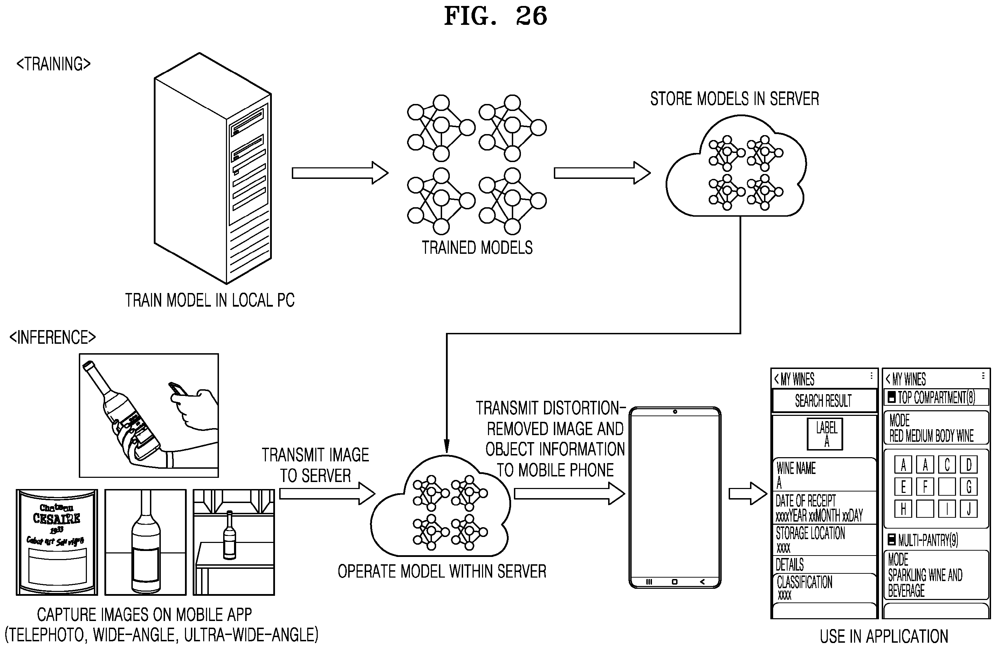

FIG. 26 is a diagram illustrating an example of a system related to operations performed by an electronic device for processing an image by using a server, according to an embodiment of the present disclosure.

In an embodiment, models used by the electronic device 3000 may have been trained in another electronic device (e.g., a local PC, etc.) suitable for performing neural network operations. For example, an object detection model, an ROI detection model, an object 3D shape classification model, a 3D fitting model, an information extraction model, etc. may have been trained in another electronic device and stored in a trained state. Furthermore, the models trained in the other electronic device (e.g., the local PC, etc.) may be transmitted to and stored in another electronic device (e.g., a server, etc.).

In an embodiment, the electronic device 3000 may perform image processing operations by using a server. The electronic device 3000 may capture object images (e.g., a telephoto image, a wide-angle image, an ultra-wide-angle image, etc.) by using a camera, and transmit the images to the server. In this case, the server may execute the trained models to perform an inference operation and generate a distortion-removed image and object information for an ROI. The electronic device 3000 may receive the distortion-removed image and the object information from the server. The received distortion-removed image and object information may be provided to the user through an application, etc. FIG. 26 illustrates an example of the electronic device 3000 in which a model is stored and used on a mobile phone, but is not limited thereto. The electronic device 3000 may include any type of electronic device capable of executing an application and equipped with a display and a camera, such as a TV, a tablet PC, a smart refrigerator, etc.

Moreover, as described in the description with respect to the drawings above, the models used by the electronic device 3000 may be trained using computing resources of the electronic device 3000. The detailed description thereof is provided above, and thus, is not repeated.

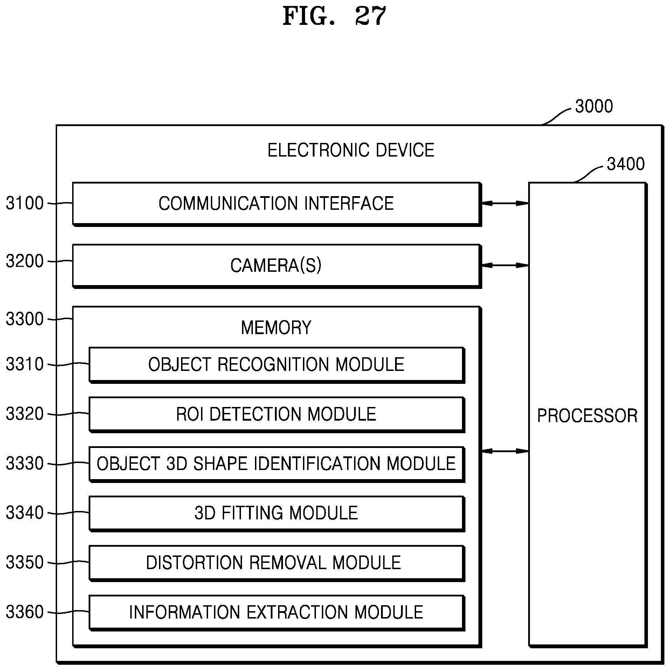

FIG. 27 is a block diagram of a configuration of an electronic device, according to an embodiment of the present disclosure.

According to an embodiment, the electronic device 3000 may include a communication interface 3100, camera(s) 3200, a memory 3300, and a processor 3400.

The communication interface 3100 may perform data communication with other electronic devices according to control by the processor 3400.

The communication interface 3100 may include a communication circuit. The communication interface 3100 may include a communication circuit capable of performing data communication between the electronic device 3000 and other devices by using at least one of data communication methods including, for example, wired local area network (LAN), wireless LAN, Wi-Fi, Bluetooth, ZigBee, Wi-Fi Direct (WFD), Infrared Data Association (IrDA), Bluetooth Low Energy (BLE), near field communication (NFC), wireless broadband Internet (WiBro), World Interoperability for Microwave Access (WiMAX), Shared Wireless Access Protocol (SWAP), Wireless Gigabit Alliance (WiGig), and radio frequency (RF) communication.

The communication interface 3100 may transmit and receive data for performing image processing operations of the electronic device 3000 to and from an external electronic device. For example, the communication interface 3100 may transmit and receive Al models used by the electronic device 3000 or training datasets for the Al models to and from a server, etc. Furthermore, the electronic device 3000 may obtain an image from which distortion is to be removed from a server or the like. In addition, the electronic device 3000 may transmit and receive data to and from a server, etc. to search for information related to an object.

The camera(s) 3200 may obtain video and/or images by capturing images of an object. The camera(s) 3200 may be one or more cameras. The camera(s) 3200 may include, for example, an red, green, and blue (RGB) camera, a telephoto camera, a wide-angle camera, an ultra-wide-angle camera, etc., but are not limited thereto. The camera(s) 3200 may obtain video including a plurality of frames. Specific types and detailed functions of the camera(s) 3200 may be clearly inferred by one of ordinary skill in the art, and thus, descriptions thereof are omitted.

The memory 3300 may store instructions, data structures, and program code readable by the processor 3400. The memory 3300 may be configured as one or more memories. In the disclosed embodiment, operations performed by the processor 3400 may be implemented by executing instructions or code of a program stored in the memory 3300.

The memory 3300 may include non-volatile memory, including at least one of a flash memory-type memory, a hard disk-type memory, a multimedia card micro-type memory, a card-type memory (e.g., a Secure Digital (SD) or eXtreme Digital (XD) memory, etc.), read-only memory (ROM), electrically erasable programmable ROM (EEPROM), PROM, magnetic memory, magnetic disk, and optical disk, and volatile memory such as random access memory (RAM) or static RAM (SRAM).

According to an embodiment, the memory 3300 may store one or more instructions and/or programs that cause the electronic device 3000 to operate to remove distortion in an image. For example, the memory 3300 may store an object detection module 3310, an ROI detection module 3320, an object 3D shape identification module 3330, a 3D fitting module 3340, a distortion removal module 3350, and an information extraction module 3360.

The processor 3400 may control all operations of the electronic device 3000. For example, the processor 3400 may execute one or more instructions of a program stored in the memory 2300 to control all operations of the electronic device 3000 to remove distortion from an image. The processor 3400 may be one or more processors.

The one or more processors 3400 according to the present disclosure may include at least one of a central processing unit (CPU), a graphics processing unit (GPU), an accelerated processing unit (APU), a many integrated core (MIC), a digital signal processor (DSP), and a neural processing unit (NPU). The one or more processors 3400 may be implemented in the form of an integrated system on a chip (SoC) including one or more electronic components. The one or more processors may be each implemented as separate hardware (H/W).

The processor 3400 may execute the object detection module 3310 to detect an object in an image and obtain object key points representing an outline of the object. The object detection module 3310 may include an object detection model that is an Al model. Because the operations of the electronic device 3000 related to the object detection module 3310 have been described in detail with reference to the previous drawings, repeated descriptions thereof are omitted.

The processor 3400 may execute the ROI detection module 3320 to detect an ROI of an object. For example, the processor 3400 may detect an ROI heat map and ROI key points by using the ROI detection module 3320. The ROI detection module 3320 may include an ROI detection model that is an Al model. Because the operations of the electronic device 3000 related to the ROI detection module 3320 have been described in detail with reference to the previous drawings, repeated descriptions thereof are omitted.

The processor 3400 may execute the object 3D shape identification module 3330 to classify a 3D shape type of an object. The object 3D shape identification module 3330 may include an object 3D classification model that is an Al model. Because the operations of the electronic device 3000 related to the object 3D shape identification module 3330 have been described in detail with reference to the previous drawings, repeated descriptions thereof are omitted.

The processor 3400 may execute the 3D fitting module 3340 to infer 3D information of an object. By using a 3D fitting model, the processor 3400 may obtain 3D parameters representing an original 3D shape of the object. Because the operations of the electronic device 3000 related to the 3D fitting module 3340 have been described in detail with reference to the previous drawings, repeated descriptions thereof are omitted.

The processor 3400 may execute the distortion removal module 3350 to remove 3D distortion in an image. The processor 3400 may dewarp an ROI based on 3D information of an object by using a perspective transform algorithm. Because the operations of the electronic device 3000 related to the distortion removal module 3350 have been described in detail with reference to the previous drawings, repeated descriptions thereof are omitted.

The processor 3400 may execute the information extraction module 3360 to extract information from a distortion-removed image. The information extraction module 3360 may include an information extraction model that is an Al model. The processor 3400 extracts information in an ROI by using the information extraction module 3360, and identify, for example, a logo, an icon, text, etc. in the ROI. Because the operations of the electronic device 3000 related to the information extraction module 3350 have been described in detail with reference to the previous drawings, repeated descriptions thereof are omitted.

Moreover, the modules stored in the memory 3300 are for convenience of description and are not necessarily limited thereto. Other modules may be added to implement the above-described embodiments, and some of the above-described modules may be implemented as a single module.

When a method according to an embodiment of the present disclosure includes a plurality of operations, the plurality of operations may be performed by one processor or a plurality of processors. For example, when a first operation, a second operation, and a third operation are performed using a method according to an embodiment, the first operation, the second operation, and the third operation may all be performed by a first processor, and the first operation and the second operation may be performed by the first processor (e.g., a general-purpose processor) while the third operation may be performed by a second processor (e.g., a dedicated Al processor). Here, the dedicated Al processor, which is an example of the second processor, may perform computations for training/inference of Al models. However, an embodiment of the present disclosure is not limited thereto.

The one or more processors according to the present disclosure may be implemented as a single-core processor or as a multi-core processor.

When a method according to an embodiment of the present disclosure includes a plurality of operations, the plurality of operations may be performed by one core or a plurality of cores included in the one or more processors.

Although not shown in FIG. 27, the electronic device 3000 may further include a user interface. The user interface may include an input interface for receiving a user's input and an output interface for outputting information.

The output interface is for outputting video signals or audio signals. The output interface may include a display, an audio output unit, a vibration motor, etc. When the display and a touch pad form a layer structure to construct a touch screen, the display may serve as the input interface as well as the output interface. The display may include at least one of a liquid crystal display (LCD), a thin-film-transistor LCD (TFT LCD), an organic light-emitting diode (OLED) display, a flexible display, a 3D display, and an electrophoretic display. Also, the electronic device 3000 may include two or more displays according to its implemented configuration.

The audio output unit may output an audio signal received from the communication interface 3100 or stored in the memory 3300. The audio output unit may also output sound signals related to functions performed by the electronic device 3000. The audio output unit may include a speaker, a buzzer, and the like.

The input interface is for receiving an input from the user. The input interface may include, but is not limited to, at least one of a keypad, a dome switch, a touch pad (a capacitive overlay type, a resistive overlay type, an infrared beam type, a surface acoustic wave type, an integral strain gauge type, a piezoelectric type, etc.), a jog wheel, and a jog switch.

The input interface may include a speech recognition module. For example, the electronic device 3000 may receive a speech signal, which is an analog signal, via a microphone, and convert a speech portion into computer-readable text by using an automatic speech recognition (ASR) model. The electronic device 3000 may obtain an intent in a user's utterance by interpreting the text using a natural language understanding (NLU) model. Here, the ASR model or NLU model may be an Al model. Language understanding is technology of recognizing and applying/processing human language/characters, and includes natural language processing, machine translation, dialog system, question answering, speech recognition/synthesis, etc.

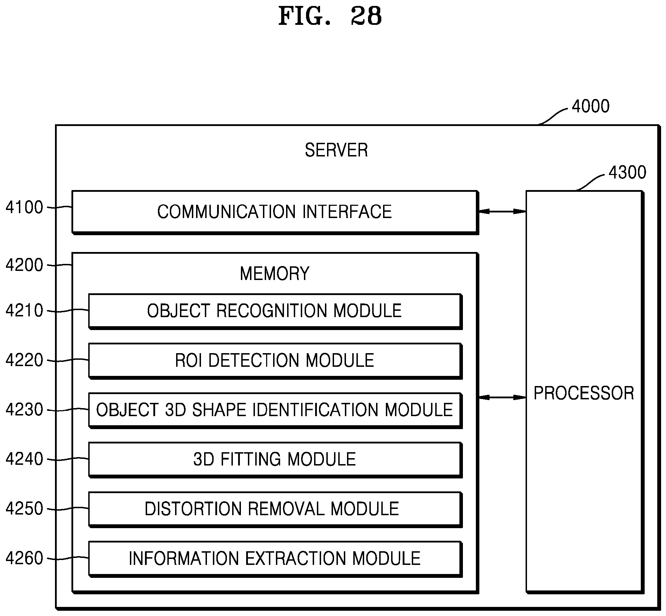

FIG. 28 is a block diagram of a configuration of a server, according to an embodiment of the present disclosure.

In an embodiment, the above-described operations of the electronic device 3000 may be performed by a server 4000.

According to an embodiment, the server 4000 may include a communication interface 4100, a memory 4200, and a processor 4300. Because the communication interface 4100, the memory 4200, and the processor 4300 of the server 4000 respectively correspond to the communication interface 3100, the memory 3300, and the processor 3400 of the electronic device 3000 of FIG. 27, repeated descriptions thereof are omitted.

According to an embodiment, the server 4000 may be a device with higher computing performance than the electronic device 3000 so that it can perform operations requiring a larger amount of computation than the electronic device 3000. The server 4000 may perform training of an Al model, which requires a relatively large amount of computation compared to inference. The server 4000 may perform inference by using an Al model and transmit a result of the inference to the electronic device 3000.

The present disclosure presents an image processing method of removing image distortion by using 3D information, wherein 3D information of an object is inferred by using an algorithm and distortion is removed from an image, without using hardware such as a sensor for obtaining 3D information.

The technical solutions to be achieved in the present disclosure are not limited to those described above, and other technical solutions not described will be clearly understood by one of ordinary skill in the art from the following description.

According to an aspect of the present disclosure, a method, performed by an electronic device, of processing an image may be provided. The method may include obtaining an image of an object by using a camera. The method may include detecting an ROI on a surface of the object. The method may include detecting object key points representing an outline of the object. The method may include inferring, based on the object key points, values of 3D parameters representing a 3D shape of the object, wherein the 3D parameters include features representing 3D geometric information of the object. The method may include obtaining a distortion-removed image in which the ROI is rectified to a plane by performing a perspective transform on the image based on the 3D parameters. The method may include extracting information in the ROI from the distortion-removed image.

The features of the 3D parameters may correspond to at least one of 3D rotation, 3D translation, a dimension, and 3D scaling of the object, and a camera parameter.

The inferring of the values of the 3D parameters representing the 3D shape of the object may include obtaining initial 3D parameters having preset values.

The inferring of the values of the 3D parameters representing the 3D shape of the object may include rendering a 3D shape of a virtual object based on the initial 3D parameters.

The inferring of the values of the 3D parameters representing the 3D shape of the object may include generating initial key points representing an outline of the virtual object.

The inferring of the values of the 3D parameters representing the 3D shape of the object may include obtaining values of the 3D parameters representing an original 3D shape of the object by adjusting the values of the initial 3D parameters such that the initial key points match the object key points.

The method may include identifying a shape of the ROI.

The method may include identifying whether the shape of the ROI is included in a structured design.

The detecting of the object key points may include detecting the object key points based on the shape of the ROI being an unstructured design.

The method may include, based on the shape of the ROI being included in the structured design, obtaining ROI key points representing an outline of the ROI.

The inferring of the values of the 3D parameters representing the 3D shape of the object may include inferring the values of the 3D parameters based on the ROI key points.

The detecting of the ROI on the surface of the object may include using a label detection model.

The label detection model may be an Al model trained to, when taking the image as input, output data representing the label of the object.

The detecting of the object key points may include using an object detection model.

The object detection model may be an Al model trained to, when taking the image as input, output key points representing the outline of the object.

The method may include identifying a 3D shape type of the object.

The inferring of the values of the 3D parameters representing the 3D shape of the object may include inferring the values of the 3D parameters based on the 3D shape type of the object.

The inferring of the values of the 3D parameters representing the 3D shape of the object may include selecting 3D parameters that include features corresponding to the identified 3D shape type from among a plurality of 3D shape types.

The initial 3D parameters having the preset values may be obtained by obtaining preset values of the features corresponding to the identified 3D shape type.

The extracting of the information in the ROI may include applying OCR to the distortion-removed image.

According to an aspect of the present disclosure, an electronic device for processing an image may be provided. The electronic device may include one or more cameras, a memory storing one or more instructions, and at least one processor configured to execute the one or more instructions stored in the memory. The at least one processor may be configured to execute the one or more instructions to obtain an image of an object by using the one or more cameras. The at least one processor may be configured to execute the one or more instructions to detect an ROI on a surface of the object. The at least one processor may be configured to execute the one or more instructions to detect object key points representing an outline of the object. The at least one processor may be configured to execute the one or more instructions to infer, based on the object key points, values of 3D parameters representing a 3D shape of the object, wherein the 3D parameters include features representing 3D geometric information of the object. The at least one processor may be configured to execute the one or more instructions to obtain a distortion-removed image in which the ROI is rectified to a plane by performing a perspective transform on the image based on the 3D parameters. The at least one processor may be configured to execute the one or more instructions to extract information in the ROI from the distortion-removed image.

Features of the 3D parameters may correspond to at least one of 3D rotation, 3D translation, a dimension, and 3D scaling of the object, and a camera parameter.

The at least one processor may be configured to execute the one or more instructions to obtain initial 3D parameters having preset values.

The at least one processor may be configured to execute the one or more instructions to render a 3D shape of a virtual object based on the initial 3D parameters.

The at least one processor may be configured to execute the one or more instructions to generate initial key points representing an outline of the virtual object.

The at least one processor may be configured to execute the one or more instructions to obtain values of the 3D parameters representing an original 3D shape of the object by adjusting the values of the initial 3D parameters such that the initial key points match the object key points.

The at least one processor may be configured to execute the one or more instructions to identify a shape of the ROI.

The at least one processor may be configured to execute the one or more instructions to identify whether the shape of the ROI is included in a structured design.

The at least one processor may be configured to execute the one or more instructions to detect the object key points based on the shape of the ROI being an unstructured design.

The at least one processor may be configured to execute the one or more instructions to, based on the shape of the ROI being included in the structured design, obtain ROI key points representing an outline of the ROI.

The at least one processor may be configured to execute the one or more instructions to infer the values of the 3D parameters based on the ROI key points.

The detecting of the ROI on the surface of the object may be performed using a label detection model.

The label detection model may be an Al model trained to, when taking the image as input, output data representing the label of the object.

The detecting of the object key points may be performed using an object detection model.

The object detection model may be an Al model trained to, when taking the image as input, output key points representing the outline of the object.

The at least one processor may be configured to execute the one or more instructions to identify a 3D shape type of the object.

The at least one processor may be configured to execute the one or more instructions to infer the values of the 3D parameters based on the 3D shape type of the object.

The at least one processor may be configured to execute the one or more instructions to select 3D parameters that include features corresponding to the identified 3D shape type from among a plurality of 3D shape types.

The initial 3D parameters having the preset values may be obtained by obtaining preset values of the features corresponding to the identified 3D shape type.

Moreover, embodiments of the present disclosure may be implemented in the form of recording media including instructions executable by a computer, such as a program module executed by the computer. The computer-readable recording media may be any available media that are accessible by a computer, and include both volatile and nonvolatile media and both removable and non-removable media. Furthermore, the computer-readable recording media may include computer storage media and communication media. The computer storage media include both volatile and nonvolatile and both removable and non-removable media implemented using any method or technology for storage of information such as computer-readable instructions, data structures, program modules, or other data. The communication media typically embody computer-readable instructions, data structures, or other data in a modulated data signal such as program modules.

Furthermore, a computer-readable storage medium may be provided in the form of a non-transitory storage medium. In this regard, the term 'non-transitory storage medium' only means that the storage medium does not include a signal (e.g., an electromagnetic wave) and is a tangible device, and the term does not differentiate between where data is semi-permanently stored in the storage medium and where the data is temporarily stored in the storage medium. For example, the 'non-transitory storage medium' may include a buffer for temporarily storing data.

According to an embodiment, methods according to various embodiments disclosed herein may be included in a computer program product when provided. The computer program product may be traded, as a product, between a seller and a buyer. The computer program product may be distributed in the form of a machine-readable storage medium (e.g., compact disc ROM (CD-ROM)) or distributed (e.g., downloaded or uploaded) on-line via an application store or directly between two user devices (e.g., smartphones). For online distribution, at least a part of the computer program product (e.g., a downloadable app) may be at least transiently stored or temporally generated in a machine-readable storage medium such as a memory of a server of a manufacturer, a server of an application store, or a relay server.

The above description of the present disclosure is provided for illustration, and it will be understood by one of ordinary skill in the art that changes in form and details may be readily made therein without departing from technical idea or essential features of the present disclosure. Accordingly, the above-described embodiments and all aspects thereof are merely examples and are not limiting. For example, each component defined as an integrated component may be implemented in a distributed fashion, and likewise, components defined as separate components may be implemented in an integrated form.

The scope of the present disclosure is defined not by the detailed description thereof but by the following claims, and all the changes or modifications within the meaning and scope of the appended claims and their equivalents will be construed as being included in the scope of the present disclosure.

## Claims

1. A method, performed by an electronic device (3000), of processing an image, the method comprising:
obtaining an image of an object by using a camera (S310);
detecting a region of interest (ROI) on a surface of the object (S320);
detecting object key points representing an outline of the object (S330);
inferring, based on the object key points, values of three-dimensional (3D) parameters representing a 3D shape of the object, wherein the 3D parameters include features representing 3D geometric information of the object (S340);
obtaining a distortion-removed image in which the ROI is rectified to a plane by performing a perspective transform on the image based on the 3D parameters (S350); and
extracting information in the ROI from the distortion-removed image (S360).

2. The method of claim 1, wherein the features of the 3D parameters correspond to at least one of 3D rotation, 3D translation, a dimension, and 3D scaling of the object, and a camera parameter.

3. The method of claim 1, wherein
the inferring of the values of the 3D parameters representing the 3D shape of the object comprises:
obtaining initial 3D parameters having preset values;
rendering a 3D shape of a virtual object based on the initial 3D parameters;
generating initial key points representing an outline of the virtual object; and
obtaining values of the 3D parameters representing an original 3D shape of the object by adjusting the values of the initial 3D parameters such that the initial key
points match the object key points.

4. The method of claim 1, wherein
the method further comprises:
identifying a shape of the ROI; and
identifying whether the shape of the ROI is included in a structured design, and the detecting of the object key points comprises
detecting the object key points based on the shape of the ROI being an unstructured design.

5. The method of claim 4, wherein
the method further comprises,
based on the shape of the ROI being included in the structured design, obtaining ROI key points representing an outline of the ROI, and
the inferring of the values of the 3D parameters representing the 3D shape of the object comprises
inferring the values of the 3D parameters based on the ROI key points.

6. The method of claim 1, wherein
the method further comprises
identifying a 3D shape type of the object, and
the inferring of the values of the 3D parameters representing the 3D shape of the object comprises inferring the values of the 3D parameters based on the 3D shape type of the object.

7. The method of claim 6, wherein
the inferring of the values of the 3D parameters representing the 3D shape of the object comprises
selecting 3D parameters that include features corresponding to the identified 3D shape type from among a plurality of 3D shape types, and
the 3D parameters are obtained by obtaining preset values of the features corresponding to the identified 3D shape type.

8. An electronic device (3000) for processing an image, the electronic device comprising:
one or more cameras (3200);
a memory (3300) storing one or more instructions; and
at least one processor (3400) configured to execute the one or more instructions stored in the memory (3300),
wherein the at least one processor (3400) is configured to execute the one or more instructions to
obtain an image of an object by using the one or more cameras,
detect a region of interest (ROI) on a surface of the object,
detect object key points representing an outline of the object, infer, based on the object key points, values of three-dimensional (3D) parameters representing a 3D shape of the object, wherein the 3D parameters include features representing 3D geometric information of the object,
obtain a distortion-removed image in which the ROI is rectified to a plane by performing a perspective transform on the image based on the 3D parameters, and
extract information in the ROI from the distortion-removed image.

9. The electronic device of claim 8, wherein the features of the 3D parameters correspond to at least one of 3D rotation, 3D translation, a dimension, and 3D scaling of the object, and a camera parameter.

10. The electronic device of claim 8, wherein
the at least one processor is further configured to execute the one or more instructions to
obtain initial 3D parameters having preset values,
render a 3D shape of a virtual object based on the initial 3D parameters, generate initial key points representing an outline of the virtual object, and obtain values of the 3D parameters representing an original 3D shape of the object by adjusting the values of the initial 3D parameters such that the initial key points match the object key points.

11. The electronic device of claim 8, wherein
the at least one processor is further configured to execute the one or more instructions to
identify a shape of the ROI,
identify whether the shape of the ROI is included in a structured design, and detect the object key points based on the shape of the ROI being an unstructured design.

12. The electronic device of claim 11, wherein
the at least one processor is further configured to execute the one or more instructions to,
based on the shape of the ROI being included in the structured design, obtain ROI key points representing an outline of the ROI, and
infer the values of the 3D parameters based on the ROI key points.

13. The electronic device of claim 8, wherein
the at least one processor is further configured to execute the one or more instructions to
identify a 3D shape type of the object, and
infer the values of the 3D parameters based on the 3D shape type of the object.

14. The electronic device of claim 13, wherein
the at least one processor is further configured to execute the one or more instructions to
select 3D parameters that include features corresponding to the identified 3D shape type from among a plurality of 3D shape types, and
the 3D parameters are obtained by obtaining preset values of the features corresponding to the identified 3D shape type.

15. A computer-readable recording medium having recorded thereon a program for executing the method of any one of claims 1 to 7 on a computer.
